# EUROPEAN PATENT APPLICATION

(11) **EP 4 796 461 A1**
(43) Date of publication of application: **26.08.2026**
(21) Application number: 24879006.5
(22) Date of filing: 15.10.2024
(51) Int. Cl.: B65G 1/04, B65G 1/137

(54) **PICK-AND-PLACE MECHANISM AND TRANSFER ROBOT**

(30) Priority: 17.10.2023 CN 202322787876 U; 17.10.2023 CN 202421766706 U; 17.10.2023 CN 202311348071; 05.08.2024 CN 202421882372 U; 05.08.2024 CN 202421880511 U
(71) Applicant: Beijing Geekplus Technology Co. Ltd, Beijing 100102 (CN)
(72) Inventor: LI, Xiaowei, Beijing 100102 (CN); NIU, Xingyu, Beijing 100102 (CN); YUAN, Li, Beijing 100102 (CN)
(74) Representative: Manna, Sara
(86) International application number: PCT/CN2024/125052
(87) International publication number: WO 2025/082363

(57) **Abstract**

Embodiments of the present disclosure provide a pick-and-place mechanism and a transfer robot. The pick-and-place mechanism comprises: a base; an extendable/retractable structure arranged on the base, a free end of the extendable/retractable structure can selectively extend out of or retract back to the base; an item pick-up assembly arranged at the free end, wherein the item pick-up assembly can be driven by the free end to move relative to the base, and the item pick-up assembly is configured to act on the front end face of a target item when picking up and returning the target item, so as to transfer the target item, wherein the front end face of the target item is the end face of the target item facing the item pick-up assembly when the target item is to be picked up or returned; a driving structure connected to the extendable/retractable structure, the driving structure driving the free end to extend out of or retract back to the base so as to drive the item pick-up assembly to reciprocate between a target goods allocation and the base; and an air source device, wherein the item pick-up assembly comprises a suction cup, the air source device is communicated with the suction cup, and the air source device is configured to reduce the pressure of an inner cavity of the suction cup, so that the target item is attached to the suction cup, or the air source device is configured to increase the pressure of the inner cavity of the suction cup, so that the target item is detached from the suction cup.

## Description

The present disclosure claims the priority of Chinese application No. 202322787876.2, filed with China National Intellectual Property Administration on October 17, 2023; the priority of Chinese application No. 202421766706.4, filed with China National Intellectual Property Administration on October 17, 2023; the priority of Chinese application No. 202421882372.7, filed with China National Intellectual Property Administration on August 5, 2024; the priority of Chinese application No. 202421880511.2, filed with China National Intellectual Property Administration on August 5, 2024; and the priority of Chinese application No. 202311348071.6, filed with China National Intellectual Property Administration on October 17, 2023.

### FIELD

The present disclosure belongs to the technical field of warehousing and logistics devices, and more particularly to a pick-and-place mechanism and a transfer robot.

### BACKGROUND

A transfer robot is an important device in warehousing. It may automatically place a target object (such as a goods container) on a target carrier (such as a goods shelf) to complete a loading process (such as a container return process). It may also remove the target object from the target carrier and then transfer the target object to a specified position.

A container-picking structure of the current transfer robot includes a telescopic fork and a finger rotatably arranged at a front end of the telescopic fork. When picking up or returning a goods container, the telescopic fork is driven by a first driving member to extend to a side of the goods container, and the finger moves behind the goods container to clamp and take the goods container out of the goods shelf, or put the goods container into the goods shelf from between tines of the telescopic fork.

### SUMMARY

According to embodiments of a first aspect of the present disclosure, there is provided a pick-and-place mechanism, which includes: a base having an access opening for a target object to enter and exit; an extension and retraction structure arranged on the base, where a free end of the extension and retraction structure is configured to selectively extend from or retract into the base through the access opening; a pick-up assembly arranged at the free end, where the pick-up assembly is configured to move relative to the base under the drive of the free end, and the pick-up assembly is configured to act on a front end surface of the target object when picking up or returning the target object, so as to transfer the target object, where the front end surface of the target object is an end surface of the target object facing the pick-up assembly in a case that the target object is to be picked up or returned; a driving structure connected to the extension and retraction structure, and configured to drive the free end to extend from or retract into the base, so as to drive the pick-up assembly to reciprocate between a target goods location and the base; and a follower tray, where in a case that the pick-up assembly picks up or returns the target object, at least part of the follower tray is located in a movement path of the target object, and the follower tray is configured to extend from the base to support the target object in a case that the pick-up assembly carries the target object.

According to embodiments of a second aspect of the present disclosure, there is provided an object transferring method, which includes: determining a working distance between a pick-up assembly and a target goods location in a case that a pick-and-place mechanism reaches a specified position; driving, by a driving structure, the pick-up assembly to move toward the target goods location; obtaining a moving distance of the pick-up assembly toward the target goods location, and determining that the pick-up assembly reaches the target goods location in a case that the moving distance is equal to the working distance; and transferring a target object between the pick-up assembly and the target goods location.

According to embodiments of a third aspect of the present disclosure, there is provided a transfer robot, which includes: a chassis; a mast arranged on the chassis; and the pick-and-place mechanism according to any one of the embodiments of the first aspects of the present disclosure, arranged on a mast, and configured to be lifted and lowered along the mast.

### BRIEF DESCRIPTION OF THE DRAWINGS

The drawings described herein are used to provide a further understanding of the present disclosure and constitute a part of the present disclosure. The illustrative embodiments of the present disclosure and their descriptions are used to explain the present disclosure and do not constitute an improper limitation on the present disclosure. In the drawings:
FIG. 1 is an overall schematic view of a pick-and-place mechanism according to an embodiment of the present disclosure;
FIG. 2 is another overall schematic view of a pick-and-place mechanism according to an embodiment of the present disclosure;
FIG. 3 is a schematic view showing a state in which a pick-and-place mechanism according to an embodiment of the present disclosure is fitted with a target carrier;
FIG. 4 is a schematic view showing fit between an extension and retraction structure and a follower tray in a pick-and-place mechanism according to an embodiment of the present disclosure;
FIG. 5 is a schematic view showing fit between a follower tray, a second slider and a second guide rail in a pick-and-place mechanism according to an embodiment of the present disclosure;
FIG. 6 is another overall schematic view of a pick-and-place mechanism according to an embodiment of the present disclosure;
FIG. 7 is another schematic view showing fit between a base and a follower tray in a pick-and-place mechanism according to an embodiment of the present disclosure;
FIG. 8 is a schematic view showing fit between a first follower tray, a second follower tray and a connecting member in a pick-and-place mechanism according to an embodiment of the present disclosure;
FIG. 9 is a partial enlarged view of part A in FIG. 8;
FIG. 10 is a partial sectional view of part A in FIG. 8;
FIG. 11 is a schematic view showing fit between a first follower tray, a second follower tray, a first sliding assembly and a second sliding assembly according to an embodiment of the present disclosure;
FIG. 12 is a schematic view of any one of a first sliding assembly and a second sliding assembly in a pick-and-place mechanism according to an embodiment of the present disclosure;
FIG. 13 is a partial enlarged view of part B in FIG. 12;
FIG. 14 is a schematic view of a base in a pick-and-place mechanism according to an embodiment of the present disclosure;
FIG. 15 is a schematic view showing fit between a driving structure and an extension and retraction structure in a pick-and-place mechanism according to an embodiment of the present disclosure;
FIG. 16 is a top view showing fit between a first driving member, an extension and retraction structure and a first guide rail in a pick-and-place mechanism according to an embodiment of the present disclosure;
FIG. 17 is a side view showing fit between a first driving member, an extension and retraction structure and a first guide rail in a pick-and-place mechanism according to an embodiment of the present disclosure;
FIG. 18 is an overall schematic view showing fit between a first driving member, an extension and retraction structure and a first guide rail in a pick-and-place mechanism according to an embodiment of the present disclosure;
FIG. 19 is another side view showing fit between a first driving member, an extension and retraction structure and a first guide rail in a pick-and-place mechanism according to an embodiment of the present disclosure;
FIG. 20 is a schematic view of an extension and retraction structure in a pick-and-place mechanism according to an embodiment of the present disclosure;
FIG. 21 is a schematic view showing fit between an extension and retraction structure and a driving structure in a pick-and-place mechanism according to an embodiment of the present disclosure;
FIG. 22 is a schematic view showing fit between an extension and retraction structure and a third guide rail in a pick-and-place mechanism according to an embodiment of the present disclosure;
FIG. 23 is another schematic view showing fit between an extension and retraction structure and a third guide rail in a pick-and-place mechanism according to an embodiment of the present disclosure;
FIG. 24 is a partial enlarged view of part C in FIG. 23;
FIG. 25 is another schematic view showing fit between an extension and retraction structure and a first mounting plate in a pick-and-place mechanism according to an embodiment of the present disclosure;
FIG. 26 is a partial enlarged view of part D in FIG. 25;
FIG. 27 is another schematic view showing fit between an extension and retraction structure and a first mounting plate in a pick-and-place mechanism according to an embodiment of the present disclosure;
FIG. 28 is a schematic view showing fit between an extension and retraction structure and a fourth guide rail in a pick-and-place mechanism according to an embodiment of the present disclosure;
FIG. 29 is a partial enlarged view of part E in FIG. 28;
FIG. 30 is a schematic view of a pick-up assembly in a pick-and-place mechanism according to an embodiment of the present disclosure;
FIG. 31 is another overall schematic view of a pick-and-place mechanism according to an embodiment of the present disclosure;
FIG. 32 is a schematic view showing fit between a second driving member and a limiting member in a pick-and-place mechanism according to an embodiment of the present disclosure;
FIG. 33 is another schematic view showing fit between a second driving member and a limiting member in a pick-and-place mechanism according to an embodiment of the present disclosure;
FIG. 34 is another overall schematic view of a pick-and-place mechanism according to an embodiment of the present disclosure;
FIG. 35 is a schematic view showing fit between a second limiting member and a follower tray in a pick-and-place mechanism according to an embodiment of the present disclosure;
FIG. 36 is another schematic view showing fit between a second limiting member and a follower tray in a pick-and-place mechanism according to an embodiment of the present disclosure;
FIG. 37 is a schematic view showing a first state of a pick-and-place mechanism in a process of picking up an object according to an embodiment of the present disclosure;
FIG. 38 is a schematic view showing a second state of a pick-and-place mechanism in a process of picking up an object according to an embodiment of the present disclosure;
FIG. 39 is a schematic view showing a third state of a pick-and-place mechanism in a process of picking up an object according to an embodiment of the present disclosure;
FIG. 40 is a schematic view showing a fourth state of a pick-and-place mechanism in a process of picking up an object according to an embodiment of the present disclosure; and
FIG. 41 is a schematic view of a transfer robot according to an embodiment of the present disclosure.

### DETAILED DESCRIPTION

In order to enable those skilled in the art to better understand technical solutions in the present disclosure, the technical solutions in embodiments of the present disclosure will be clearly and completely described below with reference to drawings in the embodiments of the present disclosure. Obviously, the described embodiments are only part of the embodiments of the present disclosure, not all of the embodiments of the present disclosure. Based on the embodiments of the present disclosure, all other embodiments obtained by those ordinary skilled in the art without creative efforts should fall within the scope of protection of the present disclosure.

It is to be noted that many specific details are set forth in the following description to facilitate a full understanding of the present disclosure. However, the present disclosure may also be implemented in other ways different from those described herein. Therefore, the protection scope of the present disclosure is not limited to the specific implementations disclosed below.

In the description of the present disclosure, it is to be understood that orientations or positional relationships indicated by terms "up", "down", "horizontal", "bottom", "inner", "outer", etc. are orientations or positional relationships shown in the drawings, and are only for the convenience of describing the present disclosure and simplifying the description, rather than indicating or implying that the device or element referred to must have a specific orientation, be constructed and operated in a specific orientation, and therefore cannot be understood as a limitation on the present disclosure. In the present disclosure, unless otherwise clearly specified and limited, a first feature being "on" or "below" a second feature may be that the first and second features are in direct contact, or the first and second features are in indirect contact through an intermediate medium.

In the present disclosure, unless otherwise clearly specified and limited, terms "coupled", "connected", "fixed" and the like should be understood in a broad sense. For example, it may be a fixed connection, a detachable connection, or an integral one; it may be a direct connection, or an indirect connection through an intermediate medium; and it may be an internal communication of two elements or an interaction relationship between two elements. However, if it is indicated as a direct connection, it means that the two connected entities are not connected through a transitional structure, but are only connected as a whole through a connecting structure. For those ordinary skilled in the art, the specific meanings of the above terms in the present disclosure may be understood according to the specific circumstances.

In the present disclosure, the descriptions of "first", "second", etc. are only used for descriptive purposes and cannot be understood as indicating or implying their relative importance or implicitly indicating the number of the indicated technical features. Therefore, the feature defined as "first" or "second" may explicitly or implicitly include at least one such feature.

When transferring a goods container or a target object on a shelf, in order to improve the transfer efficiency and reduce the workload, a transfer robot is usually used to pick up the goods container or target object from the goods shelf and return the goods container or target object to the goods shelf. The transfer robot is an important device in warehousing. It may automatically place the target object (such as a goods container) on a target carrier (such as a goods shelf) to complete a loading process (such as a container return process), and may also take the target object from the target carrier (such as a container pick-up process) and transfer the target object to a specified position.

In the related art, a container-picking structure of the transfer robot usually includes a telescopic fork and a finger rotatably arranged at a front end of the telescopic fork. When picking up or returning a goods container, the telescopic fork is driven by a first driving member to extend to a side of the goods container to clamp and take the goods container. In addition, when picking up the goods container, the telescopic fork extends into the goods shelf and the front end of the telescopic fork extends beyond the goods container, and the finger rotates to a rear end surface of the goods container to assist the telescopic fork in picking up the goods container on the goods shelf.

In the above process of picking up or returning the goods container, it is required that, when the goods containers are placed or put on the goods shelf, a certain gap needs to be maintained between two adjacent containers (for the telescopic fork to be inserted into or pulled out), and a certain distance needs to be maintained between two front and rear containers (for the finger to extend into). These gaps occupy part of the space for storing the goods containers, resulting in a low storage density of the goods containers on the goods shelf.

To this end, the embodiments of the present disclosure provide a pick-and-place mechanism to solve the technical problem in the related art that there is a certain gap between the goods containers when they are stored and thus the storage density of the goods containers is low.

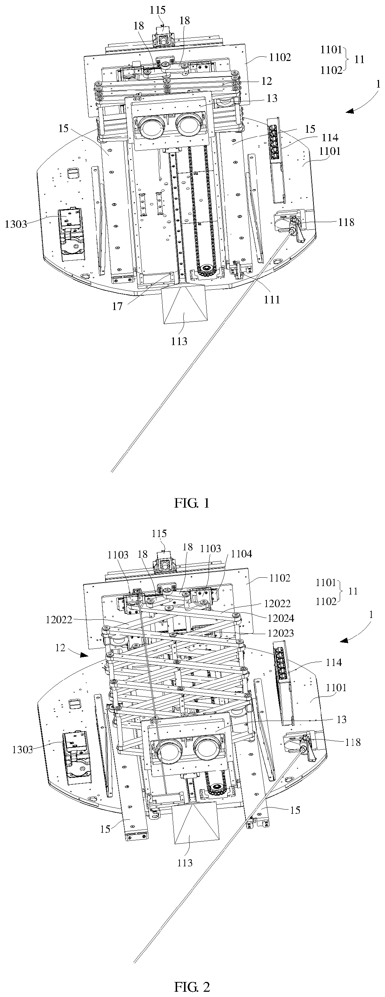

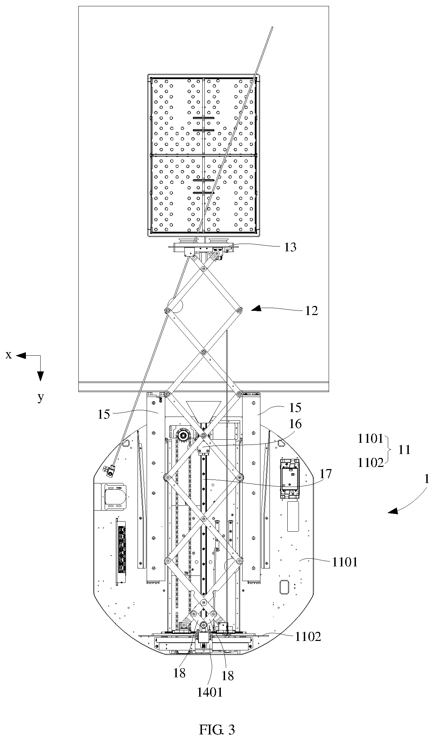

FIG. 1 is an overall schematic view of a pick-and-place mechanism according to an embodiment of the present disclosure, FIG. 2 is another overall schematic view of a pick-and-place mechanism according to an embodiment of the present disclosure, and FIG. 3 is a schematic view showing a state in which a pick-and-place mechanism according to an embodiment of the present disclosure is fitted with a target carrier.

Referring to FIGS. 1 to 3, embodiments of the present disclosure provide a pick-and-place mechanism 1, and the pick-and-place mechanism 1 includes: a base 11, an extension and retraction structure 12, a pick-up assembly 13, a driving structure 14 and a follower tray 15.

In the embodiments of the present disclosure, the base 11 may be made of hard plastics (such as engineering plastics). In some optional examples, the base 11 may also be made of metal or alloy materials such as aluminum alloy, stainless steel or cast iron. It may be understood that the arrangement of the base 11 may be the same or similar to the arrangement of the base 11 in the related art, which is not repeated in the embodiments of the present disclosure.

Referring to FIG. 1, in the embodiments of the present disclosure, the extension and retraction structure 12 may be arranged on the base 11. For example, one end of the extension and retraction structure 12 is connected to the base 11, and the other end of the extension and retraction structure 12 may be a free end. The free end of the extension and retraction structure 12 may selectively extend from or retract into the base 11.

In an optional example of embodiments of the present disclosure, the extension and retraction structure 12 may be a telescopic rod (such as a telescopic cylinder, a hydraulic cylinder or an electric cylinder); and in some other possible examples, the extension and retraction structure 12 may also be a lead screw or a linear motor. The specific type of the extension and retraction structure 12 is not limited in the embodiments of the present disclosure.

In some examples of the embodiments of the present disclosure, the pick-up assembly 13 is arranged at the free end, and the pick-up assembly 13 may move relative to the base 11 under the drive of the free end. The pick-up assembly 13 is configured to act on a front end surface of a target object when picking up or returning the target object, so as to transfer the target object. The front end surface of the target object is an end surface of the target object facing the pick-up assembly 13 when the target object is to be picked up or returned.

In the embodiments of the present disclosure, the front end surface of the target object may refer to a side surface of the target object facing the pick-up assembly 13 when the target object is to be picked up or returned (for example, as shown in FIG. 3, the front end surface of the target object may be a side surface of the target object facing the pick-up assembly 13 along a direction indicated by a y-axis in FIG. 3); or, in some application scenarios, the target object is stored on a goods shelf (also referred to as a target carrier), and the front end surface of the target object may also refer to a side surface of the target object facing outward from the goods shelf. In the embodiments of the present disclosure, the goods container is taken as a specific example for illustration, and the front end surface of the goods container may refer to a side surface facing outward from the goods shelf, so that it is convenient for the pick-up assembly 13 to pick up the goods container.

In some examples, the target carrier may also refer to a temporary storage plate of the transfer robot, that is, the pick-up assembly 13 may also extend from the base 11 to the temporary storage plate, and pick up the target object on the temporary storage plate, or place the target object on the temporary storage plate.

As a specific example of embodiments of the present disclosure, a force-providing component, that may provide a force to the front end surface of the goods container, may be arranged at a movable end (which may also be called a free end in some examples, i.e., an end facing away from or away from a movable seat) of the pick-up assembly 13, so as to move, transfer, pick up or return the goods container.

In some examples, the force-providing component may be an electromagnet, and the front end surface of the goods container may be made of a material that may be attracted by a magnet (e.g., an iron material). When the goods container is picked up or returned, for example, when the force-providing component approaches or comes into contact with the goods container, the electromagnet may be energized, thereby providing a force for transferring the goods container through a magnetic attraction force applied by the electromagnet to the goods container.

It may be understood that in some other possible examples of embodiments of the present disclosure, the force-providing component may be made of a material that may be attracted by a magnet, and an electromagnet is arranged on the front end surface of the goods container. In this way, when the goods container is picked up or returned, for example, when the force-providing component approaches or comes into contact with the goods container, the electromagnet may be powered on, so as to generate a magnetic attraction force between the force-providing component and the electromagnet on the goods container, thereby providing a force for transferring the goods container.

In the embodiments of the present disclosure, the pick-up assembly 13 is configured to transfer the target object by acting on the front end surface of the target object when picking up or returning the target object. In this way, when placing, putting or storing the goods containers on the goods shelf, there is no need to reserve gaps between the goods containers (i.e., between adjacent goods containers), which may effectively reduce storage gaps between adjacent goods containers, improve the storage density of the goods containers, and effectively utilize the same storage space to store more goods containers.

By arranging the pick-up assembly 13 at the free end of the extension and retraction structure arranged on the base 11, the free end of the extension and retraction structure drives the pick-up assembly 13 to extend from the base 11 when extending from the base 11, or drives the pick-up assembly 13 to retract into the base 11 when retracting into the base 11, so that the pick-up assembly 13 may transfer and exchange the target objects between the base 11 and the target goods location. When the pick-up assembly 13 picks up or returns the target object, it may act on the front end surface of the target object (that is, the end surface of the target object facing the pick-up assembly 13 when the target object is to be picked up or returned). In this way, compared with the related art, there is no need to insert an end of the pick-up assembly 13 facing away from the base 11 (facing the target object) into the gap between two adjacent target objects. That is, when storing the target objects, there is no need to maintain a certain gap between two adjacent target objects, i.e., the storage gap between adjacent target objects is reduced, and the storage density of the target objects is effectively improved.

In some examples, the driving structure 14 may be connected to the extension and retraction structure 12, and the driving structure 14 is configured to drive the free end of the extension and retraction structure 12 to extend from or retract into the base 11, so as to drive the pick-up assembly 13 to reciprocate between the target goods location and the base 11.

In a specific example of embodiments of the present disclosure, the extension and retraction structure 12 may be a telescopic rod structure, and the driving structure 14 may be specifically a lead screw, where the free end of the extension and retraction structure 12 may be a rod body of the telescopic rod connected to the pick-up assembly 13, and the end of the extension and retraction structure 12 connected to the base 11 may be a rod body of the telescopic rod connected to the base 11. In some examples, a driving block may be fixed to the free end of the extension and retraction structure 12, the driving block is provided with a through hole having an internal thread, and the lead screw passes through the through hole and is threadedly connected to the through hole (in some examples, it may also be called a threaded connection). In this way, when the lead screw rotates, the lead screw pushes the driving block through the thread, and the driving block drives the telescopic rod to extend and retract, thereby driving the pick-up assembly 13 to extend from or retract to the base 11.

In the embodiments of the present disclosure, the driving structure 14 is connected to the extension and retraction structure 12, and drives the free end of the extension and retraction structure 12 to extend from or retract into the base 11. In this way, the telescopic distance of the free end of the extension and retraction structure 12 may be increased, which facilitates the picking up and returning of the target object in a deep inner location of the target carrier, thereby improving the application scope of the pick-and-place mechanism 1.

In some examples of the embodiments of the present disclosure, the follower tray 15 may be arranged on the base 11; or, in some other examples, the follower tray 15 may also be arranged on the extension and retraction structure 12.

In the embodiments of the present disclosure, when the pick-up assembly 13 picks up or returns the target object, at least part of the follower tray 15 is located in a movement path of the target object (for example, as shown in FIG. 3, when the target object moves toward the base 11 along the direction indicated by the y-axis in FIG. 3, the follower tray 15 is located in the movement path of the target object), and the follower tray 15 may extend from the base 11 to support the target object when the pick-up assembly 13 carries the target object.

In some examples, the follower tray 15 may be driven to extend from the base 11 by a first driving member 1401 of a motor or a cylinder, or the follower tray 15 may also extend from the base 11 under the drive of the extension and retraction structure 12. In some other examples, the follower tray 15 may also remain in the state of extending out of the base 11, so that when the pick-up assembly 13 carries the target object, the follower tray 15 may support the target object. For example, when the target object moves with the pick-up assembly 13 to be between the target carrier and the base 11 (generally, in order to avoid interference between the transfer robot and the target carrier when the transfer robot moves in the warehousing space, there is a certain gap between the base 11 and the target carrier in the moving route planning of the transfer robot, and the follower tray 15 may be located in the gap), the follower tray 15 supports the target object. In this way, the gap between the base 11 and the target carrier may be filled to prevent the target object from falling.

By arranging the follower tray 15, when the pick-up assembly 13 picks up or returns the target object, at least part of the follower tray 15 is located in the movement path of the target object, and the follower tray 15 may extend from the base 11, so as to support the target object when the pick-up assembly 13 carries the target object. In this way, the force that the pick-up assembly 13 needs to apply to the target object may be reduced, thereby reducing the design requirements for the pick-up assembly 13 and reducing the production and processing costs of the pick-and-place mechanism 1.

The working process of the pick-and-place mechanism 1 picking up or returning the target object according to the embodiments of the present disclosure may be as follows.

After the transfer robot drives the pick-and-place mechanism 1 to move to the target carrier, the pick-and-place mechanism 1 is lifted and lowered along the mast 2 of the transfer robot to a target position. At this time, the follower tray 15 may be driven by the first driving member 1401 such as the motor or the cylinder, so that at least part of the follower tray 15 extends from the base 11, and the follower tray 15 is located between the base 11 and the target carrier.

Then, the driving structure 14 drives the pick-up assembly 13 through the extension and retraction structure 12, and the pick-up assembly 13 extends or retracts while carrying the target object. After the pick-up assembly 13 completes the transfer of the target object (for example, the pick-up assembly 13 moves the target object from the target carrier to the base 11; or, the pick-up assembly 13 transfers the target object from the base 11 to the target carrier and retracts into the base 11), the first driving member 1401 such as the motor or the cylinder drives the follower tray 15 to retract into the base 11.

In some other examples of the embodiments of the present disclosure, the follower tray 15 may also extend from the base 11 or retract into the base 11 along with the extension and retraction of the extension and retraction structure 12.

It may be understood that in some optional examples of the embodiments of the present disclosure, the follower tray 15 may be movably connected to the base 11. For example, the follower tray 15 may be slidably connected to the base 11; or, in some examples, the follower tray 15 may also be rotatably connected to the base 11. In some examples, when the pick-up assembly 13 carries the target object, the follower tray 15 may be driven by the motor to rotate to be between the base 11 and the target carrier, so as to support the target object. In the embodiments of the present disclosures, the sliding connection between the follower tray 15 and the base 11 is taken as a specific example for illustration.

Referring to FIG. 3, in some examples of the embodiments of the present disclosure, a length of the follower tray 15 is greater than the gap between the base 11 and the target carrier; and when the follower tray 15 extends from the base 11, the follower tray is used to abut between the target carrier and the base 11.

In a specific application scenario, as shown in FIG. 3, when the pick-up assembly 13 picks up or returns the target object, the follower tray 15 may abut against a front end surface of the target carrier, thereby filling the gap between the base 11 and the target carrier. In this way, when the pick-up assembly 13 picks up or returns the target object, the follower tray 15 may support and hold the target object carried by the pick-up assembly 13, thereby effectively preventing the target object from falling from the gap between the base 11 and the target carrier.

It may be understood that, in some examples, the length of the follower tray 15 may also be smaller than the gap between the base 11 and the target carrier. For example, in some examples, the follower tray 15 may be connected to and supported on the base 11 by a connecting member or a supporting arm, so that the follower tray 15 is in the gap between the base 11 and the target carrier and fills the gap between the base 11 and the target carrier.

It may also be understood that, in some examples, the length of the follower tray 15 may also be equal to the gap between the base 11 and the target carrier.

In some examples, before the pick-up assembly 13 extends from the base 11, the follower tray 15 is first driven by the motor according to the aforementioned embodiments of the present disclosure to extend from the base 11 (for example, the follower tray 15 may extend from the base 11 by rotating), and an end of the follower tray 15 abuts against the front end surface of the target carrier.

Generally, the target carrier may include multiple layers of goods locations (as shown in FIG. 3, one layer of goods locations is shown as an example), and the end of the follower tray 15 may abut against a front cross beam of each layer of goods locations in the target carrier. As an optional example, a support surface of the follower tray 15 (generally an upper surface of the follower tray 15) may be flush or approximately flush with a support surface of the goods location of the target carrier. In this way, it is convenient for the follower tray 15 to support the target object carried by the pick-up assembly 13.

It may be understood that after the extension and retraction structure 12 drives the target object to move into the base 11 through the pick-up assembly 13, or after the extension and retraction structure 12 places the target object in the goods location on the target carrier through the pick-up assembly 13 and retracts into the base 11, the follower tray 15 may be driven by the motor to retract into the base 11, thereby facilitating the movement of the transfer robot.

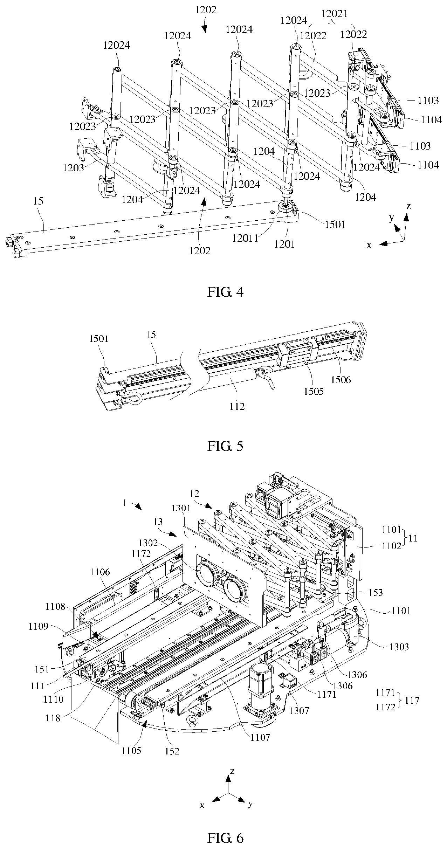

FIG. 4 is a schematic view showing fit between an extension and retraction structure and a follower tray in a pick-and-place mechanism according to an embodiment of the present disclosure.

In some other examples of the embodiments of the present disclosure, the follower tray 15 is slidably arranged on the base 11.

In the embodiments of the present disclosure, a movement direction of the follower tray 15 may be consistent with an extension and retraction direction of the extension and retraction structure 12, that is, the movement direction of the follower tray 15 on the base 11 may be parallel or approximately parallel to the extension and retraction direction of the extension and retraction structure 12.

As shown in FIG. 3, the extension and retraction direction of the extension and retraction structure 12 may be the direction indicated by the y-axis shown in FIG. 3. For example, taking FIG. 3 as an example for illustration, when the free end of the extension and retraction structure 12 extends from the base 11, an extension direction of the extension and retraction structure 12 may be a direction indicated by a negative direction of the y-axis in FIG. 3, and a retraction (which may also be called withdrawal in some examples) direction of the extension and retraction structure 12 may be a direction indicated by a positive direction of the y-axis in FIG. 3.

Referring to FIG. 4, the extension and retraction structure 12 includes a first force-applying member 1201, and the follower tray 15 includes a force-bearing portion 1501. The first force-applying member 1201 may at least apply a force to the force-bearing portion 1501 when the extension and retraction structure 12 is retracted, so as to drive the follower tray 15 to retract into the base 11.

In some examples, the first force-applying member 1201 may be fixedly connected to the force-bearing portion 1501, and when the free end of the extension and retraction structure 12 extends outward, the extension and retraction structure 12 drives the follower tray 15 to move, so that the follower tray 15 extends from the base 11. When the free end of the extension and retraction structure 12 retracts into the base 11, the extension and retraction structure 12 drives the follower tray 15 to retract into the base 11.

As an optional example, the first force-applying member 1201 may have two force arms (not shown in the drawings), one of the two arms is located at a front side of the force-bearing portion 1501 (for example, as shown in FIG. 4, one of the two force arms may be located at a side of the force-bearing portion 1501 along a positive direction of an x-axis, and generally may also be located at a side of the force-bearing portion 1501 facing the target carrier), and the other of the two force arms may be located at a rear side of the force-bearing portion 1501 (in some examples, it may also be located at a side of the force-bearing portion 1501 facing away from the target carrier). The force arm located at the rear side of the force-bearing portion 1501 may be rotatably connected to the extension and retraction structure 12 via a torsion spring.

In an application scenario, when the free end of the extension and retraction structure 12 extends outward, the extension and retraction structure 12 pushes the follower tray 15 to extend from the base 11 through the force arm located at the rear side of the force-bearing portion 1501. When the follower tray 15 abuts against the target carrier, the force arm at the rear side of the force-bearing portion 1501 applies a force, and the force arm rotates relative to the extension and retraction structure 12 and rotates to a side wall of the follower tray 15. At this time, the torsion spring stores energy. In this way, the extension and retraction structure 12 may continue to drive the pick-up assembly 13 to extend from the base 11, without affecting the movement of the pick-up assembly 13.

In another application scenario, when the free end of the extension and retraction structure 12 drives the pick-up assembly 13 to retract into the base 11, the target object carried on the pick-up assembly 13 is supported by the follower tray 15, and the force arm located at the front side of the force-bearing portion 1501 is contact with the force-bearing portion 1501 and applies a force to the force-bearing portion 1501, so as to drive the follower tray 15 and the target object located on the follower tray 15 to retract into the base 11.

FIG. 5 is a schematic view showing fit between a follower tray, a second slider and a second guide rail in a pick-and-place mechanism according to an embodiment of the present disclosure.

Referring to FIG. 5, in some optional examples of the embodiments of the present disclosure, the sliding of the follower tray 15 and the base 11 may be configured in the following manner.

A second guide rail 1506 and a second slider 1505 are arranged between the follower tray 15 and the base 11. In the embodiments of the present disclosure, one of the second guide rail 1506 and the second slider 1505 may be arranged on a side of the follower tray 15 facing the base 11 (in specific use, the side of the follower tray 15 may be understood as a bottom of the follower tray 15). For example, the second guide rail 1506 may be fixedly connected to the follower tray 15. In addition, the other of the second guide rail 1506 and the second slider 1505 may be specifically arranged on the base 11, and the second slider 1505 is slidably connected to the second guide rail 1506. In a specific example, the second slider 1505 may be fixed on the base 11, and the second guide rail 1506 slides relative to the second slider 1505 when moving together with the follower tray 15.

In some optional examples, the second guide rail 1506 may be fixed on the base 11, and the second slider 1505 may be arranged on the follower tray 15, so that the follower tray 15 may move along a direction of the second guide rail 1506. In this way, the stability of the follower tray 15 sliding relative to the base 11 may be effectively improved.

In an optional example of the embodiments of the present disclosure, two second sliders 1505 may be arranged, and the two second sliders 1505 are arranged side by side along an extension and retraction direction of the follower tray 15. In this way, the stability of the movement of the follower tray 15 may be effectively improved.

In some optional examples of the embodiments of the present disclosure, as shown in FIGS. 3 and 4, the extension and retraction structure 12 may be a scissor structure; the scissor structure has one or more first hinge joints 12023 and one or more second hinge joints 12024; the first hinge joints 12023 are arranged along an extension and retraction direction of the scissor structure, and the second hinge joints 12024 are located on both sides of the first hinge joints 12023.

In some examples, as shown in FIGS. 3 and 4, the scissor structure includes a plurality of scissor pieces 12021 connected in sequence along the extension and retraction direction, and each scissor piece 12021 has two transmission rods 12022 mutually intersecting and rotatably connected. That is, referring to FIGS. 3 and 4, middle portions of the two mutually intersecting transmission rods 12022 may be pivotally connected (i.e., a pivot joint of the middle portions is the first hinge joint 12023), and an end of the transmission rod 12022 is pivotally connected to an end of the transmission rod 12022 of an adjacent scissor piece 12021 (i.e., a pivot joint of the ends of the transmission rods 12022 is the second hinge joint 12024).

In some optional examples of the embodiments of the present disclosure, the first force-applying member 1201 is arranged at the second hinge joint 12024. When the scissor structure retracts and drives the follower tray 15 to retract into the base 11, the first force-applying member 1201 is in sliding contact with the force-bearing portion 1501, and when the follower tray 15 retracts into the base 11, the first force-applying member 1201 applies a force to the force-bearing portion 1501.

It may be understood that, as shown in FIG. 3, in the process of the free end of the scissor structure extending from the base 11, a size of the scissor structure in a width direction (for example, a direction indicated by the x-axis in FIG. 3) decreases, and a size of the scissor structure in a length direction (i.e., the extension and retraction direction, which may also be the direction indicated by the y-axis in FIG. 3) increases, so that the free end of the extension and retraction structure 12 extends out of the base 11, and drives the pick-up assembly 13 to extend out of the base 11. In the process of the free end of the scissor structure retracting into the base 11, the size of the scissor structure in the width direction increases, and the size of the scissor structure in the length direction decreases. In other words, the first force-applying member 1201 arranged at the second hinge joint 12024 has a certain displacement in the width direction of the scissor structure. In the embodiments of the present disclosure, the first force-applying member 1201 is arranged to be in sliding contact with the force-bearing portion 1501, which may facilitate the extension and retraction of the extension and retraction structure 12.

In addition, when the follower tray 15 is retracted into the base 11, the first force-applying member 1201 applies the force to the force-bearing portion 1501. That is, after the first force-applying member 1201 of the scissor structure drives the follower tray 15 to retract into the base 11 through the force-bearing portion 1501, a movement range of the first force-applying member 1201 in the width direction is within a width range of the follower tray 15 (or a width range of the force-bearing portion 1501), which may stably maintain the follower tray 15 in the base 11 and reduce the space occupied by and required for the movement of the transfer mechanism.

In some other optional examples of the embodiments of the present disclosure, as shown in FIG. 4, a rolling member 12011 is arranged on any one of the first force-applying member 1201 and the force-bearing portion 1501, and the rolling member 12011 is in rolling contact with the other of the first force-applying member 1201 and the force-bearing portion 1501.

In some examples, as shown in FIG. 4, the rolling member 12011 includes any one of a first roller or ball. In FIG. 4, the first roller is taken as a specific example for illustration. In the embodiments of the present disclosure, the first roller may be rotatably connected to the first force-applying member 1201. A rotation shaft of the first roller may be perpendicular or approximately perpendicular to a sliding direction of the first force-applying member 1201 relative to the force-bearing portion 1501.

It may be understood that in some optional examples, the first roller may also be arranged on the force-bearing portion 1501 and be rotatably connected to the force-bearing portion 1501.

In some other examples of the embodiments of the present disclosure, the rolling element 12011 may also be a ball. It may be understood that the arrangement of the ball may be similar to that of the first roller, and specific reference may be made to the detailed description of the first roller in the foregoing embodiments of the present disclosure, which will not be repeated in the embodiments of the present disclosure.

In some examples, as shown in FIGS. 2 and 4, the follower tray 15 is located between the extension and retraction structure 12 and the base 11, and the first force-applying member 1201 is arranged on a side of the extension and retraction structure 12 facing the follower tray 15; the force-bearing portion 1501 is located on the side of the follower tray 15 facing the first force-applying member 1201; and the first force-applying member 1201 is located at a side of the force-bearing portion 1501 facing the outside of the base 11.

In the embodiments of the present disclosure, the follower tray 15 may be arranged above the base 11, and the extension and retraction structure 12 is located on a side of the follower tray 15 facing away from the base 11. The first force-applying member 1201 may be a rod connected to the second hinge joint 12024 and extending toward the follower tray 15. In some examples, the rod may be a cylindrical structure, thereby reducing a contact area between the first force-applying member 1201 and the force-bearing portion 1501. In addition, the force-bearing portion 1501 may be a protrusion protruding toward the extension and retraction structure 12 from a rear end of the follower tray 15 (an end located within the base 11, or an end facing away from the outside of the base 11).

That is, the first force-applying member 1201 may be a rod-shaped structure, and the force-bearing portion 1501 may be a plate-shaped structure, so that when the extension and retraction structure 12 extends or retracts, the movement range of the first force-applying member 1201 relative to the force-bearing portion 1501 in the width direction of the extension and retraction structure 12 is within the width range of the force-bearing portion 1501.

It may be understood that in some examples, the first force-applying member 1201 may be a plate-shaped structure, and the force-bearing portion 1501 may be a rod-shaped structure. In the embodiments of the present disclosure, the specific structures of the first force-applying member 1201 and the force-bearing portion 1501 are not limited.

In the embodiments of the present disclosure, the follower tray 15 is arranged between the extension and retraction structure 12 and the base 11, the first force-applying member 1201 is arranged on the side of the extension and retraction structure 12 facing the follower tray 15, the force-bearing portion 1501 is arranged on the side of the follower tray 15 facing the first force-applying member 1201, and the first force-applying member 1201 is arranged at the side of the force-bearing portion 1501 facing the outside of the base 11. In this way, the connection relationship between the first force-applying member 1201 and the force-bearing portion 1501 may be simplified, thereby facilitating the mutual movement of the follower tray 15 and the extension and retraction structure 12.

In an implementation, two second hinge joints 12024 located on opposite sides of the same first hinge joint 12023 are both provided with the first force-applying member 1201.

In some examples, as shown in FIG. 3, the two second hinge joints 12024 may refer to two second hinge joints 12024 that are opposite to each other along the direction indicated by the x-axis in FIG. 3. It may also be understood that the two second hinge joints 12024 that are opposite to each other in the width direction of the extension and retraction structure 12 are both provided with the first force-applying members 1201. In this way, the two first force-applying members 1201 may apply forces to the follower tray 15 on both sides, which may improve the stability of the movement of the follower tray 15. For example, in some examples, the follower tray 15 may be an integral tray arranged on the base 11, which may improve the stability and balance of the movement of the follower tray 15.

It may be understood that when the follower tray 15 is an integral tray, an avoidance groove may be formed in the middle of the follower tray 15, so as to facilitate the driving structure 14 to drive the extension and retraction structure 12.

As shown in FIG. 5, in some other optional examples of the embodiments of the present disclosure, the pick-and-place mechanism 1 also includes: a force storage member 112, a part of the force storage member 112 is connected to the base 11, and another part of the force storage member 112 is connected to the follower tray 15; and the force storage member 112 is configured to store forces when the extension and retraction structure 12 drives the follower tray 15 to retract into the base 11, so that when the extension and retraction structure 12 is extended out of the base 11, the force storage member 112 drives the follower tray 15 to extend from the base 11.

In some examples, a force storage direction of the force storage member 112 may be along the extension and retraction direction of the follower tray 15, or a force storage direction of the force storage member 112 may also be along the extension and retraction direction of the extension and retraction structure 12. For example, taking FIG. 4 as an example, the force storage direction of the force storage member 112 may be the direction indicated by the x-axis in FIG. 4.

In some examples, the force storage member 112 may include two magnets with the same poles facing each other, one of the two magnets is arranged at a front end of the follower tray 15, and the other of the two magnets is arranged on the base 11. When the follower tray 15 is retracted into the base 11, a distance between the two magnets is reduced and a repulsive force between the two magnets is increased, thereby storing forces between the two magnets; and in the process of the free end of the extension and retraction structure 12 driving the pick-up assembly 13 to extend outward, the repulsive force between the two magnets pushes the follower tray 15 to extend out of the base 11.

In other optional examples, the force storage member 112 may also be a compressible cylinder or an elastic column. When the follower tray 15 is retracted into the base 11, the compressible cylinder or the elastic column is compressed to store forces. In the process of the free end of the extension and retraction structure 12 driving the pick-up assembly 13 to extend outward, the stored force of the compressible cylinder or the elastic column is released, thereby pushing the follower tray 15 to extend out of the base 11.

In some other optional examples of the embodiments of the present disclosure, the force storage member 112 includes an elastic member, one end of the elastic member is connected to the base 11, and the other end of the elastic member is connected to the follower tray 15.

In an optional example, the elastic member may be a compression spring, and when the follower tray 15 is retracted into the base 11, the elastic member may be in a compressed state, that is, the elastic member may have a compression deformation.

When the free end of the extension and retraction structure 12 drives the pick-up assembly 13 to extend outward, the compression deformation of the elastic member is released, thereby pushing the follower tray to extend from the base 11. When the follower tray 15 abuts against the target carrier, the compression deformation of the elastic member may be completely released, or in some examples, the compression deformation of the elastic member may be only partially released.

It may be understood that, in some examples, the elastic member may also be a tension spring. When the follower tray 15 is retracted into the base 11, the tension spring is stretched, that is, the elastic member is in a stretched state; and in the process of the free end of the extension and retraction structure 12 driving the pick-up assembly 13 to extend outward, the stretched deformation of the elastic member is released, and the elastic member returns to a natural state from the stretched state. It may be understood that, in some examples, the stretched deformation of the elastic member may also be only partially released.

In the embodiments of the present disclosure, the force storage member 112 is arranged, a part of the force storage member 112 is connected to the follower tray 15, and another part of the force storage member 112 is connected to the base 11. Thus, when the follower tray 15 is retracted into the base 11, the force storage member 112 stores forces, so that in the process of the free end of the extension and retraction structure 12 driving the pick-up assembly 13 to extend outward, the force stored in the force storage member 112 is released to push the follower tray 15 to extend outward, thereby simplifying the driving form of the follower tray 15, saving energy consumption for driving the follower tray 15, simplifying the structure of the pick-and-place mechanism 1, and saving costs.

In some examples, as shown in FIGS. 1 to 3, two follower trays 15 may be arranged, the two follower trays 15 are located on both sides of the extension and retraction structure 12, and each follower tray 15 may correspond to one first force-applying member 1201. In some optional examples, the movement range of the first force-applying member 1201 along the width direction of the extension and retraction structure 12 may be less than or equal to the width of the follower tray 15.

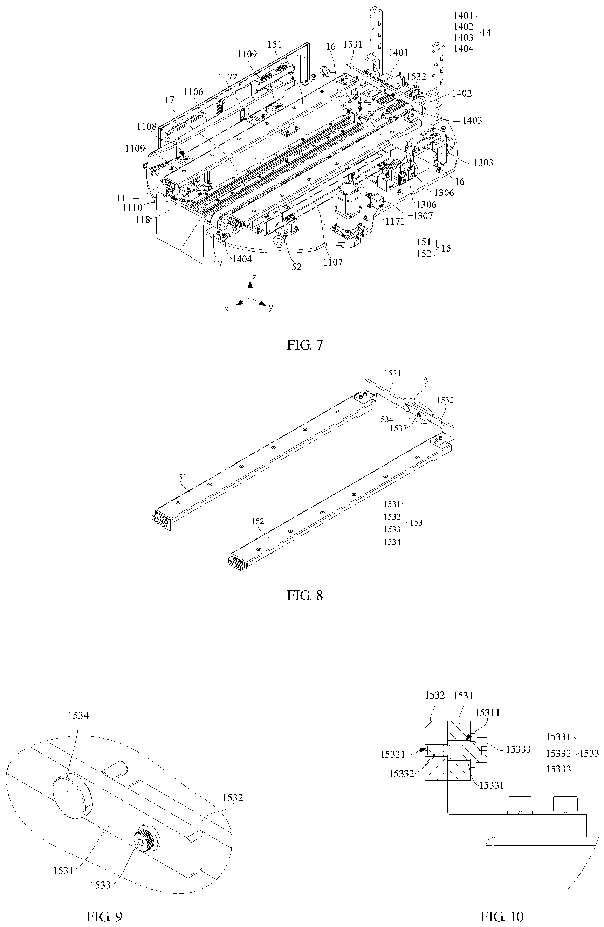

FIG. 6 is an overall schematic view of a pick-and-place mechanism according to an embodiment of the present disclosure. FIG. 7 is a schematic view showing fit between a base and a follower tray in a pick-and-place mechanism according to an embodiment of the present disclosure. FIG. 8 is a schematic view showing fit between a first follower tray, a second follower tray and a connecting member in a pick-and-place mechanism according to an embodiment of the present disclosure.

Referring to FIGS. 6-8, in some examples, the driving structure 14 may be configured to be fitted with a power piece 121 of the extension and retraction structure 12 and provide power to the power piece 121, so as to drive the power piece 121 to drive the extension and retraction structure 12 to extend from or retract into the base 11. The power piece 121 may be configured as the force-bearing portion in the aforementioned embodiments of the present disclosure.

In some examples, the driving structure 14 may be a lead screw, and a driving block may be fixed on the power piece 121. The driving block is provided with a through hole having an internal thread, and the lead screw passes through the through hole and is threadedly connected to the through hole (in some examples, it may also be called a threaded connection). In this way, when the lead screw rotates, the lead screw pushes the driving block through the thread, and the driving block drives a power hinge joint connected to the power piece 121, thereby driving the pick-up assembly 13 to extend from or retract into the base 11.

In some examples, as shown in FIGS. 6 and 7, the driving structure 14 may include a first driving member 1401 and a transmission member, the first driving member 1401 is connected to the transmission member, and the power hinge joint may be connected to the transmission member. When the first driving member 1401 drives the transmission member to move relative to the base 11, the transmission member drives the extension and retraction structure 12 to extend from or retract into the base 11 through the power hinge joint.

In the embodiments of the present disclosure, the first driving member 1401 may be a motor (for example, a synchronous motor, a servo motor or a stepping motor that may rotate forward and reversely). It may be understood that the first driving member 1401 may also be other types of motors. The specific type of the first driving member 1401 is not limited in the embodiments of the present disclosure.

In some examples, the transmission member may include a power wheel 1402, an idler wheel 1404 and a transmission belt 1403; the power wheel 1402 and the idler wheel 1404 are spaced apart, the transmission belt 1403 is sleeved on the power wheel 1402 and the idler wheel 1404, and the power hinge joint is connected to the transmission belt 1403; an power output shaft of the first driving member 1401 is connected to the power wheel 1402, and drives the transmission belt 1403 through the power wheel 1402 and the idler wheel 1404, so as to drive the extension and retraction structure 12 to extend from or retract into the base 11.

In some optional examples, the output shaft of the first driving member 1401 (which may also be referred to as the power output end in some examples) is connected to the power wheel 1402 and drives the power wheel 1402 to rotate. The idler wheel 1404 and the power wheel 1402 are spaced apart along the extension and retraction direction of the extension and retraction structure 12, and the transmission belt 1403 (such as a chain, a belt, a synchronous belt or a timing belt, etc.) may be tensioned between the power wheel 1402 and the idler wheel 1404 (for example, the transmission belt 1403 is sleeved on the power wheel 1402 and the idler wheel 1404). When the first driving member 1401 drives the power wheel 1402 to rotate, the power wheel 1402 drives the transmission belt 1403 to move between the power wheel 1402 and the idler wheel 1404.

In some optional examples, the power hinge joint may be connected to the transmission belt 1403, for example, the power hinge joint may be connected to a main body of the transmission belt 1403, and the main body is located between the power wheel 1402 and the idler wheel 1404. In this way, the movement of the transmission belt 1403 drives the extension and retraction structure 12 to extend and retract, thereby driving the pick-up assembly 13 to move toward the goods container, or driving the pick-up assembly 13 to move away from the goods container.

In the embodiments of the present disclosure, the power hinge joint is driven to move by the power wheel 1402, the idler wheel 1404, and the transmission belt 1403 stretched on the power wheel 1402 and the idler wheel 1404, thereby driving the extension and retraction structure 12 to extend and retract. In this way, the driving form of the extension and retraction structure 12 may be simplified, and the arrangement of the transmission member is convenient. In addition, a small displacement of the power hinge joint may be amplified into a large displacement of the pick-up assembly 13 by the extension and retraction of the scissor structure, so as to facilitate the picking up and returning of the target object in a deep inner location of a target goods shelf.

In some examples, during the process of the extension and retraction structure 12 retracting into the base 11, the power piece 121 is configured to be fitted with the follower tray 15 to drive the follower tray 15 to retract into the base 11.

In the pick-and-place mechanism according to the embodiments of the present disclosure, the pick-up assembly 13 is arranged at the free end of the extension and retraction structure 12 arranged on the base 11. When the free end of the extension and retraction structure 12 extends out of the base 11, it drives the pick-up assembly 13 to extend from the base, or when the free end of the extension and retraction structure 12 is retracted into the base 11, it drives the pick-up assembly 13 to retract into the base 11, so that the pick-up assembly 13 may transfer and exchange target objects between the base 11 and the target goods location. When the pick-up assembly 13 picks up or returns the target object, it may act on the front end surface of the target object (that is, the end surface of the target object facing the pick-up assembly when it is to be picked up or returned). In this way, compared with the related art, there is no need to insert the end of the pick-up assembly 13 facing the target object into the gap between two target objects. That is, when storing the target objects, there is no need to maintain a certain gap between the two adjacent target objects, thereby reducing the storage gap between adjacent target objects and improving the storage density of the target objects.

In addition, by arranging the follower tray 15, when the pick-up assembly 13 picks up or returns the target object, at least part of the follower tray 15 is located in the movement path of the target object, and the follower tray 15 may extend from the base 11, so as to support the target object when the pick-up assembly 13 carries the target object. In this way, the force that the pick-up assembly needs to apply to the target object may be reduced, thereby reducing the design requirements for the pick-up assembly and reducing the production and processing costs of the pick-and-place mechanism 1.

In addition, the driving structure 14 is fitted with the power piece 121 of the extension and retraction structure 12 and provides power to the power piece 121, so that the extension and retraction structure 12 may extend from or retract into the base 11. In the process of the extension and retraction structure 12 retracting into the base 11, the power piece 121 is configured to be fitted with the follower tray 15, thereby driving the follower tray 15 to retract into the base 11. In this way, the power piece 121 of the extension and retraction structure 12 may be directly used to provide power to the follower tray 15, and there is no need to arrange a complex structure to provide power to the follower tray 15, which simplifies the structure of the pick-and-place mechanism 1 and the transfer robot, and reduces the production and processing cost of the pick-and-place mechanism.

In some examples of the embodiments of the present disclosure, as shown in FIGS. 6 and 7, the follower tray 15 may include a first follower tray 151 and a second follower tray 152.

In some examples, the first follower tray 151 may be arranged on the base 11, and at least part of the first follower tray 151 may extend out of the base 11 through the access opening 1105, to support the target object in the movement path of the target object.

In some examples, the second follower tray 152 may be arranged on the base 11, and the second follower tray 152 may be arranged side by side with the first follower tray 151. At least part of the second follower tray 152 may extend out of the base 11 through the access opening 1105, to support the target object in the movement path of the target object.

That is, in some examples of the embodiments of the present disclosure, the target object may be supported by two follower trays, namely the first follower tray 151 and the second follower tray 152. In this way, the contact area between the target object and the follower tray 15 is increased, and the stability of the follower tray in supporting the target object may be improved.

In some examples, in order to improve the stability of the first follower tray 151 and the second follower tray 152 in supporting the target object, the first follower tray 151 and the second follower tray 152 need to move synchronously, that is, the first follower tray 151 and the second follower tray 152 move synchronously relative to the base 11.

Referring to FIGS. 6 to 8, in some examples of the embodiments of the present disclosure, the pick-and-place mechanism 1 may include a connecting member 153. The connecting member 153 may be connected to the first follower tray 151 and the second follower tray 152.

In some examples of the embodiments of the present disclosure, the first follower tray 151 and the second follower tray 152 are connected by the connecting member 153, so that when the first follower tray 151 moves relative to the base 11, the second follower tray 152 may be driven to move relative to the base 11 by the connecting member 153. Alternatively, when the second follower tray 152 moves relative to the base 11, the first follower tray 151 may be driven to move relative to the base 11 by the connecting member 153. In other words, the first follower tray 151 and the second follower tray 152 are connected by the connecting member 153, so that the first follower tray 151 and the second follower tray 152 may move synchronously relative to the base 11. The synchronization of the movement of the first follower tray 151 and the second follower tray 152 relative to the base 11 may be improved, and the support effect on the target object may be improved.

In the pick-and-place mechanism 1 according to the embodiments of the present disclosure, the first follower tray 151 and the second follower tray 152 are arranged on the base 11, and at least part of the first follower tray 151 and at least part of the second follower tray 152 may extend out of the base 11 through the access opening 1105 of the base 11, thereby supporting the target object in the movement path of the target object. In this way, the first follower tray 151 and the second follower tray 152 may extend from the base 11 to support the target object, thereby preventing the target object from falling when entering and exiting the base 11 through the access opening 1105.

In addition, in the embodiments of the present disclosure, the connecting member 153 connects the first follower tray 151 with the second follower tray 152. In this way, it may be ensured that the first follower tray 151 and the second follower tray 152 may move synchronously under the drive of the connecting member 153 during the process of extending from or retracting into the base 11, and the synchronization of the movement of the first follower tray 151 and the second follower tray 152 relative to the base 11 may be improved, thereby improving the stability of the first follower tray 151 and the second follower tray 152 in supporting the target object, improving the supporting effect on the target object, and preventing the target object from falling.

In some examples of the embodiments of the present disclosure, in order to facilitate the first follower tray 151 and the second follower tray 152 to move relative to the base 11, the first follower tray 151 and the second follower tray 152 may be slidably arranged on the base 11. For example, in some examples, a slide rail may be arranged on the base 11, and the first follower tray 151 and the second follower tray 152 may be slidably arranged on the slide rail through a slider, thereby being slidably arranged on the base 11.

It may be understood that, in some examples, a slider may be arranged on the base 11, a slide rail may be arranged on the first follower tray 151 and the second follower tray 152, and the slide rail may be slidably connected to the slider, so that the first follower tray 151 and the second follower tray 152 are slidably arranged on the base 11.

In some examples, when mounting and fixing the slide rail or the slider, there may be a certain mounting error in the mounting and fixing of the slide rail or the slider, or when the slide rail and the slider are processed and produced, there may be a certain processing tolerance. As a result, it is difficult for the first follower tray 151 and the second follower tray 152 to remain absolutely parallel after being mounted on the base 11. In order to facilitate the first follower tray 151 and the second follower tray 152 to slide relative to the base 11 and avoid the first follower tray 151 and the second follower tray 152 from getting stuck during the process of sliding relative to the base 11, in some examples of the embodiments of the present disclosure, the connecting member 153 flexibly connects the first follower tray 151 with the second follower tray 152.

In some examples, the connecting member 153 may be movably connected to the first follower tray 151. For example, the first follower tray 151 and the connecting member 153 may be rotatably connected via a rotation shaft.

In some examples, the connecting member 153 may be movably connected to the second follower tray 152. For example, the second follower tray 152 and the connecting member 153 may be rotatably connected via a rotation shaft.

In some examples, the connecting member 153 may be movably connected to the first follower tray 151, and the connecting member 153 may be movably connected to the second follower tray 152. For example, the first follower tray 151 and the connecting member 153 may be rotatably connected by a rotation shaft, and the second follower tray 152 and the connecting member 153 may be rotatably connected by a rotation shaft.

In some examples of the embodiments of the present disclosure, the connecting member 153 movably connects the first follower tray 151 with the second follower tray 152. In this way, during the synchronous movement of the first follower tray 151 and the second follower tray 152 relative to the base 11, if the slide rails are not mounted in parallel, the first follower tray 151 and the second follower tray 152 may move relative to the connecting member 153, thereby absorbing the movement resistance between the first follower tray 151 and the second follower tray 152 caused by the non-parallel mounting, which may avoid the first follower tray 151 and the second follower tray 152 from getting stuck, and improve the smoothness of the synchronous movement of the first follower tray 151 and the second follower tray 152 relative to the base 11.

FIG. 9 is a partial enlarged view of part A in FIG. 8. FIG. 10 is a partial sectional view of part A in FIG. 8.

In some other examples of the embodiments of the present disclosure, as shown in FIGS. 9 and 10, the connecting member 153 may include a first sub-connecting member 1531 and a second sub-connecting member 1532.

In some examples, the first sub-connecting member 1531 may be connected to the first follower tray 151. The first sub-connecting member 1531 may be fixedly connected to the first follower tray 151.

In some examples, the second sub-connecting member 1532 may be connected to the second follower tray 152. The second sub-connecting member 1532 may be fixedly connected to the second follower tray 152. The second sub-connecting member 1532 may be movably connected to the first sub-connecting member 1531.

In some examples of the embodiments of the present disclosure, the first sub-connecting member 1531 is connected to the first follower tray 151, and the second sub-connecting member 1532 is connected to the second follower tray 152; and the first sub-connecting member 1531 and the second sub-connecting member 1532 are movably connected. In this way, it is convenient to connect the first sub-connecting member 1531 with the second sub-connecting member 1532 after the first follower tray 151 and the second follower tray 152 are mounted to the base 11.

In addition, the movably connected first sub-connecting member 1531 and second sub-connecting member 1532 may absorb and adapt to the possible non-parallel state between the first follower tray 151 and the second follower tray 152 by means of movement, so as to facilitate the synchronous movement of the first follower tray 151 and the second follower tray 152 relative to the base 11.

In some examples of the embodiments of the present disclosure, as shown in FIG. 10, the first sub-connecting member 1531 may be provided with a first shaft hole 15311. The second sub-connecting member 1532 may be provided with a second shaft hole 15321. A pin shaft may be inserted through the first shaft hole 15311 and the second shaft hole 15321 to enable the first sub-connecting member 1531 and the second sub-connecting member 1532 to be movably connected.

In some examples, the pin shaft 1533 may be fixedly connected to the first sub-connecting member 1531. For example, an external thread may be provided on the pin shaft 1533, an internal thread may be provided in the first shaft hole 15311, and the pin shaft 1533 may be fixedly connected to the first sub-connecting member 1531 through the threads. At this time, the pin shaft 1533 may be rotatably connected to the second sub-connecting member 1532. Thus, the first sub-connecting member 1531 and the second sub-connecting member 1532 are movably connected.

In some examples, the pin shaft 1533 may be fixedly connected to the second sub-connecting member 1532. In addition, the pin shaft 1533 may be rotatably connected to the first sub-connecting member 1531, thereby realizing the movable connection between the first sub-connecting member 1531 and the second sub-connecting member 1532.

In some examples, as shown in FIG. 10, the pin shaft 1533 may include a first shaft segment 15331. The first shaft segment 15331 may be inserted into the first shaft hole 15311.

In some examples, the first shaft segment 15331 may be movably inserted through the first shaft hole 15311, thereby enabling the pin shaft 1533 to rotate in the first shaft hole 15311.

In some examples, the pin shaft 1533 may include a second shaft segment 15332. The second shaft segment 15332 may be inserted into the second shaft hole 15321.

In some examples, the second shaft segment 15332 may be movably inserted through the second shaft hole 15321, thereby enabling the pin shaft 1533 to rotate in the second shaft hole 15321.

In some examples, when the first shaft segment 15331 is movably inserted through the first shaft hole 15311, the second shaft segment 15332 may be movably inserted through the second shaft hole 15321. Alternatively, the second shaft segment 15332 may be fixed in the second shaft hole 15321.

In some examples, when the first shaft segment 15331 is fixed in the first shaft hole 15311, the second shaft segment 15332 may be movably inserted through the second shaft hole 15321.

In some examples, a case that the second shaft segment 15332 is fixed in the second shaft hole 15321 is taken as a specific example for illustration. A diameter of the first shaft hole 15311 may be larger than a diameter of the second shaft hole 15321. The first shaft segment may be movably inserted through the first shaft hole 15311.

In some examples, the second shaft segment 15332 may be provided with an external thread, and the second shaft hole 15321 may be provided with an internal thread. The second shaft segment 15332 may be connected in the second shaft hole 15321 by the threads.

In the embodiments of the present disclosure, the diameter of the first shaft hole 15311 is set to be larger than the diameter of the second shaft hole 15321; after the second shaft segment 15332 is threadedly connected in the second shaft hole 15321, a certain gap is provided between an outer wall of the first shaft segment 15331 of the pin shaft 1533 and a hole wall of the first shaft hole 15311, so that the first sub-connecting member 1531 and the second sub-connecting member 1532 have a certain movement gap along a radial direction of the pin shaft 1533. That is, the first follower tray 151 and the second follower tray 152 have a certain movement gap in an arrangement direction thereof, which may address the sticking of the first follower tray 151 and the second follower tray 152 caused by the non-parallel arrangement, so as to facilitate the smooth and synchronous movement of the first follower tray 151 and the second follower tray 152.

In addition, since the diameter of the first shaft hole 15311 is larger than the diameter of the second shaft hole 15321, after the second shaft segment 15332 is threadedly connected in the second shaft hole 15321, in an arrangement direction of the first follower tray 151, the second follower tray 152 and the base 11, there is also a certain gap between an inner wall of the first shaft hole 15311 and a peripheral wall of the first shaft segment 15331, which may address the sticking caused by the unevenness of the base 11 or the guide rail, thereby facilitating the smooth and synchronous movement of the first follower tray 151 and the second follower tray 152.

In some examples, the diameter of the first shaft segment 15331 may be larger than the diameter of the second shaft segment, and the diameter of the first shaft hole 15311 may be larger than the diameter of the first shaft segment.

In some examples, as shown in FIG. 10, the pin shaft 1533 may include a locking segment 15333. The locking segment 15333 may be located at an end of the first shaft segment 15331 facing away from the second shaft segment 15332. A diameter of the locking segment 15333 may be greater than the diameter of the first shaft hole 15311.

In some examples, the locking segment 15333 may be configured to lock the first sub-connecting member 1531 and the second sub-connecting member 1532 along an axial direction of the pin shaft 1533. In this way, the first sub-connecting member 1531 and the second sub-connecting member 1532 may be prevented from being separated along the axial direction of the pin shaft 1533. It is convenient for the connecting member 153 to drive the first follower tray 151 and the second follower tray 152 to move synchronously relative to the base 11.

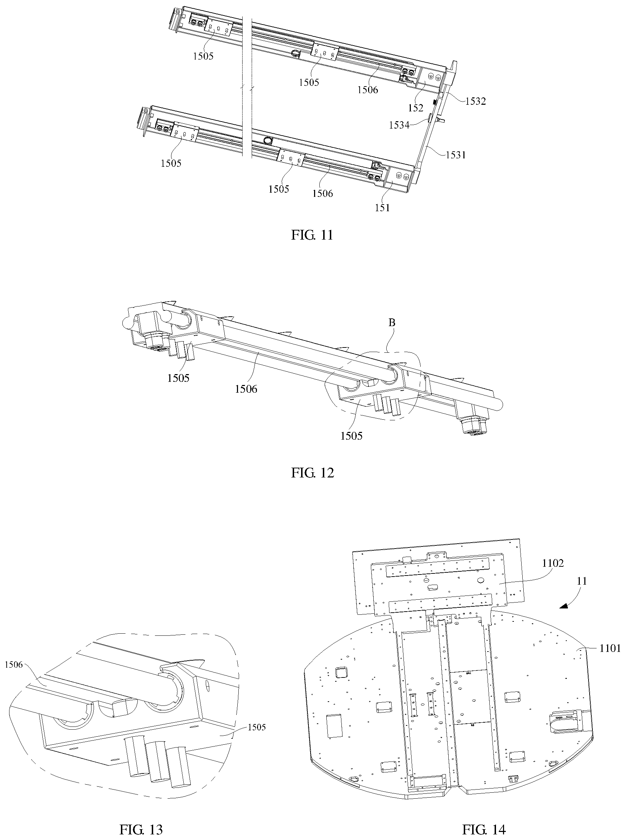

FIG. 11 is a schematic view showing fit between a first follower tray, a second follower tray, a first sliding assembly and a second sliding assembly according to an embodiment of the present disclosure. FIG. 12 is a schematic view of any one of a first sliding assembly and a second sliding assembly in a pick-and-place mechanism according to an embodiment of the present disclosure. FIG. 13 is a partial enlarged view of part B in FIG. 12.

In some examples, as shown in FIGS. 11 to 13, a first sliding assembly may be arranged on the base 11. The first follower tray 151 may be arranged on the first sliding assembly, so that the first follower tray 151 is slidably arranged on the base 11.

In some examples, as shown in FIGS. 11 to 13, a second sliding assembly may be arranged on the base 11. The second follower tray 152 may be arranged on the second sliding assembly, so that the second follower tray 152 is slidably arranged on the base 11.

In some examples, any one of the first sliding assembly and the second sliding assembly may include a second guide rail 1506 and a second slider 1505. For ease of description, in some examples of the embodiments of the present disclosure, the first sliding assembly is taken as a specific example for illustration.

In some examples of the embodiments of the present disclosure, one of the second guide rail 1506 and the second slider 1505 may be arranged on a side of the first follower tray 151 facing the base 11. For example, the second guide rail 1506 may be fixedly connected to the first follower tray 151. In addition, the other of the second guide rail 1506 and the second slider 1505 may be arranged on the base 11, and the second slider 1505 may be slidably connected to the second guide rail 1506. In a specific example, the second slider 1505 may be fixed to the base 11, and the second guide rail 1506 may slide relative to the second slider 1505 when moving together with the first follower tray 151.

In some optional examples, the second guide rail 1506 may be fixed on the base 11, and the second slider 1505 may be arranged on the first follower tray 151, so that the first follower tray 151 moves along a direction of the second guide rail 1506. In this way, the stability of the first follower tray 151 sliding relative to the base 11 may be effectively improved.

In an optional example of the embodiments of the present disclosure, two second sliders 1505 may be arranged, and the two second sliders 1505 are arranged side by side along an extension direction of the first follower tray 151. In this way, the stability of the movement of the first follower tray 151 may be effectively improved.

In some examples, as shown in FIGS. 12 and 13, the second guide rail 1506 may have two guide posts, and the two guide posts may be arranged side by side. The second slider 1505 may be sleeved on the two guide posts.

In some examples, two guide holes arranged side by side may be provided in the second slider 1505, and the guide posts are inserted through the guide holes, so that the second guide rail 1506 may slide in the guide holes along an extension direction.

In some examples, as shown in FIG. 13, a bushing may be arranged between the guide hole and the guide post. The bushing may be in contact with a peripheral wall of the guide post, and the bushing may be located on an inner wall of the guide hole.

In some examples, the bushing may be an engineering plastic piece. Using the engineering plastic piece to make the bushing may reduce the friction between the second slider 1505 and the second guide rail 1506, and the engineering plastic piece has the characteristics of hardness and wear resistance, which may improve the sliding performance between the second slider 1505 and the second guide rail 1506.

In some examples, during the process of the extension and retraction structure 12 retracting into the base 11, the extension and retraction structure 12 may be configured to be fitted with the connecting member 153 to drive the first follower tray 151 and the second follower tray 152 to retract into the base 11.

That is, during the process of the extension and retraction structure 12 retracting into the base 11, the extension and retraction structure 12 may apply a force to the connecting member 153, and the connecting member 153 may serve as a force-bearing portion for the first follower tray 151 and the second follower tray 152 to withstand the force applied by the extension and retraction structure 12, so that the extension and retraction structure 12 may simultaneously drive the first follower tray 151 and the second follower tray 152 to retract into the base 11 through the connecting member 153.

In some examples of the embodiments of the present disclosure, the extension and retraction structure 12 may be fitted with the connecting member 153, so that during the process that the extension and retraction structure 12 retracts into the base 11, the first follower tray 151 and the second follower tray 152 may be driven by the connecting member 153 to retract into the base 11. In this way, the power for the extension and retraction structure 12 to retract into the base 11 may be used, and there is no need to set a separate power source for the first follower tray 151 and the second follower tray 152 to retract into the base 11, which simplifies the structure for the first follower tray 151 and the second follower tray 152 to retract into the base 11 and reduces energy consumption.

FIG. 14 is a schematic view of a base in a pick-and-place mechanism according to an embodiment of the present disclosure.

As shown in FIG. 14, in some examples of the embodiments of the present disclosure, to facilitate the mounting of the scissor structure (i.e., the extension and retraction structure 12), the base 11 may include a bottom plate 1101 and a first mounting plate 1102, the first mounting plate 1102 may be arranged above the bottom plate 1101 and be perpendicular or approximately perpendicular to a surface of the bottom plate 1101. In some examples, the first mounting plate 1102 may be integrally formed with the bottom plate. Of course, in some other examples, the first mounting plate 1102 may also be fixed to the bottom plate 1101 by connecting pieces such as bolts, screws, or studs.

Referring to FIGS. 1 and 2, in the embodiments of the present disclosure, the extension and retraction structure 12 may be connected to the first mounting plate 1102, and the free end of the extension and retraction structure 12 may move in a direction facing away from the first mounting plate 1102 when extending out of the base 11, and may move toward the first mounting plate 1102 when retracting into the base 11.

In the embodiments of the present disclosure, a scissor piece 12021 connected to the first mounting plate 1102 is referred to as a first scissor piece; and a scissor piece 12021 connected to the pick-up assembly 13 is referred to as a second scissor piece, and transmission rods 12022 corresponding to the second scissor piece are referred to as second transmission rods 12022.

In some examples, as shown in FIG. 2, a third guide rail 1104 may be arranged on the first mounting plate 1102, a third slider 1103 may be arranged at ends of two transmission rods 12022 of the first scissor piece, and the third slider 1103 is slidably connected to the third guide rail 1104. It may be understood that, in the embodiments of the present disclosure, when the two pivotally connected transmission rods 12022 in the scissor piece 12021 cross with each other and rotate relative to each other, the third sliders 1103 move toward or away from each other on the third guide rail 1104. In addition, in order to ensure that the two pivotally connected transmission rods 12022 may cross with each other and rotate relative to each other normally, in the embodiments of the present disclosure, the third slider 1103 is rotatably connected to the transmission rod 12022, where a rotation shaft of the third slider 1103 and the transmission rod 12022 is parallel or approximately parallel to a rotation shaft of the two transmission rods 12022 pivotally connected.

It may be understood that, in the embodiments of the present disclosure, the sliding connection manner between the second scissor piece and the pick-up assembly 13 may be the same as or similar to the sliding connection manner between the first scissor piece and the first mounting plate 1102. For details, reference may be made to the detailed description of the sliding connection manner between the first scissor piece and the first mounting plate 1102 in the aforementioned embodiments of the present disclosure, which are not repeated in the embodiments of the present disclosure.

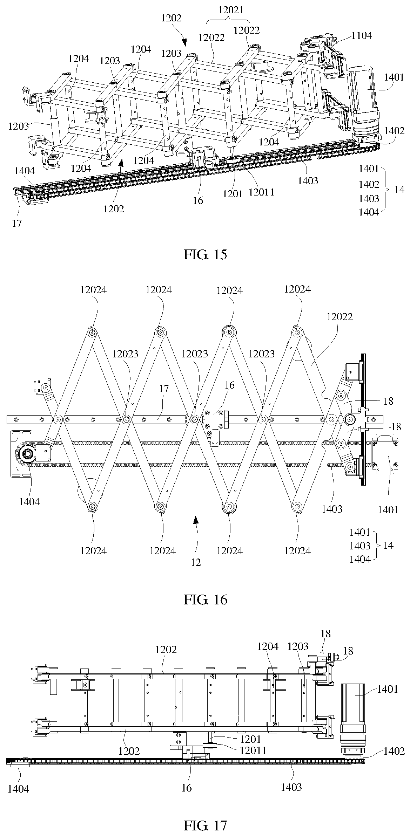

FIG. 15 is a schematic view showing fit between a driving structure and an extension and retraction structure in a pick-and-place mechanism according to an embodiment of the present disclosure.

As shown in FIG. 15, in some optional examples of the embodiments of the present disclosure, the driving structure 14 includes a first driving member 1401 and a transmission member, the first driving member 1401 is connected to the transmission member, one of a plurality of first hinge joints 12023 is configured as a power hinge joint, the power hinge joint is connected to the transmission member, and when the first driving member 1401 drives the transmission member to move relative to the base 11, the transmission member drives the extension and retraction structure 12 to extend from or retract into the base 11 through the power hinge joint.

Generally, the extension and retraction structure 12 may have a plurality of scissor pieces 12021. For example, five scissor pieces 12021 are shown in FIG. 15. Of course, four or six scissor pieces 12021 may also be provided. It may be understood that each scissor piece 12021 has one corresponding first hinge joint 12023. In the embodiments of the present disclosure, any one of the plurality of first hinge joints 12023 may serve as the power hinge joint to be connected to the transmission member, so that it is convenient for the first driving member 1401 to drive the power hinge joint through the transmission member. For example, as shown in FIG. 3, when the first driving member 1401 drives the transmission member along the negative direction of the y-axis in FIG. 3, the transmission member drives the power hinge joint to move away from the first mounting plate 1102, so that the size of the scissor structure along the width direction (for example, the direction indicated by the x-axis in FIG. 3) is reduced, and the size of the scissor structure along the length direction (for example, the direction indicated by the y-axis in FIG. 3) is increased.

It may be understood that when the first driving member 1401 drives the power hinge joint to move in an opposite direction through the transmission member, the free end of the extension and retraction structure 12 retracts into the base 11.

FIG. 16 is a top view showing fit between a first driving member, an extension and retraction structure and a first guide rail in a pick-and-place mechanism according to an embodiment of the present disclosure. FIG. 17 is a side view showing fit between a first driving member, an extension and retraction structure and a first guide rail in a pick-and-place mechanism according to an embodiment of the present disclosure.

In some optional examples of the embodiments of the present disclosure, as shown in FIGS. 5, 16 and 17, the pick-and-place mechanism 1 further includes a first slider 16 and a first guide rail 17, the first slider 16 is connected to the power hinge joint, the first guide rail 17 is arranged on the base 11, and the first slider 16 is slidably arranged on the first guide rail 17.

In the embodiments of the present disclosure, the first guide rail 17 is arranged on the base 11, and the extension and retraction structure 12 is provided with the power hinge joint to be connected to the first slider 16. The first guide rail 17 may specifically extend along the extension and retraction direction of the extension and retraction structure 12, that is, an extension direction of the first guide rail 17 is consistent with the extension and retraction direction of the extension and retraction structure 12, and the first slider 16 specifically may slide along the first guide rail 17.

It may be understood that, in some examples, the first slider 16 may also be arranged at another first hinge joint 12023 other than the power hinge joint. In the embodiments of the present disclosure, the first slider 16 is connected to the power hinge joint, as a specific example. It may be understood that, in the embodiments of the present disclosure, when the follower tray 15 is an integral structure, a connection portion of the first slider 16 and the power hinge joint may be inserted through the avoidance groove of the follower tray 15.

In some examples, as shown in FIG. 7, a plurality of the first guide rails 17 may be arranged. In the embodiments of the present disclosure, two first guide rails 17 are arranged, as an example. The two first guide rails 17 may be arranged side by side on the base 11.

In some examples of the embodiments of the present disclosure, the two first guide rails 17 are arranged side by side on the base 11, so that two first sliders 16 may be slidably connected to the two first guide rails 17. It may be understood that two points determine a straight line, so that an extension member 12025 or the power hinge joint may move relative to the base 11 along a straight line, so as to improve the stability of the extension and retraction of the extension and retraction structure 12 relative to the base 11, thereby improving the stability of the movement of the target object.

In the embodiments of the present disclosure, the first guide rail 17 extending along a first direction is arranged on the base 11, and the first slider 16 is arranged on the extension and retraction structure 12. When the extension and retraction structure 12 extends or retracts, the first slider 16 slides on the first guide rail 17. In this way, the fit between the first slider 16 and the first guide rail 17 may play a certain guiding and limiting role in the extension and retraction direction of the extension and retraction structure 12, thereby ensuring the stability of the extension and retraction of the extension and retraction structure 12.

In an optional example, along the extension and retraction direction of the extension and retraction structure 12, a moving distance of the power hinge joint is less than a length of the first guide rail 17. For example, as shown in FIG. 16, the power hinge joint may be the first hinge joint 12023 on a side adjacent to the first mounting plate 1102. With the first mounting plate 1102 as a position reference, from the first mounting plate 1102 to the outside of the base 11, the power hinge joint may be any one of a No. 1 first hinge joint 12023, a No. 2 first hinge joint 12023 or a No. 3 first hinge joint 12023. In FIG. 16, the No. 3 first hinge joint 12023 serves as the power hinge joint, as a specific example. That is, in the embodiments of the present disclosure, when the free end of the extension and retraction structure extends to a maximum extension position, a maximum movement position of the No. 3 first hinge joint 12023 along the first guide rail 17 is within a length range of the first guide rail 17. In this way, it may be ensured that the first slider 16 is always on the first guide rail 17, and plays a guiding and stabilizing role in the extension and retraction of the extension and retraction structure 12, thereby improving the stability of the extension and retraction of the extension and retraction structure 12.

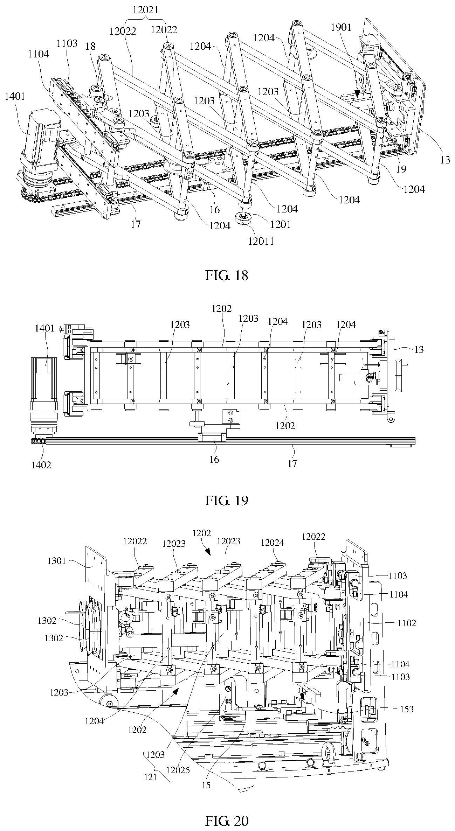

FIG. 18 is an overall schematic view showing fit between a first driving member, an extension and retraction structure and a first guide rail in a pick-and-place mechanism according to an embodiment of the present disclosure. FIG. 19 is another side view showing fit between a first driving member, an extension and retraction structure and a first guide rail in a pick-and-place mechanism according to an embodiment of the present disclosure.

In some optional examples of the embodiments of the present disclosure, as shown in FIGS. 18 and 19, the scissor structure includes two sets of scissor units 1202 arranged opposite to each other, one or more first connecting rods 1203 and one or more second connecting rods 1204; the one or more first connecting rods 1203 are connected between the first hinge joints 12023 of the two sets of scissor units 1202, and the one or more second connecting rods 1204 are connected between the second hinge joints 12024 of the two sets of scissor units 1202.

In the embodiments of the present disclosure, each set of scissor units 1202 may include a plurality of scissor pieces 12021 connected in sequence. Referring to FIGS. 2 and 19, in the embodiments of the present disclosure, the two sets of scissor units 1202 are arranged in a direction perpendicular to or approximately perpendicular to a surface of the base 11. That is, in the embodiments of the present disclosure, one of the two sets of scissor units 1202 is located between the other set of scissor units 1202 and the base 11, and the two sets of scissor units 1202 are stacked in parallel above the base 11.

As shown in FIGS. 18 and 19, the two sets of scissor units 1202 are connected at the middle hinge joints by the first connecting rods 1203 and at the side hinge joints by the second connecting rods 1204.

As an optional example, during the arrangement, a middle shaft hole may be formed in the middle of the transmission rod 12022, and the first connecting rod 1203 passes through the middle shaft hole and is rotatably connected to the transmission rod 12022. That is, the two transmission rods 12022 are pivotally connected through the first connecting rod 1203 to form the scissor piece 12021, one of the two scissor pieces 12021 is connected to one end of the first connecting rod 1203, and the other of the two scissor pieces 12021 is connected to the other end of the first connecting rod 1203.

In some examples, the connection manner between the second connecting rod 1204 and the transmission rod 12022 is the same as or similar to the connection manner between the first connecting rod 1203 and the transmission rod 12022. For details, reference may be made to the detailed description of the first connecting rod 1203 in the previous embodiments of the present disclosure, which are not repeated in the embodiments of the present disclosure.

For example, referring to FIG. 19, in the embodiments of the present disclosure, the first slider 16 may be connected to the scissor unit 1202 adjacent to the base 11. In this way, a length that the first slider 16 needs to extend may be reduced, a torque on the first slider 16 may be reduced, and the stability of the first slider 16 moving under the drive of the transmission belt 1403 may be improved.

In the embodiments of the present disclosure, the first hinge joints 12023 of the two sets of scissor units 1202 are connected by the first connecting rods 1203, and the second hinge joints 12024 of the two sets of scissor units 1202 are connected by the second connecting rods 1204. In this way, the two sets of scissor units 1202 are connected to form an integral extension and retraction structure 12, so that the stability of the extension and retraction structure 12 during extension and retraction may be improved.

In some other optional examples of the embodiments of the present disclosure, as also shown in FIG. 18, the pick-and-place mechanism 1 further includes a limiting link 18, and the limiting link 18 is connected between the base 11 and the extension and retraction structure 12 to limit the translation of the extension and retraction structure 12 relative to the base 11.

As shown in FIG. 18, in some examples of the embodiments of the present disclosure, one end of the limiting link 18 is rotatably connected to the first mounting plate 1102, and the other end of the limiting link 18 is rotatably connected to the transmission rod 12022. In this way, when the transmission rod 12022 rotates to extend or retract the extension and retraction structure 12, the limiting link 18 may rotate along with the transmission rod 12022, and when the extension and retraction structure 12 translates, the limiting link 18 may limit the translation of the extension and retraction structure 12.

It is to be noted here that there is a first rotation axis between the limiting link 18 and the first mounting plate 1102, and there is a second rotation axis between the limiting link 18 and the transmission rod 12022, where the first rotation axis is parallel or approximately parallel to the second rotation axis. In addition, the first rotation axis, the second rotation axis and a rotation axis between the two transmission rods 12022 are parallel or approximately parallel.

In some examples, as also shown in FIG. 18, two limiting links 18 may be arranged, one of the two limiting links 18 is rotatably connected to one of the transmission rods 12022 of the scissor piece 12021, and the other of the two limiting links 18 is rotatably connected to the other of the transmission rods 12022 of the scissor piece 12021; and the two limiting links 18 are rotatably connected to the first mounting plate 1102. During specific arrangement, the rotation shafts of the two limiting links 18 and the first mounting plate 1102 may be the same rotation shaft. In other words, the two limiting links 18 rotate around the same rotation point on the first mounting plate 1102. In this way, the two limiting links 18 and the two transmission members in one scissor piece 12021 connected to the base 11 form a parallelogram structure (or, in some examples, it may also be called a four-link structure). In this way, since the rotation point of the two limiting links 18 on the first mounting plate 1102 is fixed, the translation of the extension and retraction structure 12 on the first mounting plate 1102 is limited.

In some optional examples of the embodiments of the present disclosure, the limiting link 18 may also be connected between the extension and retraction structure 12 and the pick-up assembly 13 to limit the translation of the extension and retraction structure 12 relative to the pick-up assembly 13.

It may be understood that, for the connection manner between the limiting link 18 and the pick-up assembly 13, reference may be made to the connection manner between the limiting link 18 and the first mounting plate 1102 in the aforementioned embodiments of the present disclosure, which will not be repeated in the embodiments of the present disclosure.

In some examples, the limiting link 18 is located on a side of the extension and retraction structure 12 facing away from the base 11. That is, as shown in FIGS. 2 and 19, the limiting link 18 may be connected to an upper side of the extension and retraction structure 12. In this way, interference between the limiting link 18 and the first connecting rod 1203 may be avoided, and the extension and retraction distance and space of the extension and retraction structure 12 are improved.

In some other optional examples of the embodiments of the present disclosure, as also shown in FIG. 18, the pick-and-place mechanism 1 further includes a first limiting member 19, the first limiting member 19 has a limiting groove 1901; the first limiting member 19 is arranged on the base 11, and the first connecting rod 1203 located at a fixed end of the scissor structure is inserted through the limiting groove 1901, and the first connecting rod 1203 may move along the limiting groove 1901.

In some examples, the first limiting member 19 may include two extension parts relatively fixed on the first mounting plate 1102, and the limiting groove 1901 is formed between the two extension parts. During specific arrangement, the first connecting rod 1203 between the two scissor pieces 12021 is inserted through the limiting groove 1901, so that the first connecting rod 1203 moves along the limiting groove 1901 during the extension and retraction movement of the extension and retraction structure 12.

That is, in the embodiments of the present disclosure, an extension direction of the limiting groove 1901 may be specifically consistent with the extension and retraction direction. For example, the extension direction of the limiting groove 1901 is parallel or approximately parallel to the extension and retraction direction.

In some optional examples, a length by which the limiting groove 1901 extends along the extension and retraction direction may be greater than or equal to a distance by which the two middle connecting shafts may move relative to the base 11 along the extension and retraction direction. In this way, it may be ensured that the first connecting rod 1203 is always limited in the limiting groove 1901, and the first connecting rod 1203 may be prevented from escaping from the limiting groove 1901, thereby improving the stability of the limiting between the extension and retraction structure 12 and the base 11.

In some optional examples, the first limiting member 19 may also be arranged on the pick-up assembly 13, one first connecting rod 1203 located at the free end of the scissor structure is inserted through the limiting groove 1901, and the first connecting rod 1203 may move along the limiting groove 1901.

It may be understood that the manner in which the first limiting member 19 is arranged on the pick-up assembly 13 may be the same as or similar to the manner in which the first limiting member 19 is arranged on the base 11. For details, reference may be made to the detailed description of the aforementioned embodiments of the present disclosure, which will not be repeated in the embodiments of the present disclosure. In the drawings of the specification of the present disclosure, the first limiting member 19 is arranged on the pick-up assembly 13, as a specific example.

In some other optional examples, as shown in FIG. 18, the limiting link 18 may be arranged on one of the first mounting plate 1102 and the pick-up assembly 13, and the first limiting member 19 may be arranged on the other of the first mounting plate 1102 and the pick-up assembly 13.

FIG. 9 is a schematic view of an extension and retraction structure in a pick-and-place mechanism according to an embodiment of the present disclosure.

In some examples of the embodiments of the present disclosure, as shown in FIG. 20, in order to facilitate the extension and retraction structure 12 to be fitted with the connecting member 153, and drive the first follower tray 151 and the second follower tray 152 to retract into the base 11 through the connecting member 153, one of the plurality of first hinge joints 12023 may be configured as the power hinge joint. The power hinge joint may be fitted with the connecting member 153, so as to apply a force to the connecting member 153.

In some examples, as shown in FIG. 20, the connecting member 153 may be located between the extension and retraction structure 12 and the base 11. In order to facilitate the fit between the power hinge joint and the connecting member 153, as shown in FIG. 20, the power hinge joint may be provided with an extension member 12025. The extension member 12025 may be located between the extension and retraction structure 12 and the base 11. That is, the extension member 12025 may extend from the power hinge joint to the base 11. In some examples, the power piece 121 may include the extension member 12025.

It may be understood that an extension length of the extension member 12025 may exceed a side surface of the connecting member 153 facing away from the base 11, so that when the extension and retraction structure 12 retracts into the base 11, the extension member 12025 may interfere with the connecting member 153, so as to apply a force to the connecting member 153, thus driving the first follower tray 151 and the second follower tray 152 to retract into the base 11.

In some examples of the embodiments of the present disclosure, the extension member 12025 is arranged at the power hinge joint, and the extension member 12025 is located between the extension and retraction structure 12 and the base 11, so that the power hinge joint of the extension and retraction structure 12 may be fitted with the connecting piece 153 through the extension member 12025, which facilitates the extension and retraction structure 12 to apply the force to the connecting piece 153 when retracting into the base 11, and facilitates the extension and retraction structure 12 to drive the first follower tray 151 and the second follower tray 152 to retract into the base 11.

In some examples, in order to simplify the structural design, and facilitate the extension member 12025 to be fitted with the connecting member 153 and apply the force to the connecting member 153, the connecting member 153 may be located at a side of the extension member 12025 facing away from the access opening 1105. In this way, when the extension and retraction structure 12 retracts into the base 11, the extension member 12025 may approach the connecting member 153 and come into contact with the connecting member 153, thereby applying the force to the connecting member 153, so that the connecting member 153 drives the first follower tray 151 and the second follower tray 152 to retract into the base 11.

In some examples, in order to protect the connecting member 153 and reduce the noise and vibration of the pick-and-place mechanism 1, as shown in FIG. 8 and FIG. 9, a cushioning and shock-absorbing member 1534 may be arranged on at least one of the connecting member 153 and the extension member 12025.

In some examples, the cushioning and shock-absorbing member 1534 may be located between the connecting member 153 and the extension member 12025. The cushioning and shock-absorbing member 1534 may be configured to be arranged between the extension member 12025 and the connecting member 153 and abut against the extension member 12025 and the connecting member 153, when the extension member 12025 and the connecting member 153 are fitted.

In some examples, the cushioning and shock-absorbing member 1534 may be arranged on the extension member 12025. For example, the cushioning and shock-absorbing member 1534 may be a rubber sleeve, and the rubber sleeve may be sleeved on an outer periphery of the extension member 12025. In the process that the extension member 12025 moves toward the connecting member 153 and comes into contact with the connecting member 153, the rubber sleeve first comes into contact with the connecting member 153, so as to cushion the contact impact between the extension member 12025 and the connecting member 153, and absorb the impact caused by the extension member 12025 on the connecting member 153, thereby protecting the connecting member 153.

In some examples, the cushioning and shock-absorbing member 1534 may be a silicone sleeve. Alternatively, in some examples, the cushioning and shock-absorbing member 1534 may be a sponge sleeve.

In some examples, the cushioning and shock-absorbing member 1534 may be arranged on the connecting member 153. For example, the cushioning and shock-absorbing member 1534 may be any one of a rubber sleeve, a silicone sleeve or a sponge sleeve. The cushioning and shock-absorbing member 1534 may be sleeved on the portion where the first sub-connecting member 1531 and the second sub-connecting member 1532 are connected to each other.

In some examples, the cushioning and shock-absorbing member 1534 may be a vibration-damping pad, and the vibration-damping pad may be arranged on a side of the connecting member 153 facing the extension member 12025. When the extension member 12025 moves toward the connecting member 153, the extension member 12025 first comes into contact with the vibration-damping pad, and the vibration-damping pad absorbs the impact caused by the extension member 12025 on the connecting member 153, thereby protecting the connecting member 153 and reducing the vibration and noise of the pick-and-place mechanism 1.

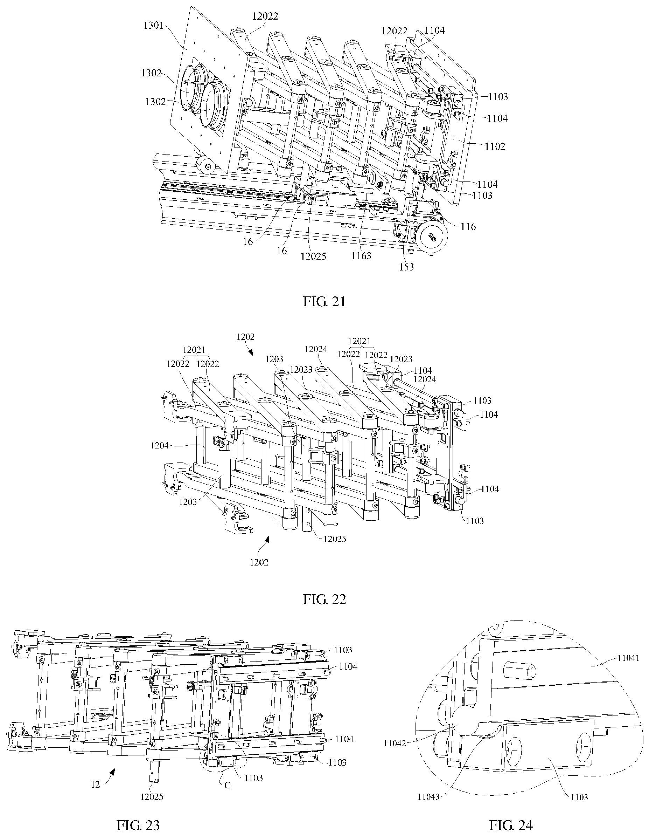

FIG. 21 is a schematic view showing fit between an extension and retraction structure and a driving structure in a pick-and-place mechanism according to an embodiment of the present disclosure.

In some examples, as shown in FIG. 21, the first slider 16 may be configured to be connected to the extension member 12025.

FIG. 22 is a schematic view showing fit between an extension and retraction structure and a third guide rail in a pick-and-place mechanism according to an embodiment of the present disclosure. FIG. 23 is another schematic view showing fit between an extension and retraction structure and a third guide rail in a pick-and-place mechanism according to an embodiment of the present disclosure. FIG. 24 is a partial enlarged view of part C in FIG. 23.

In some examples, the third guide rail 1104 may be arranged on the first mounting plate 1102, the third slider 1103 may be arranged at the ends of the two transmission rods 12022 of the first scissor piece 12021, and the third slider 1103 is slidably connected to the third guide rail 1104. It may be understood that, in the embodiments of the present disclosure, when the two pivotally connected transmission rods 12022 in the scissor piece 12021 cross with each other and rotate relative to each other, the third sliders 1103 move toward or away from each other on the third guide rail 1104. In addition, in order to ensure that the two pivotally connected transmission rods 12022 may cross with each other and rotate relative to each other normally, in the embodiments of the present disclosure, the third slider 1103 is rotatably connected to the transmission rod 12022, where the rotation shaft of the third slider 1103 and the transmission rod 12022 is parallel or approximately parallel to the rotation shaft of the two transmission rods 12022 pivotally connected.

In some examples, as shown in FIGS. 20-23, the third guide rail 1104 may include a first fixing portion 11041 and a first guide portion 11042.

In some examples, the first fixing portion 11041 may be fixedly connected to the first mounting plate 1102. For example, the first fixing portion 11041 may be fixed to the first mounting plate 1102 by means of screws, bolts, or threaded rods.

In some examples, the first guide portion 11042 may be located on a side of the first fixing portion 11041. The first guide portion 11042 may be located on the side of the first fixing portion 11041 along an extension direction of the first fixing portion 11041. The first guide portion 11042 may be fixedly connected to the first fixing portion 11041, so as to fix the first guide portion 11042 on the first mounting plate 1102.

In some examples, the first guide portion 11042 and the first fixing portion 11041 may be an integral piece. The first guide portion 11042 may be a guide post.

In some examples, the third slider 1103 may be fitted over an outer periphery of the first guide portion 11042. For example, a guide hole may be formed in the third slider 1103, and the first guide portion 11042 is inserted through the guide hole, so that the third slider 1103 is fitted over the outer periphery of the first guide portion 11042.

In the embodiments of the present disclosure, the third guide rail 1104 includes the first fixing portion 11041 and the first guide portion 11042, and the first fixing portion 11041 is fixedly connected to the first mounting plate 1102. Thus, it is convenient to mount and fix the third guide rail 1104 on the first mounting plate 1102. Since the third slider 1103 is fitted over the outer periphery of the first guide portion 11042, it is convenient for the third slider 1103 to slide along the first guide portion 11042, and it is convenient to guide a sliding direction of the third slider 1103, thereby improving the stability of the extension and retraction of the extension and retraction structure 12.

In some examples, as shown in FIG. 23 and FIG. 24, a first bushing 11043 may be arranged between the first guide portion 11042 and the third slider 1103.

In some examples, the first bushing 11043 may be fitted over the outer periphery of the first guide portion 11042, and the third slider 1103 may be fitted over an outer periphery of the first bushing 11043.

In some examples, the first bushing 11043 may be arranged in the third slider 1103, and after the third slider 1103 is fitted over the first guide portion 11042, the first bushing 11043 is located between the first guide portion 11042 and the third slider 1103.

In some examples, the third slider 1103 may include an engineering plastic piece.

In some examples of the embodiments of the present disclosure, the first bushing 11043 is arranged between the first guide portion 11042 and the third slider 1103, and the first bushing 11043 includes the engineering plastic piece. In this way, the friction between the first guide portion 11042 and the third slider 1103 may be reduced, the smoothness of the sliding between the first guide portion 11042 and the third slider 1103 may be improved, and the stability of the extension and retraction of the extension and retraction structure 12 may be improved.

In some examples, in order to improve the stability of the extension and retraction of the extension and retraction structure 12, as shown in FIGS. 20 to 22, the scissor structure includes two sets of scissor units 1202 arranged opposite to each other, one or more first connecting rods 1203 and one or more second connecting rods 1204; the one or more first connecting rods 1203 are connected between the first hinge joints 12023 of the two sets of scissor units 1202, and the one or more second connecting rods 1204 are connected between the second hinge joints 12024 of the two sets of scissor units 1202. In some examples, the power piece 121 of the extension and retraction structure 12 may include one of the one or more first connecting rods 1203 and an extension member 12025. The extension member 12025 may be connected to the one of the one or more first connecting rods 1203.

In the embodiment of the present disclosure, each set of scissor units 1202 may include a plurality of scissor pieces 12021 connected in sequence. Referring to FIGS. 20 to 22, in the embodiments of the present disclosure, the two sets of scissor units 1202 are arranged in a direction perpendicular to or approximately perpendicular to a surface of the base 11. That is, in the embodiments of the present disclosure, one of the two sets of scissor units 1202 is located between the other set of scissor units 1202 and the base 11, and the two sets of scissor units 1202 are stacked in parallel above the base 11.

Referring to FIGS. 20 to 22, the two sets of scissor units 1202 are connected at the middle hinge joints by the first connecting rods 1203 and at the side hinge joints by the second connecting rods 1204.

As an optional example, during the arrangement, a middle shaft hole may be formed in the middle of the transmission rod 12022, and the first connecting rod 1203 passes through the middle shaft hole and is rotatably connected to the transmission rod 12022. That is, the two transmission rods 12022 are pivotally connected through the first connecting rod 1203 to form the scissor piece 12021, one of the two scissor pieces 12021 is connected to one end of the first connecting rod 1203, and the other of the two scissor pieces 12021 is connected to the other end of the first connecting rod 1203.

In some examples, the connection manner between the second connecting rod 1204 and the transmission rod 12022 is the same as or similar to the connection manner between the first connecting rod 1203 and the transmission rod 12022. For details, reference may be made to the detailed description of the first connecting rod 1203 in the previous embodiments of the present disclosure, which will not be repeated in the embodiments of the present disclosure.

For example, referring to FIG. 20, in the embodiments of the present disclosure, the first slider 16 may be connected to the scissor unit 1202 adjacent to the base 11. In this way, a length that the first slider 16 needs to extend may be reduced, a torque on the first slider 16 may be reduced, and the stability of the first slider 16 moving under the drive of the transmission belt 1403 may be improved.

In the embodiments of the present disclosure, the first hinge joints 12023 of the two sets of scissor units 1202 are connected by the first connecting rods 1203, and the second hinge joints 12024 of the two sets of scissor units 1202 are connected by the second connecting rods 1204. In this way, the two sets of scissor units 1202 are connected to form an integral extension and retraction structure 12, so that the stability of the extension and retraction structure 12 during extension and retraction may be improved.

In some examples, as shown in FIGS. 20 to 22, two third guide rails 1104 may be arranged. The two third guide rails 1104 may be arranged side by side on the first mounting plate 1102.

In some examples, two first guide rails 17 may be arranged side by side in a longitudinal direction on the mounting plate. The two third guide rails 1104 may extend in a horizontal direction, one of the two third guide rails 1104 may be connected to one of the first scissor pieces, and the other third guide rail 1104 may be connected to the other first scissor piece.

In some examples, as shown in FIG. 21 and FIG. 22, the first guide portions 11042 of the two third guide rails 1104 may be arranged to face away from each other. That is, the first guide portions 11042 of the two third guide rails 1104 are respectively located on sides away from each other of the two third guide rails 1104. In this way, after the first scissor pieces of the two sets of scissor units 1202 are connected to the third guide rails 1104, the projection area of the extension and retraction structure 12 on the first mounting plate 1102 may be increased, thereby improving the mounting stability of the extension and retraction structure 12, i.e., improving the stability of the extension and retraction of the extension and retraction structure 12.

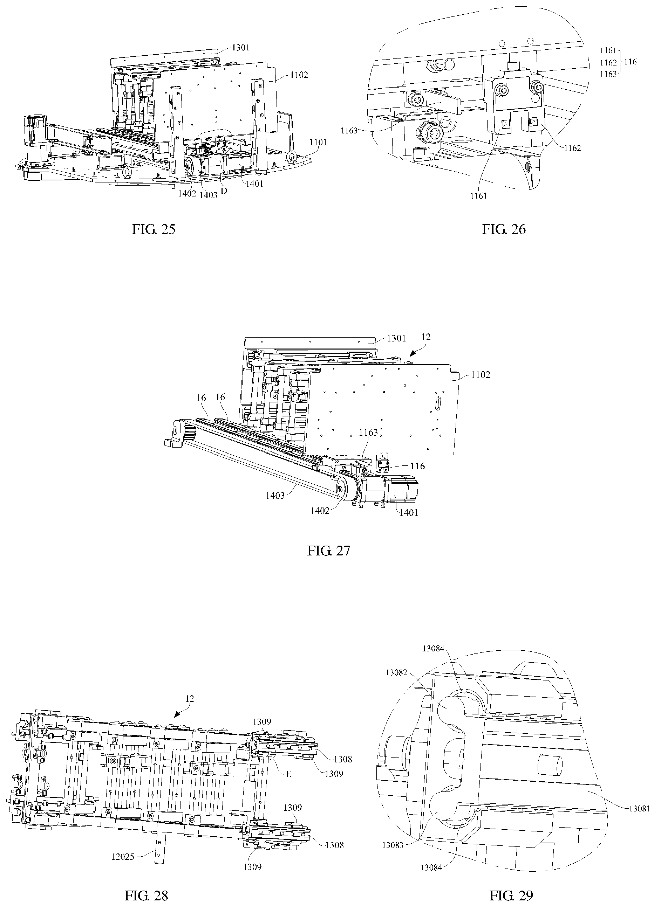

FIG. 25 is another schematic view showing fit between an extension and retraction structure and a first mounting plate in a pick-and-place mechanism according to an embodiment of the present disclosure. FIG. 26 is a partial enlarged view of part D in FIG. 25. FIG. 27 is another schematic view showing fit between an extension and retraction structure and a first mounting plate in a pick-and-place mechanism according to an embodiment of the present disclosure.

In some examples, as shown in FIGS. 25 to 27, a first sensor 116 is further arranged on the base 11, and the first sensor 116 may be used to detect a position of the pick-up assembly 13. That is, in the embodiments of the present disclosure, when the pick-up assembly 13 is at an initial position, the first sensor 116 is triggered and generates a first trigger signal; and a controller 114 (as shown in FIG. 1) may determine that the pick-up assembly 13 is at the initial position according to the first trigger signal. As a specific example, the first sensor 116 may be a contact switch or a magnetic switch.

In the embodiments of the present disclosure, the first sensor 116 is used to detect whether the pick-up assembly 13 is at the initial position, so that it may be accurately determined whether the pick-up assembly 13 is moved into place when retracting, and thus it is convenient for the controller 114 to accurately control the stopping of the first driving member 1401. For example, the driving structure 14 may stop driving the extension member 12025 according to the first trigger signal.

In addition, since the first sensor 116 is used to detect whether the pick-up assembly 13 is at the initial position, it is also convenient to determine a distance that the pick-up assembly 13 needs to move toward the target goods location during the process of picking up or returning the target object.

For example, in some examples, a distance between the pick-up assembly 1313 and a front end of the base 11 may be determined. Generally, when the pick-up assembly 1313 is at the initial position, the distance between the pick-up assembly 1313 and the front end of the base 11 may be a determined distance (which may be called a second distance in some examples).

In some other examples, it is also possible to determine whether the pick-up assembly 13 is at the initial position through a zero position signal of a motor encoder of the driving structure 14, so as to determine the distance between the pick-up assembly 13 and the front end of the base 11. In addition, a moving distance of the pick-up assembly 13 may also be detected by a displacement sensor. For example, when the moving distance is detected to be zero, it may be determined that the pick-up assembly 13 is at the initial position.

In some examples, as shown in FIG. 26, the first sensor 116 may include a first signal transmitting portion 1161, a first signal receiving portion 1162, and a trigger member 1163.

In some examples, the first signal transmitting portion 1161 may be arranged on the base 11. For example, the first signal transmitting portion 1161 may be fixed relative to the base 11. Referring to FIG. 25 and FIG. 27, the first signal transmitting portion 1161 may be arranged on the first mounting plate 1102.

In some examples, the first signal receiving portion 1162 may be arranged on the base 11. The first signal receiving portion may be configured to receive a signal transmitted by the first signal transmitting portion 1161.

In some examples, the first sensor 116 may be a through-beam sensor. A certain gap may be reserved between the first signal transmitting portion 1161 and the first signal receiving portion 1162.

In some examples, the first sensor 116 may be a U-shaped sensor, and a gap may be formed between the first signal transmitting portion 1161 and the first signal receiving portion 1162.

In some examples, the trigger member 1163 may be movably arranged on the base 11. When the pick-up assembly 13 is located at the initial position on the base 11, the trigger member 1163 may be located between the first signal transmitting portion 1161 and the first signal receiving portion 1162, so that the first sensor 116 triggers the first trigger signal.

In some examples, the trigger member 1163 may be a signal shielding member. When the trigger member 1163 is located between the first signal transmitting portion 1161 and the first signal receiving portion 1162, the first signal receiving portion 1162 cannot receive the signal transmitted by the first signal transmitting portion 1161, so that the first sensor 116 triggers the first trigger signal.

In some examples of the embodiments of the present disclosure, when the pick-up assembly 13 is at the initial position, the trigger member 1163 is located between the first signal transmitting portion 1161 and the first signal receiving portion 1162, and the trigger member 1163 is used to physically change the signal transmission between the first signal transmitting portion 1161 and the first signal receiving portion 1162. This may improve the accuracy of determining the position of the pick-up assembly 13, avoid misjudgment of the position of the pick-up assembly 13, and improve the safety of the use of the transfer robot.

In some examples, as shown in FIG. 27, the trigger member 1163 may be fitted with the extension member 12025, and when the extension and retraction structure 12 moves relative to the base 11, the trigger member 1163 and the extension member 12025 move synchronously relative to the base 11.

In some examples, the trigger member 1163 may be connected to the extension member 12025. Alternatively, in some examples, the trigger member 1163 may be connected to a component that the extension member 12025 is directly connected to.

In some examples of the embodiments of the present disclosure, the trigger member 1163 is fitted with the extension member 12025, and the trigger member 1163 and the extension member 12025 move synchronously relative to the base 11. In this way, when the trigger member 1163 enters the gap between the first signal transmitting portion 1161 and the first signal receiving portion 1162, the driving structure may stop driving the extension member 12025 in time, so as to stop the movement of the trigger member 1163, thereby improving the accuracy of controlling the stop position of the pick-up assembly 13.

In some examples of the embodiments of the present disclosure, as shown in FIG. 6, the pick-up assembly 13 may include a second mounting plate 1301 and a second force-applying member 1302.

In some examples, the second mounting plate 1301 is arranged at the free end, and the second force-applying member 1302 is configured to apply a force to the front end surface of the target object to transfer the target object.

In some examples, for the convenience of description, the scissor piece 12021 connected to the pick-up assembly 13 is referred to as a second scissor piece. The second mounting plate 1301 may be movably arranged to the second scissor piece.

FIG. 28 is a schematic view showing fit between an extension and retraction structure and a fourth guide rail in a pick-and-place mechanism according to an embodiment of the present disclosure. FIG. 29 is a partial enlarged view of part E in FIG. 28.

In some examples, as shown in FIGS. 28 and 29, a fourth guide rail 1308 may be arranged on the second mounting plate 1301.

In some examples, the second scissor piece may include two transmission rods 12022. It may be understood that the second scissor piece may be arranged in the same or similar manner as the first scissor piece in the foregoing embodiments of the present disclosure, and for details, reference may be made to the description of the first scissor piece in the foregoing embodiments of the present disclosure, which will not be repeated in the embodiments of the present disclosure.

In some examples, the two transmission rods 12022 may be slidably arranged on the fourth guide rail 1308.

In some examples, the sliding arrangement of the fourth guide rail 1308 and the two transmission rods 12022 may be the same as or similar to the sliding arrangement of the third guide rail 1104 and the two transmission rods 12022 in the aforementioned embodiments of the present disclosure.

In some examples, as shown in FIG. 28, the fourth guide rail 1308 may include a second fixing portion 13081, a second guide portion 13082, and a third guide portion 13083.

In some examples, the second fixing portion 13081 may be fixedly connected to the second mounting plate 1301. The fixing connection manner of the second fixing portion 13081 and the second mounting plate 1301 may be the same as or similar to the connection manner of the first fixing portion 11041 and the first mounting plate 1102 in the aforementioned embodiments of the present disclosure.

In some examples, the second guide portion 13082 may be located on one side of the second fixing portion 13081. In some examples, the second guide portion 13082 may be arranged in the same or similar manner as the first guide portion 11042 in the aforementioned embodiments of the present disclosure.

In some examples, the third guide portion 13083 may be arranged side by side with the second guide portion 13082. The third guide portion 13083 may be arranged on the other side of the second fixing portion 13081. That is, the third guide portion 13083 and the second guide portion 13082 may be located on two opposite sides of the second fixing portion 13081.

In some examples, the structures of the third guide portion 13083 and the second guide portion 13082 and their connection manners with the second fixing portion 13081 may be the same as or similar to those of the first guide portion 11042 in the aforementioned embodiments of the present disclosure. For details, reference may be made to the detailed description of the first guide portion 11042 in the aforementioned embodiments of the present disclosure, which will not be repeated in the embodiments of the present disclosure.

In some examples, the transmission rod 12022 may be provided with a fourth slider 1309. The fourth slider 1309 may be fitted over the second guide portion 13082 and the third guide portion 13083. The fourth slider 1309 is rotatably connected to the transmission rod 12022.

In some examples, a second bushing 13084 may be arranged between the fourth slider 1309 and each of the second guide portion 13082 and the third guide portion 13083. The second bushing 13084 may include an engineering plastic piece.

In some examples, the arrangement of the second bushing 13084 may be the same as or similar to the arrangement of the first bushing 11043 in the aforementioned embodiments of the present disclosure. For details, reference may be made to the description of the first bushing 11043 in the aforementioned embodiments of the present disclosure, which will not be repeated in the embodiments of the present disclosure.

In some examples, two fourth guide rails 1308 may be arranged. The two fourth guide rails 1308 are arranged side by side on the second mounting plate 1301. It may be understood that the arrangement of the two fourth guide rails 1308 may be the same as or similar to the arrangement of the two third guide rails 1104, which will not be repeated in the embodiments of the present disclosure.

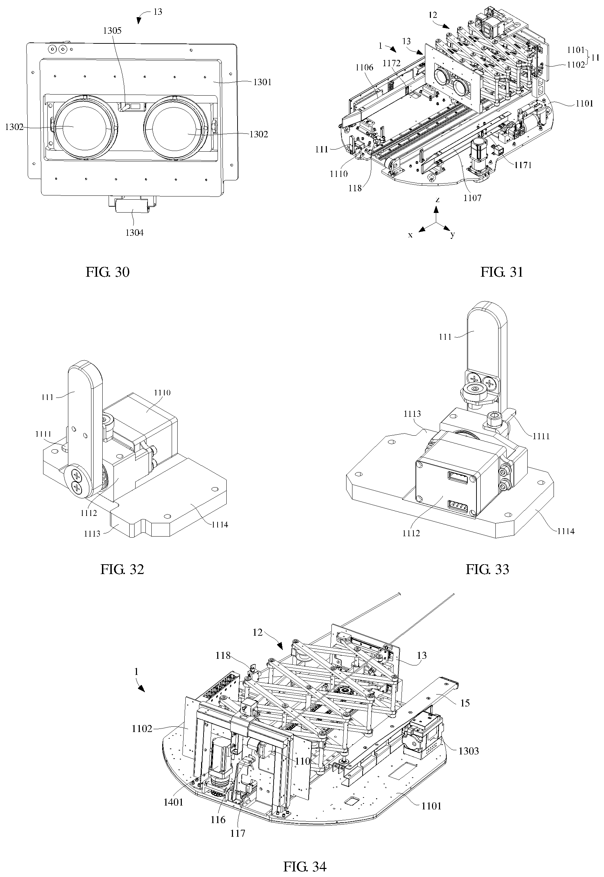

FIG. 30 is a schematic view of a pick-up assembly in a pick-and-place mechanism according to an embodiment of the present disclosure.

In some examples, the second force-applying member 1302 may be a component such as a magnetic attraction member or a hook described in the previous embodiments of the present disclosure.

In some examples, the second force-applying member 1302 may be a dual-axis clamping mechanism or a multi-axis clamping mechanism. A through hole may be formed in the front end surface of the target object for the clamping mechanism to be inserted through. When picking up or returning the target object, the clamping mechanism may be controlled to be in a clamped state and inserted into the through hole. Then, the clamping mechanism may be opened so that an outer wall of the clamping mechanism is in contact with an inner wall of the through hole, and the target object may be transferred by the friction force between the outer wall of the clamping mechanism and the inner wall of the through hole. It may be understood that in some possible examples, a barb may be arranged on the outer wall of the clamping mechanism, so that the barb may be hooked on an edge of a hole of the target object, thereby ensuring that the clamping mechanism may provide a sufficient force on the target object.

In some examples of the embodiments of the present disclosure, the second force-applying member 1302 may include a suction member. Referring to FIG. 6, the base 11 may be provided with a suction control component, the suction control component is connected to the suction member, and the suction control component is configured to control the suction member to apply a force to the target object.

In some examples of the embodiments of the present disclosure, a force is applied to the front end surface of the target object by the suction member, and the suction member is controlled by the suction control component arranged on the base 11. In this way, it is convenient for the second force-applying member 1302 to apply a force to the target object, and the operation is simple. In addition, the force between the suction member and the target object may be controlled, and the stability of the force applied by the second force-applying member 1302 to the target object may be improved, so as to prevent the target object from falling off.

In some examples, the suction member may be any one of the electromagnet or suction cup described in the foregoing embodiments of the present disclosure. In the embodiments of the present disclosure, the suction cup is taken as a specific example for illustration.

As shown in FIG. 28, in the embodiments of the present disclosure, the suction cup is arranged on the second mounting plate 1301. The suction cup may be arranged on a side of the second mounting plate 1301 facing the access opening 1105. A passage is formed in the second mounting plate 1301, one end of the passage is in communication with an inner cavity of the suction cup, and the other end of the passage is used to be in communication with an air source device 1303. As a specific example, in the embodiments of the present disclosure, the air source device 1303 may be a vacuum pump. As shown in FIG. 1 and FIG. 2, the air source device 1303 may be specifically arranged on the base 11.

In some examples, the passage in the second mounting plate 1301 may be formed by punching or grooving the second mounting plate 1301, and the other end of the passage may be in communication with the air source device 1303 through a vacuum hose. In this way, when the air source device 1303 is running, the air source device 1303 reduces the pressure in the passage and the inner cavity of the suction cup through the vacuum hose, so that the external atmospheric pressure presses the target object to be moved and transferred onto the suction cup.

In some possible examples, the air source device 1303 may specifically be an air source device 1303 that may rotate forward and reversely. For example, when the air source device 1303 rotates forward, the air in the passage and the inner cavity of the suction cup is sucked through the vacuum hose to reduce the pressure in the inner cavity of the suction cup, thereby facilitating the pick-up of the target object to be transferred; when the air source device 1303 rotates reversely, the air source device 1303 supplies air into the passage and the inner cavity of the suction cup through the vacuum hose, so as to release the suction of the suction cup on the target object, thereby facilitating the removal of the target object from the suction cup.

It may also be understood that in some optional examples of the embodiments of the present disclosure, the vacuum hose may also be provided with components such as a solenoid valve and a vacuum pressure gauge, where the solenoid valve is used to shut off the vacuum hose when the suction cup provides sufficient suction to the target object (for example, when the pressure gauge detects that the pressure in the passage or the vacuum hose reaches a preset negative pressure value), so as to maintain the negative pressure in the inner cavity of the suction cup, thereby avoiding long-term operation of the vacuum pump and effectively reducing energy consumption.

In some examples, the suction control component may include a control valve 1306 (the control valve 1306 may be a solenoid valve). The control valve 1306 may be arranged between the vacuum hose and the gas source device 1303. The control valve may be configured to control the on/off of a gas path between the vacuum hose and the gas source device 1303.

In addition, the suction control component may include a vacuum detection sensor 1307 (for example, a vacuum pressure gauge). The vacuum detection sensor 1307 may be arranged on the base 11 and be in communication with the vacuum hose. The control valve 1306 may be configured to control the on/off of the gas path between the vacuum hose and the gas source device 1303 according to a detection signal of the vacuum detection sensor 1307.

Continuing referring to FIG. 30, in some optional examples of the embodiments of the present disclosure, a support member 1304 is arranged at a bottom of the pick-up assembly 13. For example, the support member 1304 is arranged at a bottom of the second mounting plate 1301.

In some examples, the support member 1304 is fixedly connected to the second mounting plate 1301. The bottom of the second mounting plate 1301 may specifically refer to the side of the second mounting plate 1301 facing the base 11. Thus, as shown in FIG. 3, in the process in which the driving structure 14 drives the pick-up assembly 13 to move through the extension and retraction structure 12 (for example, in the process in which the pick-up assembly 13 moves the target object), the support member 1304 may be supported on the surface of the target carrier, thereby providing good support for the extension and retraction structure 12 and the pick-up assembly 13, avoiding damage to the extension and retraction structure 12 when the target object is heavy, and effectively protecting the extension and retraction structure 12.

It may be understood that the support member 1304 may also be arranged at another position of the pick-up assembly 13, such as a bottom of the suction cup or a hooked claw structure. The arrangement position of the support member 1304 is not limited in the embodiments of the present disclosure, as long as the support member 1304 may be supported on the surface of the target carrier when the pick-up assembly 13 moves to the target carrier.

As a specific example of the embodiments of the present disclosure, as shown in FIG. 30, the support member 1304 may be a roller or a rotating roller, and the roller or the rotating roller is rotatably connected to the bottom of the support member 1304. In this way, when the support member 1304 moves on the surface of the target vehicle, the friction force applied to the support member 1304 may be effectively reduced, and the surface of the target carrier may be well protected.

In the embodiments of the present disclosure, by arranging the support member 1304 at the bottom of the second mounting plate 1301, when the pick-up assembly 13 extends and moves to the target carrier, the support member 1304 comes into contact with the surface of the target carrier, thereby supporting the pick-up assembly 13. In this way, the pick-up assembly 13 may be prevented from sagging (also called bowing in some examples) due to the long extension and retraction distance of the extension and retraction structure 12, thereby ensuring the accuracy of the contact position of the pick-up assembly 13 when picking up the target object.

In some examples of the embodiments of the present disclosure, as shown in FIGS. 6 and 7, the pick-and-place mechanism 1 may include two guide bars. For ease of description, one of the two guide bars may be referred to as a first guide bar 1106, and the other of the two guide bars may be referred to as a second guide bar 1107.

In some examples, the first guide bar 1106 is arranged on the base 11. The first guide bar 1106 may be located on a side of the first follower tray 151 that faces away from the second follower tray 152. The second guide bar 1107 may be arranged on the base 11. The second guide bar 1107 may be located on a side of the second follower tray 152 that faces away from the first follower tray 151. That is, in some examples of the embodiments of the present disclosure, the first follower tray 151 and the second follower tray 152 may be located between the first guide bar 1106 and the second guide bar 1107.

In some examples, as shown in FIGS. 6 and 7, along a direction in which the target object enters the base 11 (for example, the negative direction of the x-axis in FIG. 1), a spacing between the first guide bar 1106 and the second guide bar 1107 may be reduced, so that the access opening 1105 is narrowed along the direction in which the target object enters the base 11.

In some examples, the first guide bar 1106 may have a first guide slope (not shown in the drawings), and the first guide slope is located at an end of the first guide bar 1106 facing the access opening 1105, and faces the second guide bar 1107.

In some examples, the second guide bar 1107 may have a second guide slope (not shown in the drawings), and the second guide slope is located at an end of the second guide bar 1107 facing the access opening 1105, and faces the first guide bar 1106.

In some examples, a spacing between the first guide slope and the second guide slope decreases along the direction in which the target object enters the base 11, so that the access opening 1105 is narrowed along the direction in which the target object enters the base 11. In this way, the first guide slope and the second guide slope may guide and correct the movement path of the target object that has deviated by a certain amount, so that the target object may enter the base 11 smoothly.

In some examples, as shown in FIG. 6 and FIG. 7, sides of the first guide bar 1106 and the second guide bar 1107 facing away from the base 11 protrude from sides of the first follower tray 151 and the second follower tray 152 facing away from the base 11. That is, the first guide bar 1106 and the second guide bar 1107 protrude from support surfaces of the first follower tray 151 and the second follower tray 152 for supporting the target object. In some examples, it may also be understood that the sides of the first guide bar 1106 and the second guide bar 1107 facing away from the base 11 are higher than the support surfaces of the first follower tray 151 and the second follower tray 152. In this way, there is a limiting step between the first guide bar 1106 and the first follower tray 151, and there is a limiting step between the second guide bar 1107 and the second follower tray 152, which may limit the shaking of the target object on the base 11, thus improving the stability of the target object on the base 11, and facilitating the transfer robot to carry and transfer the target object.

It may be understood that in some examples, the first guide bar 1106 and the second guide bar 1107 may be arranged on the base 11 and fixedly connected to the base 11. In some other examples, the first guide bar 1106 may be arranged on the first follower tray 151. For example, the first guide bar 1106 is fixedly connected to the side of the first follower tray 151 that faces away from the second follower tray 152. In other words, the first guide bar 1106 may be arranged on the base 11 through the first follower tray 151. The second guide bar 1107 may be arranged on the second follower tray 152. For example, the second guide bar 1107 is fixedly connected to the side of the second follower tray 152 that faces away from the first follower tray 151. In other words, the second guide bar 1107 may be arranged on the base 11 through the second follower tray 152.

In some examples, the target object may have different widths. A width direction of the target object may intersect with the direction in which the target object enters and exits the base 11. For example, the width direction of the target object may be the direction indicated by the y-axis in FIG. 6. In order to accommodate the target objects of different widths, in some examples of the embodiments of the present disclosure, the spacing between the first guide bar 1106 and the second guide bar 1107 is adjustable.

In some examples, at least one of the first guide bar 1106 and the second guide bar 1107 may be driven by a motor, a cylinder or other driving members, so that the spacing between the first guide bar 1106 and the second guide bar 1107 is adjustable. For example, in some examples, the first guide bar 1106 may be driven by the motor, the cylinder or the other driving members to move away from or toward the second guide bar 1107, so as to adjust the spacing between the first guide bar 1106 and the second guide bar 1107.

In some examples, the spacing between the first guide bar 1106 and the second guide bar 1107 may be adjusted by driving the second guide bar 1107 to move away from or toward the first guide bar 1106. In some examples, the spacing between the first guide bar 1106 and the second guide bar 1107 may be adjusted by driving the first guide bar 1106 and the second guide bar 1107 to move away from or toward each other.

In some examples, a plurality of first mounting positions 1108 may be arranged on the base 11, and the plurality of first mounting positions 1108 are arranged along the arrangement direction of the first follower tray 151 and the second follower tray 152 (i.e., the width direction of the target object). The first guide bar 1106 may be mounted at any one of the plurality of first mounting positions 1108.

In some examples, in order to facilitate the first guide bar 1106 to protrude from the support surface of the first follower tray 151, as shown in FIG. 6, a first support block 1109 may be arranged on the base 11. The first support block 1109 may be fixedly arranged on the base 11. The first guide bar 1106 is arranged on the first support block 1109.

In some examples, the first support block 1109 may be mounted at any one of the plurality of first mounting positions 1108.

In some examples, the plurality of first mounting positions 1108 may be arranged on the first support block 1109. The first guide bar 1106 may be mounted at any one of the plurality of first mounting positions 1108.

In some examples, to improve the stability of supporting the first guide bar 1106, two first support blocks 1109 may be arranged, and the two first support blocks 1109 may be arranged along an extension direction of the first guide bar 1106. For example, the two first support blocks 1109 may be arranged along the direction indicated by the x-axis in FIG. 6.

In some examples of the embodiments of the present disclosure, the first support block 1109 is provided to support the first guide bar 1106, so that the first guide bar 1106 protrudes from the support surface of the first follower tray 151. In this way, the material of the first guide bar 1106 may be saved, and the production and processing cost of the transfer robot may be reduced. In addition, the processing and production difficulty of the base 11 may be reduced, and the production and processing cost of the transfer robot may be reduced.

In some examples, as shown in FIGS. 6 and 7, a plurality of second mounting positions may be arranged on the base 11. The plurality of second mounting positions may be arranged along the arrangement direction of the second follower tray 152 and the second follower tray 152. The second guide bar 1107 may be mounted at any one of the plurality of second mounting positions.

It may be understood that in some examples of the embodiments of the present disclosure, the arrangement manner of the second mounting positions may be the same as, close to or similar to the arrangement manner of the first mounting positions 1108 in the aforementioned embodiments of the present disclosure. For details, reference may be made to the detailed description of the aforementioned embodiments of the present disclosure, which will not be repeated in the embodiments of the present disclosure.

In some other optional examples of the embodiments of the present disclosure, as shown in FIGS. 6 and 7, the pick-and-place mechanism 1 further includes a second sensor 117, the second sensor 117 may be arranged on the base 11, and the second sensor 117 is used to detect whether the target object is present on the pick-up assembly 13 at the initial position.

For example, during the picking process of the pick-and-place mechanism 1, when the pick-up assembly 13 picks up the target object from the target goods location, and retracts into the base 11 under the drive of the extension and retraction structure 12, the target object may be separated from the pick-up assembly 13 due to an unstable force of the pick-up assembly 13, so that when the pick-up assembly 13 finally retracts to the initial position, the target object does not retract into place. This may cause problems that the target object is very easy to fall off the front end of the base 11 when the transfer robot moves in a warehousing system, or the timing of the interaction between the pick-up assembly 13 and the target object is uncontrollable when the transfer robot unloads at a workstation.

Based on this, by arranging the second sensor 117, when the pick-up assembly 13 retracts to the initial position, in a case that the target object is present on the pick-up assembly 13, the second sensor 117 may send a second trigger signal, and according to the second trigger signal of the second sensor 117, it is determined that the pick-up assembly 13 has the target object when it is at the initial position. Conversely, when the pick-up assembly 13 retracts to the initial position, the second sensor 117 does not trigger the second trigger signal, and it may be determined that when the pick-up assembly 13 is at the initial position, the pick-up assembly 13 does not carry the target object, so that it may be found in time that the target object has not retracted to the initial position.

In some examples of the embodiments of the present disclosure, by arranging the second sensor 117, it may be found in time that the target object has not retracted to the initial position, so that the driving structure 14 may be controlled in time to drive the pick-up assembly 13 to move to the target object again, and bring the target object back to the initial position, thereby addressing or avoiding the problems that the target object is very easy to fall off the front end of the base 11 when the transfer robot moves in the storage system, or the timing of the interaction between the pick-up assembly 13 and the target object is uncontrollable when the transfer robot unloads at the workstation.

As a specific example, in the embodiments of the present disclosure, the second sensor 117 may be a contact switch or a magnetic switch. It may be understood that in the embodiments of the present disclosure, the second sensor 117 may also be arranged at other positions. In the embodiments of the present disclosure, only the second sensor 117 arranged on the base 11 is taken as an example for illustration.

In some examples of the embodiments of the present disclosure, as shown in FIG. 6 and FIG. 7, the second sensor 117 may include a second signal transmitting portion 1171 and a second signal receiving portion 1172. The second signal transmitting portion 1171 may be arranged on one side of the movement path of the target object, and the second signal receiving portion 1172 may be arranged on the other side of the movement path of the target object. A signal transmission path between the second signal transmitting portion 1171 and the second signal receiving portion 1172 may intersect with the movement path of the target object.

In some examples, when the pick-up assembly 13 carries the target object and moves toward the base 11, the target object may first block the signal transmission path between the second signal transmitting portion 1171 and the second signal receiving portion 1172. As the pick-up assembly 13 moves, the target object continues to move with the pick-up assembly 13. When the target object is located at a preset position of the base 11, for example, when the first follower tray 151 and the second follower tray 152 retract to the initial position on the base 11, the target object may cross the signal transmission path of the second signal transmitting portion 1171 and the second signal receiving portion 1172. At this time, it may be determined whether the target object is located on the base 11 according to the duration for which the signal between the second signal transmitting portion 1171 and the second signal receiving portion 1172 is blocked.

In some examples, when the target object enters the base 11 and is located at the preset position of the base 11, for example, when the first follower tray 151 and the second follower tray 152 retract to the initial position on the base 11, the target object may block the signal transmission path between the second signal transmitting portion 1171 and the second signal receiving portion 1172.

In some examples, the second signal transmitting portion 1171 may be arranged on one of the first guide bar 1106 and the second guide bar 1107, and the second signal receiving portion 1172 may be arranged on the other of the first guide bar 1106 and the second guide bar 1107.

In some examples, the second signal transmitting portion 1171 may be arranged on the first guide bar 1106, and the second signal receiving portion 1172 may be arranged on the second guide bar 1107.

In some examples, the second signal transmitting portion 1171 may be arranged on the second guide bar 1107, and the second signal receiving portion 1172 may be arranged on the first guide bar 1106.

In some examples, the second signal receiving portion 1172 may receive a signal transmitted by the second signal transmitting portion 1171. The signal transmission path of the second signal transmitting portion 1171 and the second signal receiving portion 1172 may intersect with the movement path of the target object on the base 11. For example, as shown in FIGS. 6 and 7, the signal between the second signal transmitting portion 1171 and the second signal receiving portion 1172 may be transmitted along the direction indicated by the y-axis in FIGS. 6 and 7.

It may be understood that in some examples of the embodiments of the present disclosure, the second sensor 117 may be a through-beam sensor. The working principle of the second sensor 117 may be the same as, close to or similar to the working principle of the first sensor 116 in the aforementioned embodiments of the present disclosure. For details, reference may be made to the detailed description of the first sensor 116 in the aforementioned embodiments of the present disclosure, which will not be repeated in the embodiments of the present disclosure.

In some examples, the second sensor 117 may cooperate with the first sensor 116 to determine whether the target object is retracted to the base 11 when the pick-up assembly 13 retracts to the initial position. For example, when the first sensor 116 determines that the pick-up assembly 13 retracts to the initial position and triggers the first trigger signal, it may be determined whether the second sensor 117 triggers the second trigger signal. When the second sensor 117 triggers the second trigger signal, it may be determined that the target object is retracted to the base 11 together with the pick-up assembly 13.

In the embodiments of the present disclosure, the second signal transmitting portion 1171 is arranged on one of the first guide bar 1106 and the second guide bar 1107, and the second signal receiving portion 1172 is arranged on the other of the first guide bar 1106 and the second guide bar 1107. The position of the target object is determined by determining whether the second signal receiving portion 1172 receives the signal transmitted by the second signal transmitting portion 1171, thereby improving the accuracy of determining the position of the target object and improving the safety of using the transfer robot.

In some examples, as shown in FIGS. 6 and 7, the pick-and-place mechanism 1 may further include a third sensor 118. In some examples, the third sensor 118 may be arranged on the base 11. Specifically, the third sensor 118 may be an infrared sensor or an ultrasonic sensor. The third sensor 118 is used to detect the target object on the target carrier. For example, it may be determined whether the target object is present in the goods location of the target carrier to be picked up according to a third trigger signal of the third sensor 118.

In some examples, in order to improve the accuracy of the third sensor 118 in detecting whether the target object is present in the goods location of the target carrier, the third sensor 118 may be arranged between the first follower tray 151 and the second follower tray 152. In this way, when the third sensor 118 detects the target object in the goods location of the target carrier, the signal transmitted by the third sensor 118 may act on the front end surface of the target object, which may avoid a situation where the signal of the third sensor 118 passes through a through hole in a side surface of the target object, and may improve the accuracy of judging whether the target object is present in the goods location of the target carrier.

In some examples, as shown in FIGS. 6 and 7, the pick-and-place mechanism 1 further includes a second limiting member 111. Specifically, in the embodiments of the present disclosure, the second limiting member 111 may be arranged on the base 11. The second limiting member 111 may be located at a front end of at least one of the first follower tray 151 and the second follower tray 152.

FIG. 31 is another overall schematic view of a pick-and-place mechanism according to an embodiment of the present disclosure.

In some examples of the embodiments of the present disclosure, after the target object enters the base 11, in order to prevent the target object from slipping out of the access opening 1105 during the movement of the transfer robot, a second limiting member 111 may be arranged at the access opening 1105.

As shown in FIG. 31, in the embodiments of the present disclosure, the second limiting member 111 may be specifically arranged at an edge of the front end of the base 11, where the front end of the base 11 may specifically refer to an end of the base 11 facing the target carrier when the pick-and-place mechanism 1 picks up or returns the target object.

Specifically, in the embodiments of the present disclosure, the second limiting member 111 has a first state, and in the first state, at least a portion of the second limiting member 111 protrudes from the support surface of the base 11. It may be understood that, as shown in FIG. 31, the support surface may specifically refer to a surface of the base 11 that supports the target object (for example, it may be an upper surface of the base 11 in FIG. 31, and in some examples, the support surface may also include the surfaces of the first follower tray 151 and the second follower tray 152 that support the target object). That is, in the embodiments of the present disclosure, at least a portion of the second limiting member 111 extends along a surface perpendicular to the base 11 and protrudes from the upper surface of the base 11. In this way, after the target object enters the base 11, the portion of the second limiting member 111 that protrudes from the support surface may limit or stop the target object.

In some examples, in order to facilitate the target object to leave the base 11 through the access opening 1105, the second limiting member 111 may have a second state. In the second state, the second limiting member 111 may be retracted into or below the support surface. For example, as shown in FIG. 31, in the second state, a height of the second limiting member 111 along a z-axis direction may be lower than a height of the support surface. In this way, it is convenient for the target object in the base 11 to leave the base 11 through the access opening 1105. For example, when the pick-and-place mechanism 1 needs to place the target object in the target goods location, the second limiting member 111 may be switched to the second state to facilitate the placement of the target object.

In some examples, the base 11 may have a preset position. When the target object moves to the preset position, an action signal is triggered, and the second limiting member 111 may switch to the first state according to the action signal, to limit the target object in the base 11. When the target object is at the preset position, the second limiting member 111 may be located at a side of the target object facing the access opening 1105.

In some examples, a detection sensor may be arranged on the base 11, and the detection sensor may be configured to detect whether the target object moves to the preset position. When the target object moves to the preset position, the detection sensor may trigger the action signal. In some examples, the detection sensor may be an infrared sensor, a proximity switch, a magnetic induction sensor, etc. The type of the detection sensor is not limited in the embodiments of the present disclosure.

For example, the pick-and-place mechanism 1 may take the target object from the target goods location (goods shelf or temporary storage pallet), and the target object moves toward the base 11. During the process of the target object moving toward the base 11, the second limiting member 111 may be in the second state, so that the target object may enter the base 11 through the access opening 1105. After the target object enters the access opening 1105, the target object continues to move toward the base 11. At this time, the second limiting member 111 may remain in the second state until the target object moves to the preset position (the whole target object passes over the second limiting member 111); and the second limiting member 111 may switch from the second state to the first state, so as to limit the target object in the base 11, and prevent the target object from slipping out of the access opening 1105.

In the pick-and-place mechanism 1 according to the embodiments of the present disclosure, the second limiting member 111 is arranged at the access opening 1105 of the base 11; the second limiting member 111 has the first state and the second state, where in the first state, the second limiting member 111 protrudes from the support surface of the base 11, and in the second state, the second limiting member 111 is retracted into or below the support surface; and after the target object moves to the preset position on the base 11, the action signal is triggered, and the second limiting member 111 switches to the first state according to the action signal, thereby limiting the target object in the base 11. When the target object is at the preset position, the second limiting member 111 is located at the side of the target object facing the access opening 1105. That is, in the embodiments of the present disclosure, only after the target object completely enters the base 11 and passes over the second limiting member 111, the state of the second limiting member 111 is switched to the first state. Compared with the related art, it may be ensured that the second limiting member 111 switches only after the target object completely passes over the second limiting member 111, so as to prevent the second limiting member 111 from starting to act when the target object has not completely entered, which otherwise may cause the second limiting member 111 to interfere with the target object and hence cause the target object (e.g., the goods container) to be stuck. Thus, the pick-and-place mechanism 1 according to the embodiments of the present disclosure facilitates the smooth transfer of the target object to the transfer robot.

In some examples, the action signal in the embodiments of the present disclosure may include the first trigger signal described in detail in the aforementioned embodiments of the present disclosure.

In some examples, the action signal in the embodiments of the present disclosure may include the second trigger signal described in detail in the aforementioned embodiments of the present disclosure.

In some examples, during the process that the pick-up assembly 13 carries the target object and moves toward the base 11, the target object may first block the signal transmission path between the second signal transmitting portion 1171 and the second signal receiving portion 1172. As the pick-up assembly 13 moves, the target object continues to move with the pick-up assembly 13. When the target object is located at the preset position on the base 11, for example, when the first follower tray 151 and the second follower tray 152 retract to the initial position on the base 11, the target object may cross the signal transmission path of the second signal transmitting portion 1171 and the second signal receiving portion 1172. At this time, it may be determined whether the target object is located on the base 11 according to the duration for which the signal between the second signal transmitting portion 1171 and the second signal receiving portion 1172 is blocked. For example, it is determined whether the target object is located at the preset position on the base 11.

In some examples, the second limiting member 111 may be located at the front end of the first follower tray 151.

In some examples, the second limiting member 111 may be located at the front end of the second follower tray 152.

In some examples, two second limiting members 111 may be provided, one of the second limiting members 111 may be located at the front end of the first follower tray 151, and the other of the two second limiting members 111 may be located at the front end of the second follower tray 152.

Specifically, in the embodiments of the present disclosure, the second limiting member 111 has a first state, and in the first state, at least a portion of the second limiting member 111 protrudes from the support surfaces of the first follower tray 151 and the second follower tray 152. It may be understood that, as shown in FIG. 1, the support surfaces may specifically refer to the surfaces of the first follower tray 151 and the second follower tray 152 that support the target object. In some specific examples, the support surfaces may also refer to the surfaces of the first follower tray 151 and the second follower tray 152 that face away from the base 11. In other words, the surfaces of the first follower tray 151 and the second follower tray 152 that face away from the base 11 may be configured as the support surface of the base 11.

That is, in the embodiments of the present disclosure, at least a portion of the second limiting member 111 extends along a surface perpendicular to the base 11, and at least a portion of the second limiting member 111 protrudes from the support surface of the follower tray. In this way, when the target object or goods container is present on the follower tray, the portion of the second limiting member 111 protruding from the support surface may limit or block the target object on the follower tray.

In some examples, the second limiting member 111 also has a second state. In the second state, the whole second limiting member 111 is located between the first follower tray 151, the second follower tray 152 and the base 11. That is, in a specific application, when the first follower tray 151 and the second follower tray 152 extend from the base 11, the second limiting member 111 switches from the first state to the second state. In this way, the second limiting member 111 may be effectively prevented from affecting or blocking the movement of the first follower tray 151 and the second follower tray 152, thereby facilitating the movement of the first follower tray 151 and the second follower tray.

FIG. 32 is a schematic view showing fit between a second driving member and a second limiting member in a pick-and-place mechanism according to an embodiment of the present disclosure. FIG. 33 is another schematic view showing fit between a second driving member and a second limiting member in a pick-and-place mechanism according to an embodiment of the present disclosure.

In some examples, as shown in FIGS. 31, 32 and 33, the pick-and-place mechanism 1 may include a second driving member 1110. The second driving member 1110 may be arranged on the base 11. The second driving member 1110 may be configured to drive the second limiting member 111 to switch between the first state and the second state. In some examples, the second driving member 1110 is connected to the second limiting member 111.

For example, when the target object needs to enter or exit the base 11, the second driving member 1110 may drive the second limiting member 111 to switch from the first state to the second state. Alternatively, in some examples, after the target object enters the base 11, when the pick-and-place mechanism 1 or the transfer robot needs to move as a whole to transfer the target object, the second driving member 1110 may drive the second limiting member 111 to switch from the second state to the first state, thereby limiting the target object in the base 11.

In some examples, the second driving member 1110 may be a cylinder, a linear motor, or a piston cylinder, etc. The second driving member 1110 may drive the second limiting member 111 to move in a direction perpendicular to the base 11, so that the second limiting member 111 switches between the first state and the second state.

In an optional example of the embodiments of the present disclosure, the second limiting member 111 may be specifically rotatably connected to the base 11, and when the second limiting member 111 switches from the first state to the second state, the second limiting member 111 rotates from the surface perpendicular to the base 11 to a surface parallel to the base 11; and when the second limiting member 111 switches from the second state to the first state, the second limiting member 111 may rotate from the surface parallel to the base 11 to the surface perpendicular to the base 11.

In some examples, the second driving member 1110 may include a motor. For example, when the first follower tray 151 and the second follower tray 152 need to extend, it may be determined that there is no target object or goods container supported on the first follower tray 151 and the second follower tray 152 at this time. At this time, the second limiting member 111 may be driven by the motor to switch to the second state (that is, the second limiting member 111 is parallel to the base 11), and when the first follower tray 151 and the second follower tray 152 return to the initial position, the motor drives the second limiting member 111 to switch to the first state.

In some examples, the second driving member 1110 may switch from the second state to the first state according to the first trigger signal.

For example, the first driving member 1401 drives the extension and retraction structure 12 to extend and retract relative to the base 11 through the extension member 12025. When the extension and retraction structure 12 retracts into the base 11, the extension member 12025 drives the trigger member 1163 to retract into the base 11 together, and the extension member 12025 drives the first follower tray 151 and the second follower tray 152 through the connecting member 153, so that the first follower tray 151 and the second follower tray 152 retract into the base 11. When the trigger member 1163 retracts to be between the first signal transmitting part 1161 and the second signal transmitting portion 1171, the first sensor 116 triggers the first trigger signal. At this time, the first follower tray 151 and the second follower tray 152 retract to the initial position, and the target object carried on the pick-up assembly 13 enters the preset position on the base 11. The second driving member 1110 may drive the second limiting member 111 according to the first trigger signal, so that the second limiting member 111 switches from the second state to the first state.

In some examples, during the process that the pick-up assembly 13 transfers the target object into the base 11, the pick-up assembly 13 and the target object may be separated because the pick-up assembly 13 acts on the front end surface of the target object, resulting in that although the pick-up assembly 13, the first follower tray 151 and the second follower tray 152 retract to the initial position, the target object supported on the first follower tray 151 and the second follower tray 152 may not have reached the preset position. In order to prevent the second limiting member 111 from causing the target object to be stuck, in some examples of the embodiments of the present disclosure, the second limiting member 111 may switch to the first state according to the second trigger signal triggered by the second sensor 117.

That is, the second driving member 1110 may drive the second limiting member 111 according to the first trigger signal and the second trigger signal, so as to switch the second limiting member 111 to the first state.

In some examples, in order to facilitate the target object in the base 11 to leave the base 11 through the access opening 1105, before the target object moves from the preset position toward the outside of the base 11, the second limiting member 111 may switch to the second state.

For example, in some examples, after the transfer robot moves to an aisle corresponding to the target goods shelf, the second driving member 1110 may drive the second limiting member 111 to switch from the first state to the second state; then, the extension and retraction structure 12 and the pick-up assembly 13 move the target object toward the target goods location.

In some examples, in order to prevent the second limiting member 111 from over-rotating when the second driving member 1110 drives the second limiting member 111 to rotate, as shown in FIGS. 32 and 33, a first stop member 1111 may be arranged on the base 11. The first stop member 1111 is configured to limit a rotation angle of the second limiting member 111 when the second limiting member 111 switches to the first state, so that the second limiting member 111 stops in the first state.

In some examples, the first stop member 1111 may be arranged in a rotation path of the second limiting member 111 rotating relative to the base 11. When the second limiting member 111 rotates to the first state, the second limiting member 111 abuts against the first stop member 1111, thereby preventing the second limiting member 111 from continuing rotating.

In some examples, as shown in FIG. 32 and FIG. 33, a support frame 1112 is arranged to the second driving member 1110, and the first stop member 1111 may be arranged on the support frame 1112. In this way, it is convenient to mount and arrange the first stop member 1111. In some examples, the first stop member 1111 may be fixedly connected to the support frame 1112. In some examples, the first stop member 1111 may be integral with the support frame 1112.

In some examples, as shown in FIGS. 32 and 33, a second stop member 1113 may be arranged on the base 11. The second stop member 1113 may be configured to limit a rotation angle of the second limiting member 111 when the second limiting member 111 switches to the second state, so that the second limiting member 111 stops in the second state.

In some examples, the second limiting member 111 may rotate between the first stop member 1111 and the second stop member 1113. That is, in the rotation path of the second limiting member 111, the first stop member 1111 may be located at a side of the second limiting member 111, and the second stop member 1113 may be located at another side of the second limiting member 111. In this way, when the second limiting member 111 rotates to the first state, it may be stopped by the first stop member 1111; and when the second limiting member 111 rotates to the second state, it may be stopped by the second stop member 1113, which facilitates positioning of the second limiting member 111.

In some examples, as shown in FIG. 31, FIG. 32 and FIG. 33, a third mounting plate 1114 may be arranged on the base 11. The second driving member 1110 may be mounted on the third mounting plate 1114. In this way, it is convenient to mount and arrange the second driving member 1110, and the convenience of the mounting and connection between the second driving member 1110 and the base 11 is improved.

In some examples, the second stop member 1113 may be arranged on the third mounting plate 1114 and extend to the rotation path of the second limiting member 111. When the second limiting member 111 rotates to the second state, the second stop member 1113 may abut against the second limiting member 111, thereby positioning the second limiting member 111.

In some examples, the second stop member 1113 may be fixedly connected to the third mounting plate 1114. In some examples, the second stop member 1113 may be integral with the third mounting plate 1114.

FIG. 34 is another overall schematic view of a pick-and-place mechanism according to an embodiment of the present disclosure.

As shown in FIG. 34, in some examples of the embodiments of the present disclosure, the pick-and-place mechanism 1 further includes a displacement sensor 110, and the displacement sensor 110 is configured to monitor a moving distance of the pick-up assembly 13. It may be understood that the moving distance refers to a distance by which the pick-up assembly 13 extends relative to an initial position on the base 11, that is, a distance between a current position of the pick-up assembly 13 and the initial position. The initial position is a position of the pick-up assembly 13 on the base 11 when the pick-and-place mechanism 1 has not yet picked up or returned an object.

For example, when picking up or returning the object, when the displacement sensor 110 detects that the moving distance of the pick-up assembly 13 toward the target goods location is a working distance, it may be determined that the pick-up assembly 13 has reached the target goods location, and then the pick-up assembly 13 picks up the target object in the target goods location, or places the target object in the target location.

In some optional examples, the displacement sensor 110 may be any one of a draw-wire encoder, a laser ranging sensor, an ultrasonic sensor and a millimeter wave sensor. The displacement sensor 110 may be arranged on the first mounting plate 1102. Taking a specific example that the draw-wire encoder serves as the displacement sensor 110 for illustration, a free end of a draw wire of the draw-wire encoder may be connected to the second mounting plate 1301. In some examples, the free end of the draw wire may also be connected to the free end of the extension and retraction structure 12. In this way, in the process that the free end of the extension and retraction structure 12 pushes the pick-up assembly 13 to extend outward, the draw-wire encoder determines the actual moving distance of the pick-up assembly 13 by a length of the draw wire. In addition, the moving distance of the pick-up assembly 13 may also be determined by the comparison between a motor rotation angle and a motor zero angle of the first driving member 1401, so that the moving distance of the pick-up assembly 13 may be calibrated by the draw-wire encoder, thereby improving the accuracy of the pick-up assembly 13 picking up the object.

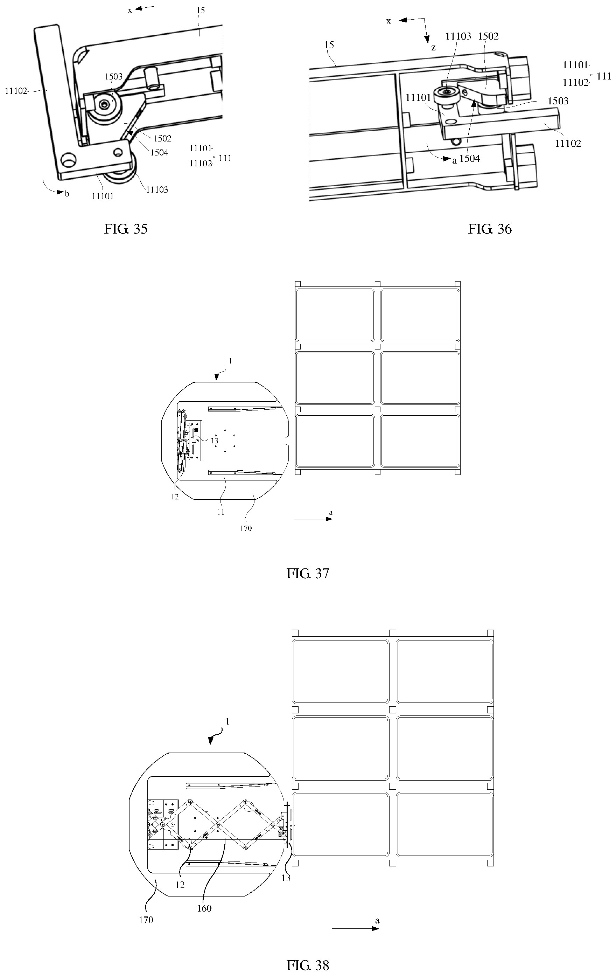

FIG. 35 is a schematic view showing fit between a second limiting member and a follower tray in a pick-and-place mechanism according to an embodiment of the present disclosure. FIG. 36 is another schematic view showing fit between a second limiting member and a follower tray in a pick-and-place mechanism according to an embodiment of the present disclosure.

In some other optional examples of the embodiments of the present disclosure, as shown in FIGS. 35 and 36, the second limiting member 111 includes a first portion 11101 and a second portion 11102 arranged at a certain included angle to each other. It is to be noted here that in the embodiments of the present disclosure, the first portion 11101 and the second portion 11102 may be integrally formed. Of course, in some examples, the first portion 11101 and the second portion 11102 may also be connected into a whole by welding. The first portion 11101 and the second portion 11102 arranged at a certain included angle specifically means that the first portion 11101 and the second portion 11102 are not parallel. In some specific examples, the included angle between the first portion 11101 and the second portion 11102 may be an acute angle, a right angle or an obtuse angle. As a specific example of the embodiments of the present disclosure, as shown in FIGS. 35 and 36, the included angle between the first portion 11101 and the second portion 11102 may be a right angle or an approximately right angle.

In a specific configuration, a connection portion between the first portion 11101 and the second portion 11102 is rotatably connected to the base 11, so that the space that needs to be occupied by a side of the second limiting member 111 facing the base 11 when the second limiting member 111 is rotated may be effectively reduced, thus facilitating the rotation of the second limiting member 111. As shown in FIGS. 35 and 36, in the embodiments of the present disclosure, the second portion 11102 is located between the first portion 11101 and the front end of the base 11, that is, the second portion 11102 is connected to a side of the first portion 11101 facing the front end of the base 11, and the first portion 11101 is located between the follower tray 15 and the base 11, that is, the first portion 11101 is located at the bottom of the follower tray 15.

It may be understood that, as shown in FIG. 35, when the second limiting member 111 is in the first state (that is, when the follower tray 15 is at the initial position), the second portion 11102 is located at the front end of the follower tray 15, and the first portion 11101 is located at the bottom of the follower tray 15. In addition, as shown in FIG. 35, an abutment member 1502 is arranged at the front end of the follower tray 15, the abutment member 1502 is located between the follower tray 15 and the base 11, and the abutment member 1502 is arranged between the first portion 11101 and the second portion 11102. As shown in FIG. 35, when the second limiting member 111 is in the first state, the abutment member 1502 may be in contact with the first portion 11101 (for example, directly or indirectly), thereby locking the second limiting member 111 in the first state, that is, when the target object or goods container is supported on the follower tray 15, the position of the follower tray 15 remains unchanged. At this time, the abutment member 1502 abuts against the first portion 11101, so that it is impossible for the second limiting member 111 to rotate relative to the base 11, thereby ensuring that the second portion 11102 limits the target object or goods container on the follower tray 15.

It may also be understood that, as shown in FIG. 36, in the embodiments of the present disclosure, when the front end of the follower tray 15 extends out of the base 11 (i.e., when the position of the follower tray 15 switches from the initial position to a terminal position), the abutment member 1502 pushes the second portion 11102 (the abutment member 1502 may be in direct contact with the second portion 11102 to push the second portion 11102; or the abutment member 1502 may be in indirect contact with the second portion 11102 to push the second portion 11102), so that the second limiting member 111 rotates relative to the base 11, that is, the second limiting member 111 switches from the first state to the second state.

Continuing referring to FIG. 36, in the embodiments of the present disclosure, when the second limiting member 111 is in the second state, a spacing between the second portion 11102 and the support surface of the follower tray 15 may be greater than or equal to a length of the first portion 11101, thereby ensuring the smooth rotation of the first portion 11101 when the second limiting member 111 switches from the first state to the second state.

In the embodiments of the present disclosure, the second limiting member 111 is configured to include the first portion 11101 and the second portion 11102 arranged at a certain included angle, the abutment member 1502 is arranged at the front end of the follower tray 15, and the abutment member 1502 is arranged between the first portion 11101 and the second portion 11102. Thus, during the process of the follower tray 15 switching from the initial position to the terminal position, the abutment member 1502 may abut against and push the second portion 11102, so that the second limiting member 111 rotates on the base 11 around the connection portion between the first portion 11101 and the second portion 11102, and thus it is convenient for the second limiting member 111 to switch from the first state to the second state. In addition, when the follower tray 15 retracts into the base 11, the abutment member 1502 pushes the first portion 11101, so that the second limiting member 111 switches from the second state to the first state, and thus it is convenient to limit the target object or goods container supported on the follower tray 15, thus preventing the target object from falling.

It may be understood that, as shown in FIG. 35, in a case that the target object or goods container is supported on the follower tray 15, when the target object applies a force to the second portion 11102, the abutment member 1502 applies an abutment force to the first portion 11101, thereby maintaining the second limiting member 111 in the first state and limiting the target object or goods container.

In some optional examples of the embodiments of the present disclosure, the rotational connection between the second limiting member 111 and the base 11 may be a damped rotational connection. That is, in the process that the position of the follower tray 15 switches from the initial position to the terminal position, after the second limiting member 111 switches from the first state (as shown in FIG. 35) to the second state (as shown in FIG. 36), the position of the follower tray 15 may not have reached the terminal position, that is, the follower tray 15 may continue moving at this time. In the embodiments of the present disclosure, the rotation of the second limiting member 111 and the base 11 is configured to be the damped rotation, so that the state of the second limiting member 111 may be maintained at the angle of the second state shown in FIG. 15, that is, the second portion 11102 remains parallel to the surface of the base 11. In this way, when the follower tray retracts into the base 11, the influence of the second portion 11102 on the abutment member 1502 may be effectively avoided, which facilitates the position switching of the follower tray and the state switching of the second limiting member 111.

In some other optional examples of the embodiments of the present disclosure, as shown in FIGS. 35 and 36, the first portion 11101 is provided with a second roller 11103 that may rotate around its own axis, and a circumferential surface of the second roller 11103 is arranged toward the abutment member 1502. In some specific examples, the second roller 11103 may be arranged at an end of the first portion 11101 facing away from the second portion 11102, or it may also be understood that the second roller 11103 is arranged at the end of the first portion 11101. In this way, in the process that the follower tray 15 retracts into the base 11, the abutment member 1502 pushes the first portion 11101 through the second roller 11103, so that the second limiting member 111 rotates, that is, the surface-to-surface contact between the abutment member 1502 and the first portion 11101 is converted into the surface-to-line contact between the abutment member 1502 and the second roller 11103, which may effectively reduce the friction force applied to the abutment member 1502 and facilitate the position switching of the follower tray 15.

It may be understood that in some specific examples of the embodiments of the present disclosure, as shown in FIGS. 35 and 36, the abutment member 1502 has a guiding slope 1504 on a side facing the first portion 11101, and the guiding slope 1504 is inclined towards the base 11. In this way, in the process that the follower tray 15 retracts into the base 11 (for example, when moving in the direction indicated by the x-axis in FIG. 36), as the follower tray 15 moves, the guiding slope 1504 may provide a component force that is perpendicular to the follower tray 15 (for example, a component force in a direction indicated by the z-axis in FIG. 36) to the first portion 11101 through the second roller 11103, or, it may also be understood that a thrust applied to the second roller 11103 by the guiding slope 1504 generates a rotational moment for the first portion 11101 around a rotational connection of the first portion 1101 and the base 11, so that the second limiting member 111 rotates in a direction indicated by an arc arrow a in FIG. 36, that is, the second limiting member 111 switches from the second state to the first state.

In addition, it may also be understood that in the embodiments of the present disclosure, the second roller 11103 and the first portion 11101 may be specifically connected in a rotatable manner, so that the surface-line sliding friction between the guiding slope 1504 and the second roller 11103 is converted into rolling friction, thereby reducing the friction force between the guiding slope 1504 and the second roller 11103 and improving the smoothness of the position switching of the follow tray 15.

In some other optional examples of the embodiments of the present disclosure, as shown in FIGS. 35 and 36, the abutment member 1502 is provided with a third roller 1503 that may rotate around its own axis. In a specific configuration, a circumferential surface of the third roller 1503 faces the second portion 11102. As shown in FIG. 35, when the position of the follower tray 15 switches from the initial position to the terminal position (for example, when the follower tray 15 moves along the direction indicated by the x-axis in FIG. 36), the third roller 1503 abuts against the second portion 11102 and applies a thrust to the second portion 11102, so as to generate a rotational moment for the second portion 11102 around a rotational connection of the second portion 11102 and the base 11, so that the second limiting member 111 rotates in a direction indicated by an arc arrow b in FIG. 35 (that is, the second limiting member 111 switches from the first state to the second state).

In the embodiments of the present disclosure, the third roller 1503 pushes the second portion 11102, so that the friction between the abutment member 1502 and the second portion 11102 may be effectively reduced, thereby improving the smoothness of the position switching of the follower tray 15. It may also be understood that the third roller 1503 may also be rotatably connected to the abutment member 1502.

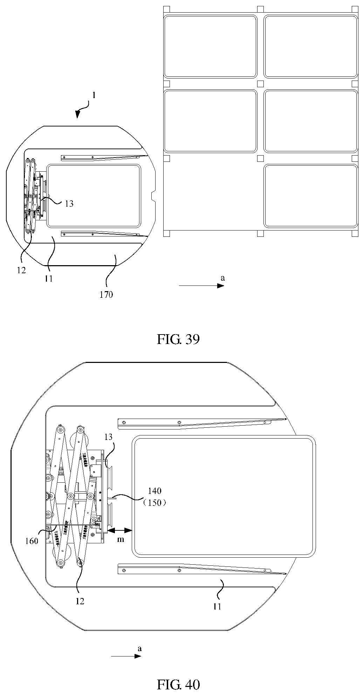

FIG. 37 is a schematic view showing a first state of a pick-and-place mechanism in a process of picking up an object according to an embodiment of the present disclosure. FIG. 38 is a schematic view showing a second state of a pick-and-place mechanism in a process of picking up an object according to an embodiment of the present disclosure. FIG. 39 is a schematic view showing a third state of a pick-and-place mechanism in a process of picking up an object according to an embodiment of the present disclosure.

As shown in FIGS. 37 to 39, in this example, the working process of the pick-and-place mechanism 1 picking up or returning the target object 2 may be as follows.

After the transfer robot drives the pick-and-place mechanism 1 to move to the target carrier, the pick-and-place mechanism 1 is lifted and lowered along the mast of the transfer robot to a specified height. For example, the pick-up assembly 13 corresponds to a height of the target goods location (flush or within an allowable deviation range).

In some examples, the pick-and-place mechanism 1 may include a two-dimensional code camera 113, the two-dimensional code camera 113 may be specifically used to identify a two-dimensional code of the carrier, thereby accurately determining a specific pick-and-place operation object of the pick-and-place mechanism 1 at the current instant.

It may be understood that the two-dimensional code camera 113 may be specifically arranged at the front end of the base 11, and the base 11 may also be provided with a controller 114, where the controller 114 may specifically be a central processing unit (CPU), a microcontroller unit (MCU), a field programmable gate array (FPGA), or a programmable logic controller (PLC). It may be understood that in the embodiments of the present disclosure, the types of the controller are shown only as some specific examples. In some possible examples, the controller may also be other types of controllers, which are not listed one by one in the embodiments of the present disclosure. The controller may be specifically used to control the two-dimensional code camera 113.

For example, the target carrier may have multiple layers of target goods locations, and the two-dimensional code may be arranged on a front crossbeam of each layer of target goods locations, for example, in the middle of the crossbeam.

In the embodiments of the present disclosure, in the process that the pick-and-place mechanism 1 moves to the target carrier according to target position information sent by a host computer and moves toward a target position, the two-dimensional code corresponding to the target goods location may be identified by the two-dimensional code camera 113, thereby determining whether the target carrier reaches a goods location height corresponding to the target goods location.

Generally, the pick-and-place mechanism 1 may be arranged on the mast of the transfer robot. When the transfer robot moves to the specified position, the driving structure on the mast adjusts the height of the pick-and-place mechanism 1 through, for example, a transmission chain. It may be understood that there is usually a certain fitting clearance between a driving sprocket and the chain, that is, an actual driving height of the pick-and-place mechanism 1 by the driving structure may be smaller than the goods location height of the target goods location. After the two-dimensional code camera 113 scans the two-dimensional code of the corresponding target goods location, the controller 114 may determine an actual goods location height of the target goods location according to the corresponding two-dimensional code, and then compare the actual goods location height with a height recorded by the motor encoder of the driving structure on the mast according to rotation of the motor (that is, a running height of the pick-and-place mechanism 1), so as to adjust the height of the pick-and-place mechanism 1, so that the height of the pick-and-place mechanism 1 is aligned with the height of the target goods location (a height difference here may be within a preset range).

In some examples, the pick-and-place mechanism 1 may further include a depth camera 115, and the controller 114 may further determine an offset distance between the pick-up assembly 13 and the target goods location based on an image of the target goods location captured by the depth camera 115. For example, the controller 114 may compare the image captured by the depth camera 115 with a standard image to determine the offset distance. In this way, it is convenient to keep the offset distance between the pick-up assembly 13 and the target goods location within a preset distance range, thus facilitating the alignment of the pick-up assembly 13 with the target goods location, and improving the stability when picking up the target object in the target goods location.

Next, the driving structure drives the extension and retraction structure 12 to extend, so that the free end of the extension and retraction structure 12 drives the pick-up assembly 13 to move forward (as indicated by a positive direction of direction a in FIG. 37) until the pick-up assembly 13 moves to the target goods location and docks with the target goods location to transfer the goods container.

For example, when returning the goods container, the controller 114 controls the driving structure to operate so that the driving structure drives the extension and retraction structure 12 to extend, so as to drive the pick-up assembly 13 to move forward, and thus the target object, such as the goods container, moves forward until the goods container moves into the target goods location. Then, the pick-up assembly 13 releases the goods container, and hence the goods container is placed in the target goods location. Thus, the goods container returning work is completed.

For another example, when picking up the goods container, the controller 114 controls the driving structure to operate so that the driving structure drives the extension and retraction structure 12 to extend, so as to drive the pick-up assembly 13 to move forward until the pick-up assembly 13 moves to a front end of the target goods location, comes into contact with the front end of the target object, such as the goods container, and applies a force to the front end surface of the goods container, so that the goods container is transferred onto the pick-up assembly 13 (as shown in FIG. 38).

Finally, after the pick-up assembly 13 arrives at the target goods location, and completes docking with the target goods location, the driving structure is controlled to operate simultaneously or successively again, so that the pick-up assembly 13 is driven by the extension and retraction structure 12 to retract to the initial position in the base 11, so as to be ready for a next order (as shown in FIG. 39).

Taking the goods container picking process as an example, when the target object 2, such as the goods container, is transferred to the pick-up assembly 13, the extension and retraction structure 12 may be controlled to operate, so that the pick-up assembly 13 is driven by the extension and retraction structure 12 to retract into the base 11, for example, into an accommodating space of a housing 170 (in a direction opposite to direction a in FIGS. 37 to 39), so that the pick-up assembly 13 drives the goods container to retract into the accommodating space. In this way, the housing 170 may limit the goods container and ensure the stability of the goods container in the pick-and-place mechanism 1.

As another arrangement manner, a transmission structure of the pick-and-place mechanism 1 may include the extension and retraction structure 12 and a movable seat, and the driving structure may include a first driving structure and a second driving structure. The movable seat may be movably arranged on the base 11. For example, the first driving structure is connected to the movable seat, and the first driving structure is configured to drive the movable seat to move, so that the movable seat drives the pick-up assembly 13 to move along the first direction. In some other examples, a movement direction of the movable seat may also have a certain included angle with the first direction, as long as it may be ensured that a movement path of the movable seat has a component in the first direction, so that the pick-up assembly 13 arranged on the movable seat may reach the target goods location.

In this example, the extension and retraction structure 12 has a fixed end and a free end, and the free end may move toward or away from the fixed end (also called extension and retraction); and the fixed end is arranged on the movable seat. The fixed end and the free end may be arranged opposite to each other along the first direction, and the free end may move toward or away from the fixed end along the first direction. For example, the second driving structure may be connected to the extension and retraction structure 12, and the second driving structure is configured to drive the second end to move toward or away from the first end along the first direction, so that the pick-up assembly 13 moves along the first direction under the drive of the second end.

Of course, in some other examples, the extension and retraction direction of the extension and retraction structure 12 (i.e., a movement direction of the free end) may also have a certain included angle with the first direction, as long as it may be ensured that an extension and retraction path of the extension and retraction structure 12 has a component in the first direction, so that the pick-up assembly 13 arranged to the extension and retraction structure 12 may reach the target goods location.

The pick-up assembly 13 is arranged to the free end. In other words, in the embodiments of the present disclosure, the extension and retraction structure 12 is arranged between the movable seat and the pick-up assembly 13, the extension and retraction structure 12 extends to push the pick-up assembly 13 to move away from the movable seat, and the extension and retraction structure 12 retracts to drive the pick-up assembly 13 to move toward the movable seat.

In some examples, the movable seat may move on the base 11 along the first direction, and the pick-up assembly 13 is arranged on the movable seat, so that the movable seat may drive the pick-up assembly 13 to move along the first direction. In addition, the pick-up assembly 13 may also move along the first direction (for example, by the extension and retraction of the extension and retraction structure 12, the pick-up assembly 13 is driven to move along the first direction), so that when picking up or returning the target object placed on an inner side (in some examples, it may also be called the deep inner location) of the target carrier, the movable seat and the pick-up assembly 13 may be driven to extend from the base 11 simultaneously, that is, the extension and retraction range of the pick-up assembly 13 is improved, so as to facilitate the picking up and returning of the target object located in the deep inner location of the target carrier.

It is to be noted that the target goods location may be the goods location on the target carrier such as the goods shelf, or a temporary storage goods location defined by the temporary storage plate on the transfer robot. Accordingly, the first direction may be a direction in which the pick-up assembly 13 moves toward the target carrier, or a direction in which the pick-up assembly 13 moves toward the goods location of the temporary storage plate, when the pick-up assembly 13 picks up or returns the object. It may be understood that the direction in which the pick-up assembly 13 moves toward the goods location of the target carrier may be perpendicular to the direction in which the pick-up assembly 13 moves toward the goods location of the temporary storage plate.

The working process of the pick-and-place mechanism 1 picking up or returning the object according to the embodiments of the present disclosure is as follows.

According to the actual situation of picking up or returning the target object, the pick-up assembly 13 may move along the first direction under the drive of the first driving structure and/or the second driving structure, so as to extend into the target goods location of the target carrier, or retract into the base 11.

For example, in some examples, the pick-up assembly 13 may move in the first direction only under the drive of the first driving structure. That is, the first driving structure drives the movable seat to move in the first direction, and when the movable seat moves in the first direction, the extension and retraction structure 12 and the pick-up assembly 13 arranged on the movable seat are driven to move together by the working distance, so that the pick-up assembly 13 finally reaches the target goods location. It may be understood that the working distance is a distance by which the pick-up assembly 13 moves to the target goods location when picking up or returning the goods container, that is, a goods container picking distance or a goods container returning distance.

Alternatively, in some examples, the pick-up assembly 13 may also move along the first direction only under the drive of the second driving structure. For example, the first driving structure does not work, that is, a relative position between the movable seat and the base 11 remains unchanged; and the second driving structure drives the extension and retraction structure 12 to extend or retract along the first direction, and the second end of the extension and retraction structure 12 drives the pick-up assembly 13 connected to the extension and retraction structure 12 to move along the first direction by the working distance, so that the pick-up assembly 13 finally reaches the target goods location.

Alternatively, in some other examples, the pick-up assembly 13 may also be driven by the first driving structure and the second driving structure together and move along the first direction.

For example, the first driving structure and the second driving structure may work successively. For example, the first driving structure may first drive the movable seat to move, so as to drive the extension and retraction structure 12 and the pick-up assembly 13 to move toward the target goods location. The second driving structure then drives the extension and retraction structure 12 to extend, so as to drive the pick-up assembly 13 to move toward the target goods location, so that the pick-up assembly 13 moves to the target goods location, to transfer the target object between the pick-up assembly 13 and the target goods location.

Of course, in other examples, the first driving structure and the second driving structure may simultaneously drive the movable seat and the extension and retraction structure 12 to move. In other words, the first driving structure drives the movable seat to move, and at the same time, the second driving structure drives the extension and retraction structure to extend or retract, so as to drive the pick-up assembly 13 to move toward the target goods location by the working distance, so that the pick-up assembly 13 moves to the target goods location, to transfer the target object between the pick-up assembly 13 and the target goods location.

In this example, the movable seat is movably arranged on the base 11, and when picking up or returning the target object, the movable seat moves on the base 11 along the first direction; and the extension and retraction structure 12 is arranged on the movable seat, the extension and retraction structure 12 has the first end and the second end along the first direction, the first end is arranged on the movable seat, the second end may move toward or away from the first end along the first direction, and the pick-up assembly 13 is arranged to the second end. In this way, when the pick-up assembly 13 picks up or returns the target object, the moving speed of the pick-up assembly 13 may be improved, that is, the efficiency of picking up or returning the target object may be effectively improved, and the efficiency of goods transfer is improved. Through the joint movement of the movable seat and the pick-up assembly 13 (for example, the first driving structure connected to the movable seat drives the movable seat to move along the first direction, and the second driving structure drives the second end of the extension and retraction structure 12 to move along the first direction), the moving distance of the end of the pick-up assembly 13 facing the target object may be effectively increased, so that it is convenient to pick up or return the target object located on the inner side of the goods shelf.

In the process of the pick-up assembly 13 picking up or returning the object, in order to determine the moving distance of the pick-up assembly 13 toward the target goods location, the motor encoder in the driving structure such as the drive motor is used in the related art. The level in the motor encoder is determined by the rotation speed and the rotation time of the motor, and the level of the motor encoder determines the distance by which the motor drives the transmission structure such as the extension and retraction structure 12 and/or the movable seat to move, thereby determining the moving distance of the pick-up assembly 13 toward the target goods location. For example, when the motor encoder is at a zero position, it indicates that the extension and retraction structure 12 is in an initial retracted state, and the moving distance of the pick-up assembly 13 at the end of the extension and retraction structure 12 toward the target goods location is zero.

However, since the extension and retraction structure 12, such as the scissor structure, has a width change in a direction perpendicular to the extension and retraction direction during the extension and retraction process, there are errors in the extension and retraction direction, friction between the extension and retraction structure 12 and the base 11, etc., so that a moving distance of a power shaft, that is connected to the driving structure, in the extension and retraction structure 12 is greater than the extension and retraction distance of the extension and retraction structure 12, which may cause a certain deviation between the level of the motor encoder and the moving distance of the pick-up assembly 13 toward the target goods location, thereby affecting the accuracy of the judgment of the moving distance of the pick-up assembly 13.

It is to be noted that the moving distance of the pick-up assembly 13 toward the target goods location refers to a moving distance of the pick-up assembly 13 relative to the initial position. For example, the moving distance is a distance between a current position of the pick-up assembly 13 and the initial position. The initial position is a position of the pick-up assembly 13 on the base 11 when the pick-and-place mechanism 1 has not yet picked up or returned the object.

The pick-and-place mechanism 1 according to the embodiments of the present disclosure may include a first detection structure 160, the first detection structure 160 is configured to detect the moving distance of the pick-up assembly 13 toward the target goods location, so as to determine the position of the pick-up assembly 13 in real time. For example, the position of the pick-up assembly 13 relative to the base 11 may be determined based on the moving distance of the pick-up assembly 13 toward the target goods location and the initial position of the pick-up assembly 13 relative to the base 11.

The first detection structure 160 directly detects the moving distance of the pick-up assembly 13 toward the target goods location, thereby improving the accuracy of judging the moving distance of the pick-up assembly 13, compared to detecting the distance, by which the driving structure drives the transmission structure to move, through the motor encoder in the driving structure such as the motor, so as to accurately obtain the position of the pick-up assembly 13, and accurately control the movement accuracy of the transmission structure driving the pick-up assembly 13 to move, so that the pick-up assembly 13 may accurately reach the target goods location and transfer the target object, and the pick-up assembly 13 may accurately reach the initial position on the base 11, to prepare for the picking or returning of the pick-up assembly 13 in a next stage.

For example, during the process of picking up or returning the object, the pick-and-place mechanism 1 may detect the moving distance of the pick-up assembly 13 toward the target goods location through the first detection structure 160. When the moving distance is equal to a first preset distance (i.e., the working distance), it may be determined that the pick-up assembly 13 arrives at the target goods location, and the driving structure stops driving the transmission structure such as the extension and retraction structure 12, so that the pick-up assembly 13 stops moving, and then the target object 2 is transferred between the pick-up assembly 13 and the target goods location (as shown in FIG. 38).

When the moving distance is equal to a second preset distance, it may be determined that the pick-up assembly 13 is at the initial position on the base 11. For example, after the pick-up assembly 13 places the target object in the target goods location, or takes out the target object from the target goods location, it retracts into the base 11. During the retraction process, when the first detection structure 160 detects that the moving distance of the pick-up assembly 13 toward the target goods location reaches the second preset distance, it is determined that the pick-up assembly 13 retracts to the initial position on the base 11, and the driving structure stops operating, so that the pick-up assembly 13 stops moving (as shown in FIG. 39). For example, the second preset distance may be zero.

Taking the picking process as an example, during the movement of the pick-and-place mechanism 1 toward the target goods location, the first detection structure 160 may be used to detect the moving distance of the pick-up assembly 13 toward the target goods location. When the moving distance is equal to the first preset distance (i.e., the working distance), it may be determined that the pick-up assembly 13 arrives at the target goods location, i.e., the pick-up assembly 13 reaches the front end surface of the target object in the target goods location. Then, the driving structure stops operating, so that the pick-up assembly 13 stops moving. Then, the pick-up assembly 13 is controlled to apply a force to the front end surface of the target object. Then, the pick-up assembly 13 carries the target object to retract into the base 11. During the retraction process, when the first detection structure 160 detects that the moving distance of the pick-up assembly 13 toward the target goods location is equal to the second preset distance, such as zero, it is determined that the pick-up assembly 13 reaches the initial position on the base 11. Then, the driving structure stops driving the transmission structure such as the extension and retraction structure 12, so that the pick-up assembly 13 stops moving.

For example, the first detection structure 160 may include, but is not limited to, any one of a draw-wire encoder, a laser ranging sensor, an ultrasonic sensor, and a millimeter wave sensor.

Taking an example that the draw-wire encoder serves as the first detection structure 160, during mounting, one end of a draw wire in the draw-wire encoder may be fixed on the base 11. For example, one end of the draw wire of the draw-wire encoder may be arranged to a rear end of the base 11 (the end facing away from the target goods location), and the other end of the draw wire of the draw-wire encoder is fixed on the pick-up assembly 13. In this way, when the pick-up assembly 13 is extended or retracted, the draw wire of the draw-wire encoder may also be extended or retracted accordingly, so that the moving distance of the pick-up assembly 13 toward the target goods location may be accurately fed back through the length of the draw wire, thereby controlling the extension accuracy.

It may be understood that one end of the draw wire in the draw-wire encoder is connected to the encoder, the encoder is arranged on the base 11 and is used to detect the length of the draw wire, thereby determining the moving distance of the pick-up assembly 13 toward the target goods location. For the structure and working principle of the draw-wire encoder, reference may be made to the content in the related art, which will not be repeated here.

In some examples, the length of the draw wire may be set to zero when the pick-up assembly 13 is at the initial position, so that the length of the draw wire may directly reflect the moving distance of the pick-up assembly 13 toward the target goods location. Of course, in some examples, the length of the draw wire may be set to a non-zero preset length when the pick-up assembly 13 is at the initial position, and when determining the moving distance of the pick-up assembly 13 toward the target goods location, the preset length needs to be subtracted from the current length of the draw wire.

For example, when the transmission structure is the extension and retraction structure 12, that is, the pick-up assembly 13 extends or retracts only under the drive of the extension and retraction structure 12, one end of the draw wire of the draw-wire encoder is located at the fixed end (the end facing away from the free end) of the extension and retraction structure 12. The fixed end of the extension and retraction structure 12 is arranged on a fixed portion 111a in the base 11 opposite to the pick-up assembly 13, and one end of the draw wire of the draw-wire encoder may be arranged to the fixed portion 111a. The extension and retraction distance of the extension and retraction structure 12 may be accurately controlled by the length of the draw wire of the draw-wire encoder.

For another example, when the transmission structure includes the extension and retraction structure 12 and the movable seat, that is, when the pick-up assembly 13 extends or retracts under the drive of at least one of the extension and retraction structure 12 and the movable seat, the fixed portion 111a, the movable seat and the extension and retraction structure on the base 11 may be arranged in sequence along an object picking direction. In the process of picking up or returning the object, the movable seat and/or the extension and retraction structure may move away from or toward the fixed portion 111a. One end of the draw wire of the draw-wire encoder may be arranged to the fixed portion 111a opposite to the movable seat. Through the length of the draw wire of the draw-wire encoder, the sum of the moving distance of the movable seat and the extension and retraction distance of the extension and retraction structure 12 may be accurately reflected, thereby accurately controlling the moving distance of the movable seat and the extension and retraction distance of the extension and retraction structure.

Of course, in other examples, one end of the draw wire in the draw-wire encoder may be directly fixed on the base 11.

FIG. 40 is a schematic view showing a fourth state of a pick-and-place mechanism 1 in a process of picking up an object according to an embodiment of the present disclosure. Referring to FIG. 40, it may be understood that when the pick-up assembly 13 retracts while carrying the target object, the force applied by the pick-up assembly 13 to the target object may be weakened during the retraction process due to an unstable picking speed of the pick-up assembly 13, an unstable friction force between the pick-up assembly 13 and the base 11, or a nature of a force providing manner of the pick-up assembly 13, and thus the pick-up assembly 13 may be in a semi-separated or even separated state from the target object. It may be understood that when the pick-up assembly 13 and the target object are in the separated state, the force applied by the pick-up assembly 13 to the target object is zero.

In some examples, the force applied by the pick-up assembly 13 to the target object may be provided in various forms. For example, when the force-providing component is a hooked claw structure, the force applied by the pick-up assembly 13 to the target object may be a force applied by the hooked claw structure to an inner wall of a slot on the target object such as the goods container. For another example, when the force-providing component is a clamping structure, the force applied by the pick-up assembly 13 to the target object may be a force applied by the clamping structure to an inner wall of a through hole on the front end surface of the target object. Alternatively, when the force-providing component is an electromagnet, the force applied by the pick-up assembly 13 to the target object is a magnetic attraction force applied by the electromagnet to the target object. Alternatively, when the force-providing component is a suction cup, the force applied by the pick-up assembly 13 to the target object is a suction force applied by the suction cup to the target object.

When the target object is separated from the pick-up assembly 13, if the pick-up assembly 13 continues to retract under the drive of the movable seat or the extension and retraction structure 12, the transfer robot may move to a position in a next working procedure in an unloaded state, such as a sorting workstation, thus causing the picking failure, affecting the smooth progress of the entire sorting work, and causing a waste of resources.

Based on this, the pick-and-place mechanism 1 according to the embodiments of the present disclosure further includes a second detection structure 140, the second detection structure 140 is configured to detect parameter information of the pick-up assembly 13 relative to the target object. In some examples, the second detection structure 140 may be a fourth sensor 1305.

In some examples, the second detection structure 140 may be a pressure sensor, and the pressure sensor is used to detect a pressure applied by the pick-up assembly 13 to the target object, i.e., a pressure applied by the target object to the pick-up assembly 13. That is, in this example, the parameter information of the pick-up assembly 13 relative to the target object includes the pressure. For example, the pressure sensor may be a piezoelectric ceramic sheet.

The pressure sensor may be arranged on a contact surface between the pick-up assembly 13 and the target object. For example, when the pick-up assembly 13 is a hooked claw structure, the pressure sensor may be arranged between the hooked claw structure and the wall of the slot of the target object. For example, the pressure sensor may be arranged on the hooked claw structure or on the wall of the slot. When the hooked claw structure is inserted into the slot and retracted, the pressure sensor on the hooked claw structure will be subjected to the pressure applied by the wall of the slot and generate a pressure value. It may be understood that the pressure value may represent the force applied by the hooked claw structure to the target object.

For the convenience of description, when the hooked claw structure is in normal hooking engagement with the slot, the pressure value detected by the pressure sensor may be called a preset pressure value. When the hooking engagement between the hooked claw structure and the slot becomes loose, the pressure value detected by the pressure sensor will decrease, that is, a current pressure value detected by the pressure sensor is less than the preset pressure value. This pressure value indicates that the force applied by the hooked claw structure to the target object is less than a preset force.

In some other examples, when the force-providing component of the pick-up assembly 13 is an electromagnet, the second detection structure 140 may also be a magnetic detector, and the magnetic detector is used to detect a magnetic attraction force applied by the electromagnet to the target object, that is, in this example, the parameter information of the pick-up assembly 13 relative to the target object includes the magnetic attraction force.

In the process that the electromagnet on the pick-up assembly attracts the target object and the pick-up assembly retracts, the magnetic detector will detect the magnetic attraction force applied by the electromagnet to the target object in real time, so as to obtain a magnetic attraction force value. It may be understood that the magnetic attraction force value may represent the force applied by the pick-up assembly 13, such as the electromagnet, on the target object.

For the convenience of description, when the electromagnet normally attracts the target object, the magnetic attraction force value detected by the magnetic detector may be called a preset magnetic attraction force value. When the magnetic attraction force applied by the electromagnet to the target object weakens, the magnetic attraction force value detected by the magnetic detector will decrease, that is, a current magnetic attraction force value is less than the preset magnetic attraction force value. Thus, this magnetic attraction force value indicates that the force applied by the electromagnet to the target object is less than the preset force.

When the parameter information indicates that the force applied by the pick-up assembly 13 to the target object is less than the preset force, the force applied by the pick-up assembly 13 to the target object is increased, so that the pick-up assembly 13 drives the target object to move into the base 11.

For example, in the process that the pick-up assembly 13 carries the target object and retracts into the base 11, when the parameter information detected by the second detection structure 140 indicates that the force applied by the pick-up assembly 13 to the target object is less than the preset force, it means that the force applied by the pick-up assembly 13 to the target object weakens, and the force applied by the pick-up assembly 13 to the target object is increased, that is, the pick-up assembly 13 re-applies the force to the target object, and then the pick-up assembly 13 carries the target object and retracts into the base 11 again, so as to complete the object picking work.

Taking the above example as an example, when the parameter information is the pressure value detected by the pressure sensor, and the pressure value is less than the preset pressure value, this pressure value indicates that the force applied by the pick-up assembly 13 to the target object is less than the preset force. When the parameter information is the magnetic attraction force value detected by the magnetic detector, and the magnetic attraction force value is less than the preset magnetic attraction force value, this magnetic attraction force value indicates that the force applied by the pick-up assembly 13 to the target object is less than the preset force.

In some examples, when the second detection structure 140 detects the parameter information, the parameter information may be sent to the controller 114, and the controller 114 compares the parameter information with a preset value and determines state information between the pick-up assembly 13 and the target object. For example, the pressure sensor may send the detected pressure value to the controller 114, and the controller 114 compares the pressure value with the preset pressure value to obtain the state information between the pick-up assembly 13 and the target object.

For example, when the pressure value received by the controller 114 is less than the preset pressure value, the controller 114 determines the state information that the force applied by the pick-up assembly 13 to the target object is less than the preset force, and the controller 114 controls the pick-up assembly 13 to increase the force applied to the target object, for example, increasing a hooking force of the hooked claw structure on the slot until the hooking force reaches the preset pressure value, and then controls the pick-up assembly 13 to move into the base 11, so as to complete the object picking work.

In some other examples, when the second detection structure 140 detects the parameter information, and the parameter information is less than a certain preset value, the second detection structure 140 may send a trigger signal to the controller 114, and the controller 114 receives the trigger signal and controls the pick-up assembly 13 to increase the force applied to the target object. For example, the pressure sensor is a trigger pressure sensor, and when the pressure value detected by the pressure sensor is less than the preset pressure value, the trigger signal may be sent to the controller 114, and the controller 114 receives the trigger signal and controls the pick-up assembly 13 to increase the force applied to the target object.

Of course, when the detected parameter information is greater than a certain preset value, the second detection structure 140 may send the trigger signal to the controller 114, and the controller 114 determines that the force applied by the pick-up assembly 13 to the target object is greater than or equal to the preset force; and when the controller 114 does not receive the trigger signal, it determines that the force applied by the pick-up assembly 13 to the target object is less than the preset force. For example, the pressure sensor is a trigger pressure sensor. When the pressure value detected by the pressure sensor is greater than the preset pressure value, the trigger signal may be sent to the controller 114. When the controller 114 receives the trigger signal during the process that the pick-up assembly 13 retracts while carrying the target object, it determines that the force applied by the pick-up assembly 13 to the target object is greater than or equal to the preset force, and then continues to control the pick-up assembly 13 to retract. When the controller 114 does not receive the trigger signal, it determines that the force applied by the pick-up assembly 13 to the target object is less than the preset force, and then controls the pick-up assembly 13 to increase the force applied to the target object, that is, to re-apply the force and pick up the object.

It is to be noted that when the parameter information detected by the second detection structure 140, such as the pressure value or the magnetic attraction force value, is zero, it indicates that the force applied by the pick-up assembly 13 to the target object is zero, and the pick-up assembly 13 is separated from the target object. For example, when the parameter information received by the controller 114 is zero, for example, the pressure value is zero, it is determined that the force applied by the pick-up assembly 13 to the target object is zero, and the pick-up assembly 13 is separated from the target object. In this way, the controller 114 increasing the force applied by the pick-up assembly 13 to the target object includes: the controller 114 first controls the pick-up assembly 13 to move toward the target object, and to re-apply a force to the front end surface of the target object, and then the controller 114 controls the pick-up assembly 13 to carry the target object and retract into the base 11.

When the pick-up assembly 13 increases the force applied to the target object, the second detection structure 140 may detect the parameter information of the pick-up assembly 13 on the target object, such as the pressure value between the pick-up assembly 13 and the target object. When the pressure value is greater than or equal to the preset pressure value, it indicates that the force applied by the pick-up assembly 13 to the target object reaches the preset force, and the force applied by the pick-up assembly 13 to the target object is normal. Then, the pick-up assembly 13 carries the target object and retracts into the base 11 again.

In the embodiments of the present disclosure, the second detection structure 140 is arranged to detect the parameter information of the pick-up assembly 13 relative to the target object, and the parameter information may indicate whether the force applied by the pick-up assembly 13 to the target object is less than the preset force. In this way, during the process that the pick-and-place mechanism 1 carries the target object and retracts into the base 11, the parameter information detected by the second detection structure 140 may indicate whether the force applied by the pick-up assembly 13 to the target object is less than the preset force. That is, when the pick-up assembly 13 retracts while carrying the target object, a position state between the pick-up assembly 13 and the target object may be obtained in time, and when the force applied by the pick-up assembly 13 to the target object is weaker or the pick-up assembly 13 is separated from the target object, the force applied by the pick-up assembly 13 to the target object may be increased again, that is, the pick-up assembly 13 re-applies the force to the target object and continues to retract while carrying the target object again, thereby improving the picking success rate of the pick-and-place mechanism 1 without causing waste of resources.

In some embodiments, the second detection structure 140 includes a distance sensor, and the distance sensor is configured to detect the distance between the pick-up assembly 13 and the target object. It may be understood that, in this example, the parameter information includes the distance.

For example, the distance sensor is mounted on the pick-up assembly 13 and is used to detect the distance between the pick-up assembly 13 and the target object.

When the distance sensor is arranged on the pick-up assembly 13, the distance sensor may be used to detect a distance between a mounting surface of the pick-up assembly 13 and the front end surface of the target object.

For example, when the pick-up assembly 13 includes the second mounting plate 1301 and the suction cup, the distance sensor is arranged on a side of the second mounting plate 1301 facing the target object (i.e., a side where the suction cup is arranged), and the distance detected by the distance sensor is a distance between the side of the second mounting plate 1301 where the suction cup is arranged and the front end surface of the target object (as indicated by m in FIG. 40). For another example, when the pick-up assembly 13 includes the second mounting plate 1301 and the electromagnet, the distance sensor is arranged on the side of the second mounting plate 1301 facing the target object (i.e., a side where the electromagnet is arranged), and the distance detected by the distance sensor is a distance between the side of the second mounting plate 1301 where the electromagnet is arranged and the front end surface of the target object.

For the convenience of description, when the pick-up assembly 13 stably acts to the target object, the distance between the pick-up assembly 13 and the target object is taken as a third preset distance. For example, when the pick-up assembly 13 includes the second mounting plate 1301 and the suction cup, and the target object is stably attached to the suction cup, the distance between the second mounting plate 1301 and the target object is the third preset distance. It may be understood that, in this example, when the target object is stably attached to the suction cup, the distance between the target object and the suction cup is zero, and the third preset distance between the second mounting plate 1301 and the target object may be a value less than or equal to a thickness of the suction cup.

When the pick-up assembly 13 includes the second mounting plate 1301 and the electromagnet, and the electromagnet stably attracts the target object, the electromagnet may be in contact with or have a certain distance from the target object, and the third preset distance may be greater than or equal to a thickness of the electromagnet.

It may be understood that when the distance between the pick-up assembly 13 and the target object is less than or equal to the third preset distance, it indicates that the force applied by the pick-up assembly 13 to the target object is greater than or equal to the preset force.

On the contrary, when the distance is greater than the third preset distance, it is determined that the force applied by the pick-up assembly 13 to the target object is less than the preset force, i.e., it indicates that the force between the pick-up assembly 13 and the target object is insufficient to enable the pick-up assembly 13 to stably carry the target object and retract to the initial position on the base 11.

In some examples, when the distance between the pick-up assembly 13 and the target object is greater than the third preset distance, but the distance has not yet reached a situation where the force between the pick-up assembly 13 and the target object is zero, the distance may indicate that the force applied by the pick-up assembly 13 to the target object has weakened, but the pick-up assembly 13 and the target object have not yet been separated.

For the convenience of description, the distance between the pick-up assembly 13 and the target object when the force between the pick-up assembly 13 and the target object is zero may be taken as a fifth preset distance, and the fifth preset distance is greater than the third preset distance. When the distance sensor detects that the distance between the pick-up assembly 13 and the target object is greater than the third preset distance and less than the fifth preset distance, it indicates that the force applied by the pick-up assembly 13 to the target object has weakened, but the pick-up assembly 13 and the target object have not yet been separated.

For example, when the pick-up assembly 13 includes the second mounting plate 1301 and the suction cup, and the force between the suction cup and the target object is zero, the suction cup is separated from the target object, and the fifth preset distance may be greater than the thickness of the suction cup, that is, the target object is separated from the suction cup, and has a certain distance from the suction cup. Alternatively, when the pick-up assembly 13 includes the second mounting plate 1301 and the electromagnet, and the force between the electromagnet and the target object is zero, the electromagnet is separated from the target object 2, and the third preset distance is greater than the third preset distance.

In some other examples, when the distance is greater than the third preset distance, the pick-up assembly 13 is separated from the target object, and the force applied by the pick-up assembly 13 to the target object is zero. For example, when the distance between the pick-up assembly 13 and the target object is greater than or equal to the fifth preset distance, it indicates that the pick-up assembly 13 is separated from the target object, and the force applied by the pick-up assembly 13 to the target object is zero.

Based on the above description, when the pick-up assembly 13 is separated from the target object, increasing the force applied by the pick-up assembly 13 to the target object may specifically include: the pick-up assembly 13 moving toward the target object and applying the force to the target object.

Taking an example that the pick-up assembly 13 includes the electromagnet, when it is determined that the pick-up assembly 13 is separated from the target object, the controller 114 may control the driving structure to operate, and the driving structure drives the extension and retraction structure 12 to extend, so as to drive the pick-up assembly 13 to move forward, and the electromagnet is powered on to generate a magnetic attraction force until the distance between the pick-up assembly 13, such as the second mounting plate 1301, and the target object is less than the fifth preset distance. Then, the electromagnet starts to attract the target object until the distance between the second mounting plate 1301 and the target object reaches the third preset distance. The magnetic attraction force applied by the electromagnet to the target object is greater than the preset value, ensuring that the pick-up assembly 13 acts on the target object again to realize the secondary picking process. Then, the controller 114 controls the driving structure to operate, so that the driving structure drives the extension and retraction structure 12 to retract, and thus the pick-up assembly 13 carries the target object and retracts into the base 11.

In some examples, when the controller 114 determines that the pick-up assembly 13 is separated from the target object, the controller 114 controls the pick-up assembly 13 to move toward the target object, while controlling the force-providing component of the pick-up assembly 13 to prepare to apply a force to the front end surface of the target object at the same time. For example, while the second mounting plate 1301 drives the electromagnet to move toward the target object, the electromagnet is powered on to attract the target object until the magnetic attraction force reaches the preset value. When the controller 114 determines that the force applied by the pick-up assembly 13 to the target object is greater than or equal to the preset force, the controller continues to control the pick-up assembly 13 to retract.

In other examples, when the controller 114 determines that the pick-up assembly 13 is separated from the target object, the controller 114 first controls the pick-up assembly 13 to move toward the target object. When other detection structures, such as a distance sensor, detect that the distance between the pick-up assembly 13 and the target object reaches a sixth preset distance, the pick-up assembly 13 begins to apply a force to the target object until the force applied by the pick-up assembly 13 to the target object 2 reaches the preset force, and then the controller 114 controls the pick-up assembly 13 to retract.

It is to be noted that the sixth preset distance is smaller than the fifth preset distance, and greater than or equal to the third preset distance.

For example, the distance sensor may send detected distance information to the controller 114, and the controller 114 compares the distance information with the third preset distance to obtain the state information between the pick-up assembly 13 and the target object. For example, when the distance information received by the controller 114 is less than the third preset distance, the controller 114 determines the state information that the force applied by the pick-up assembly 13 to the target object is less than the preset force.

In some other examples, the distance sensor may be a trigger distance sensor. When the distance detected by the distance sensor is less than the third preset distance, a first signal may be sent to the controller 114. When the controller 114 receives the first signal, it determines that the force applied by the pick-up assembly 13 to the target object is greater than or equal to the preset force. Conversely, when the controller 114 does not receive the first signal, it determines that the force applied by the pick-up assembly 13 to the target object is less than the preset force.

When the pick-up assembly 13 includes the suction cup, in some other examples, the second detection structure 140 may further include a vacuum pressure gauge 180, and the vacuum pressure gauge 180 is in communication with an inner cavity of the suction cup to detect a vacuum degree of the inner cavity. It may be understood that, in this example, the parameter information may include the vacuum degree.

When the target object is stably attached to the suction cup, the vacuum degree of the inner cavity of the suction cup is greater than or equal to a preset vacuum degree. On the contrary, when air leakage occurs between the suction cup and the target object, the vacuum degree of the inner cavity of the suction cup will decrease, so that the force applied by the pick-up assembly 13 to the target object weakens, that is, less than the preset force. In other words, when the vacuum degree is less than the preset vacuum degree, it is determined that the force applied by the pick-up assembly 13 to the target object is less than the preset force. In this way, in the process that the pick-up assembly 13 retracts while carrying the target object, when the vacuum degree detected by the second detection structure 140, such as the vacuum pressure gauge 180, is less than the preset vacuum degree, the controller 114 determines that the force applied by the pick-up assembly 13 to the target object is less than the preset force, and then controls the pick-up assembly 13 to increase the force applied to the target object. For example, the air source device 1303 increases the vacuum degree of the inner cavity of the suction cup again to be greater than or equal to the preset vacuum degree, so as to stably attract the target object.

For example, when the vacuum degree is zero, it indicates that the pick-up assembly 13 is separated from the target object, and the force applied by the pick-up assembly 13 to the target object is zero.

When the pick-up assembly 13 is separated from the target object, increasing the force applied by the pick-up assembly 13 to the target object may include: the pick-up assembly 13, such as the suction cup, moving toward the target object and applying the force to the target object, such as attracting the target object.

For example, when it is determined that the pick-up assembly 13 is separated from the target object, the controller 114 may control the driving structure to operate, and the driving structure drives the extension and retraction structure 12 to extend, so as to drive the suction cup to move forward, and the air source device 1303 may increase the vacuum degree of the inner cavity of the suction cup, so that the suction cup attracts the target object, ensuring that the pick-up assembly 13 acts on the target object again to realize the secondary picking process. Then, the controller 114 controls the driving structure to operate, so that the driving structure drives the extension and retraction structure 12 to retract, and thus the pick-up assembly 13 carries the target object and retracts into the base 11.

For example, while the suction cup moves toward the target object, the air source device 1303 evacuates air from the inner cavity of the suction cup, so that the vacuum degree of the inner cavity of the suction cup reaches the preset vacuum degree to attract the target object until the controller 114 determines that the force applied by the pick-up assembly 13 to the target object is greater than or equal to the preset force, and then the controller 114 continues to control the pick-up assembly 13 to retract.

In some examples, multiple suction cups may be arranged, and the inner cavity of each suction cup is connected to one corresponding air source device 1303, and the inner cavity of each suction cup is in communication with one vacuum pressure gauge 180. Thus, the parameter information includes multiple vacuum degrees, and each vacuum degree corresponds to an individual suction cup.

For example, when some of the suction cups (whose number is less than the total number of the suction cups) leak, the force applied by the suction cup structure formed by the multiple suction cups to the target object will weaken, that is, less than the preset force. For example, when the number of the suction cups is small, such as when the number of the suction cups is 2-6, as long as some of the suction cups leak, that is, the vacuum degree is lower than the preset vacuum degree, the force applied by the suction cup structure to the target object will weaken, and even the suction cup structure will be separated from the target object, and the force will be zero.

In this way, when the vacuum degree detected by at least one vacuum pressure gauge 180 is less than the preset vacuum degree, it is determined that the force applied by the pick-up assembly 13 to the target object is less than the preset force. For example, when three suction cups are arranged and the vacuum degree in the inner cavity of one suction cup is less than the preset vacuum degree, it indicates that the force applied by the pick-up assembly 13 to the target object is less than the preset force.

Of course, the embodiments of the present disclosure do not exclude the example where when all suction cups leak, it may be determined that the force applied by the pick-up assembly 13 to the target object weakens or is zero. In other words, when the vacuum degree detected by each vacuum pressure gauge 180 is less than the preset vacuum degree, it is determined that the force applied by the pick-up assembly 13 to the target object is less than the preset force.

It is to be noted that, in some examples, the parameter information used to indicate that the force applied by the pick-up assembly 13 to the target object is less than the preset force may be one of the pressure, the distance or the vacuum degree. For example, the second detection structure 140 may be the distance sensor or the vacuum pressure gauge 180, and the parameter information may be the distance or the vacuum degree. For example, as long as the distance is greater than the third preset distance or the vacuum degree is less than the preset vacuum degree, it is determined that the force applied by the pick-up assembly 13 to the target object is less than the preset force.

In some other examples, the second detection structure 140 may include but is not limited to at least two of the pressure sensor, the distance sensor, and the vacuum pressure gauge 180. For example, the second detection structure 140 may include the distance sensor and the vacuum pressure gauge 180, and the parameter information includes the distance and the vacuum degree. In other words, the distance and the vacuum degree are used to jointly determine whether the force applied by the pick-up assembly 13 to the target object is less than the preset force, so that the judgment result is more accurate.

When the distance is greater than the third preset distance and the vacuum degree is less than the preset vacuum degree, it is determined that the force applied by the pick-up assembly 13 to the target object is less than the preset force.

Taking an example where the distance sensor is a trigger sensor, and when it is detected that the distance between the pick-up assembly 13 and the target object is less than or equal to the third preset distance (for example, 50 mm), the first signal is sent, during the process that the pick-up assembly 13 retracts while carrying the target object, when the controller 114 receives the first signal, and the vacuum degree of the inner cavity of the suction cup is greater than or equal to the preset vacuum degree, the controller 114 determines that the force applied by the pick-up assembly 13 to the target object is greater than or equal to the preset force, that is, the target object is stably attached to the pick-up assembly 13, and continues to control the driving structure to operate (that is, reverse driving operation), so that the pick-up assembly 13 moves in a negative direction of direction a (that is, away from the target goods location) under the drive of the extension and retraction structure 12, until the moving distance of the pick-up assembly 13 toward the target goods location detected by the first detection structure 160 is the second preset distance, and the pick-up assembly 13 retracts to the initial position on the base 11.

When the controller 114 does not receive the first signal and determines that the vacuum degree of the inner cavity of the suction cup is lower than the preset vacuum degree, it indicates that the force applied by the pick-up assembly 13 to the target object is less than the preset force. For example, when the vacuum degree of the inner cavity is zero and it is determined that the pick-up assembly 13 is separated from the target object, the driving structure may be controlled to stop the reverse driving operation to stop the pick-up assembly 13 from moving toward the base 11, and the driving structure may be controlled to start the forward driving operation to move the pick-up assembly 13 toward the target object. When the pick-up assembly 13 picks up the target object again (the suction cup attracts the target object), the controller 114 receives the first signal and continues to control the driving structure to perform the reverse driving operation, so that the pick-up assembly 13 continues to move to the initial position.

Taking the object picking of the pick-and-place mechanism 1 as an example, in the process that the pick-up assembly 13 moves toward the target object, when the moving speed of the pick-up assembly 13 is too fast, it is very easy for the pick-up assembly 13 to hit the target object and move it backward a certain distance when the pick-up assembly 13 reaches the target object, so that the pick-up assembly 13 cannot stably act on the target object. It may be understood that the above situation may occur when the target object is still placed in the target goods location and the pick-up assembly 13 moves toward the target goods location, or it may also occur when the target object has been driven by the pick-up assembly 13 to retract to the base 11 and the pick-up assembly 13 moves toward the target object for the secondary picking.

Based on this, the pick-and-place mechanism 1 according to the embodiments of the present disclosure may further include a third detection structure 150, and the third detection structure 150 is configured to detect a distance between the pick-up assembly 13 and the target object. When the distance is less than or equal to a fourth preset distance, the pick-up assembly 13 moves toward the target object at a first preset speed, and the first preset speed is less than a second preset speed. The second preset speed is a moving speed of the pick-up assembly 13 when the distance between the pick-up assembly 13 and the target object is greater than the fourth preset distance.

For example, during the process that the pick-up assembly 13 moves towards the target goods location, when the distance between the pick-up assembly 13 and the target object is less than or equal to the fourth preset distance, the controller 114 may control a driving speed of the driving structure, so that the extension and retraction structure 12 drives the pick-up assembly 13 to move toward the target object at the first preset speed. In this way, it may be ensured that when the pick-up assembly 13 moves to the vicinity of the target object, it may slowly approach the target object until it comes into contact with the target object, thus avoiding the target object from moving backward or even falling from the target goods location, ensuring the safety of picking up the object, and also ensuring that the pick-up assembly 13, such as the suction cup, may stably attract the target object.

It may be understood that the third detection structure 150 may also be a trigger detection structure. For example, when the third detection structure 150 detects that the distance between the pick-up assembly 13 and the target object is less than or equal to the fourth preset distance, the third detection structure 150 may send a second signal. After the controller 114 receives the second signal, the controller 114 controls the pick-up assembly 13 to move toward the target object at the first preset speed, so as to ensure that the pick-up assembly 13 applies a steady force to the target object smoothly.

Of course, in other examples, the third detection structure 150 may also send a detection results such as distance information directly to the controller 114. The controller 114 compares the distance information with the fourth preset distance to determine whether the pick-up assembly 13 has been close to the target object. When the controller 114 determines that the distance information is less than or equal to the fourth preset distance, the controller 114 controls the pick-up assembly 13 to slow down and approach the target object at a reduced speed.

It may be understood that the third detection structure 150 is a distance sensor. For example, the third detection structure 150 may be any one of a contact switch, an infrared sensor or an ultrasonic sensor. The third detection structure 150 may also be a magnetic sensor (such as a Hall switch).

It should be noted that when the second detection structure 140 is the distance sensor, and the third detection structure 150 may be a distance sensor independent of the second detection structure 140, for example, two distance sensors may be arranged on the pick-up assembly 13, one of the two distance sensors serves as the second detection structure 140, and the other of the two distance sensors serves as the third detection structure 150.

Of course, in some examples, the distance sensor of the second detection structure 140 may be configured as the third detection structure 150, that is, the distance sensor of the second detection structure 140 may directly serve as the third detection structure 150. For example, one distance sensor may be arranged on the pick-up assembly 13, and the distance sensor is configured to detect the distance between the pick-up assembly 13 and the target object, and the distance may be used as the parameter information for determining whether the force applied by the pick-up assembly 13 to the target object is less than the preset force, and may also be used as the parameter information for determining whether the pick-up assembly 13 is close to the target object.

For example, during the process of the pick-up assembly 13 moving toward the target object, when the distance sensor detects that the distance between the pick-up assembly 13 and the target object is less than or equal to the fourth preset distance, the controller 114 may control the pick-up assembly 13 to approach the target object at the first preset speed. During the process of the pick-up assembly 13 retracting while carrying the target object, when the distance sensor detects that the distance between the pick-up assembly 13 and the target object is greater than the first preset distance, the controller 114 determines that the force applied by the pick-up assembly 13 to the target object is less than the preset force, and then controls the pick-up assembly 13 to increase the force applied to the target object, for example, controlling the pick-up assembly 13 to move toward the target object, and re-apply the force to the target object. Then, when the distance sensor detects that the distance between the pick-up assembly 13 and the target object is less than or equal to the first preset distance, the controller 114 controls the pick-up assembly 13 to retract.

Another aspect of the embodiments of the present disclosure provides an object transferring method, which is applied to the above pick-and-place mechanism 1, and includes the following steps.

In step S1, when the pick-and-place mechanism 1 reaches a specified position, the working distance between the pick-up assembly 13 and the target goods location is determined.

In some examples, after receiving a transfer instruction or specified position information sent by the host computer, the transfer robot moves to the target carrier along a path marking arranged on the ground in the warehousing system, and lifts and lowers the pick-and-place mechanism 1 to the specified position of the target carrier through a lifting and lowering mechanism 400.

Here, the controller 114 determining the working distance between the pick-up assembly 13 and the target goods location may include: obtaining a first distance between the front end of the base 11 and a front end of the target carrier. Generally, after the transfer robot moves to the target position, since the transfer robot moves along the marked path on the ground, the first distance between the front end of the base 11 and the front end of the target carrier is usually a constant value, which may be set according to the actual needs of the stored objects in some examples.

The controller 114 may determine the initial position of the pick-up assembly 13 according to the length of the draw wire fed back by the first detection structure 160, such as the draw-wire encoder, and there is a second distance between the initial position and the front end of the base 11.

The controller 114 obtains a third distance between the target goods location and the front end of the base 11. In the embodiments of the present disclosure, for the determination manners of the second distance and the third distance, reference may be made to the detailed description of the previous embodiments of the present disclosure, which will not be repeated in the embodiments of the present disclosure.

Based on the first distance, the second distance and the third distance, the working distance is determined. It may be understood that the working distance may be a moving distance of the pick-up assembly 13 moving from the initial position to the target goods location. In some examples, the working distance may be the sum of the first distance, the second distance and the third distance.

In some examples, before step S1, that is, when the pick-and-place mechanism 1 is at the specified position of the target carrier, the working distance between the pick-up assembly 13 and the target goods location is determined, the object transferring method further includes the following steps.

In step S01, the offset distance between the pick-up assembly 13 and the target goods location is determined according to a recognition state of the two-dimensional code camera 113 on the two-dimensional code of the target goods location; and/or, the controller 114 is configured to determine the offset distance according to the image of the target goods location captured by the depth camera 115.

In step S02, the position of the pick-up assembly 13 is adjusted based on the offset distance, so that the offset distance between the pick-up assembly 13 and the target goods location is within the preset distance range, so as to determine that the pick-and-place mechanism 1 is at the specified position of the target carrier.

In this way, the pick-up assembly 13 may be in direct alignment with the target goods location, or the offset distance between the pick-up assembly 13 and the target goods location is within the preset distance range, so that it is convenient for the pick-up assembly 13 to apply a force to the target goods in the target goods location, or it is convenient for the pick-up assembly 13 to accurately place the target goods in the target goods location.

In step S2, the driving structure drives the pick-up assembly 13 to move toward the target goods location.

Taking an example that the extension and retraction structure 12 drives the pick-up assembly 13 to move, the extension and retraction structure 12 may be driven to extend by the driving structure, so that the pick-up assembly 13 moves toward the target goods location. For details, reference may be made to the detailed description of the above embodiments of the present disclosure.

In step S3, the moving distance of the pick-up assembly 13 is obtained, and it is determined that the pick-up assembly 13 reaches the target goods location when the moving distance is equal to the working distance. It may be understood that the working distance may be equal to the first preset distance mentioned above.

It may be understood that when the moving distance is the second preset distance, such as zero, it is determined that the pick-up assembly 13 is at the initial position on the base 11. For example, after step S1, the first detection structure 160, such as the draw-wire encoder, determines that the moving distance of the pick-up assembly 13 is zero, which indicates that the pick-up assembly 13 is at the initial position. Then, the controller 114 controls the driving structure to operate based on detection information of the first detection structure 160, so as to drive the pick-up assembly 13 to move forward through the extension and retraction structure 12.

When the first detection structure 160 detects that the moving distance of the pick-up assembly 13 is the working distance, it is determined that the pick-up assembly 13 reaches the target goods location. For example, in the process that the extension and retraction structure 12 drives the pick-up assembly 13 to move forward, when the first detection structure 160 detects that the moving distance is the working distance, the controller 114 may determine that the pick-up assembly 13 has moved to the target goods location.

In step S4, the target object is transferred between the pick-up assembly 13 and the target goods location.

Here, the transfer of the target object may be that the pick-up assembly 13 applies a force to the target object in the target goods location, that is, the target object is taken from the target goods location (for example, the vacuum pump may be controlled to evacuate the suction cup); in some examples, the pick-up assembly 13 may release the force applied to the target object, that is, the pick-up assembly 13 places the target object in the target goods location.

In some examples, the object transferring method may further include the following steps.

In step S5, the driving structure drives the pick-up assembly 13 to move away from the target goods location.

For example, after the target object is transferred between the pick-up assembly 13 and the target goods location, the driving structure drives the extension and retraction structure 12 to retract, so that the pick-up assembly 13 moves away from the target goods location, i.e., retracting into the base 11. For example, after the pick-up assembly 13 takes out the target object from the target goods location, the pick-up assembly 13 may retract to the base 11 while carrying the target object, or after the pick-up assembly 13 places the target object in the target goods location, the pick-up assembly 13 may retract to the base 11 under the drive of the driving structure.

In step S6, the moving distance of the pick-up assembly 13 toward the target goods location is obtained, and when the moving distance is equal to the second preset distance, it is determined that the pick-up assembly 13 retracts to the initial position on the base 11. For example, after the pick-up assembly 13 places the target object in the target goods location, or takes out the target object from the target goods location, the pick-up assembly 13 retracts to the base 11. During the retraction process, when the first detection structure 160 detects that the moving distance of the pick-up assembly 13 toward the target goods location reaches the second preset distance, the pick-up assembly 13 retracts to the initial position on the base 11, the driving structure stops operating, so that the pick-up assembly 13 stops moving (as shown in FIG. 39). For example, the second preset distance may be zero.

Specifically, the pick-and-place mechanism 1 has an object returning operating state. In the object returning operating state, the object transferring method may include the following steps.

In step S21a, the driving structure drives the pick-up assembly 13 carrying the target object to move toward the target goods location.

For example, the driving structure may drive the extension and retraction structure 12 to extend, so as to drive the pick-up assembly 13 carrying the target object to move toward the target goods location.

In step S22a, the moving distance of the pick-up assembly 13 toward the target goods location is obtained, and when the moving distance is equal to the working distance, it is determined that the pick-up assembly 13 reaches the target goods location.

For example, the controller 114 may obtain detection information from the first detection structure 160. When the moving distance of the pick-up assembly 13 toward the target goods location detected by the first detection structure 160 is equal to the first preset distance, such as the working distance, the controller 114 may control the driving structure to stop operating, so that the pick-up assembly 13 stops moving forward.

In step S4a, the pick-up assembly 13 releases the force applied to the front end surface of the target object to transfer the target object to the target goods location.

In step S5a, the driving structure drives the pick-up assembly 13 to move away from the target goods location. It may be understood that in this process, the pick-up assembly 13 is in the unloaded state, that is, the pick-up assembly 13 does not carry the target object.

In step S6a, the moving distance of the pick-up assembly 13 toward the target goods location is obtained, and when the moving distance is equal to the second preset distance, it is determined that the pick-up assembly 13 retracts to the initial position on the base 11.

For example, the controller 114 may obtain the detection information of the first detection structure 160, and when the moving distance of the pick-up assembly 13 toward the target goods location detected by the first detection structure 160 is equal to the second preset distance, such as zero, the controller 114 may control the driving structure to stop operating, so that the pick-up assembly 13 stops retracting, and the pick-up assembly 13 is at the initial position on the base 11, thus completing the object returning work and preparing for a next object picking order.

In addition, the pick-and-place mechanism 1 also has an object picking operating state. In the object picking operating state, the object transferring method according to the embodiments of the present disclosure may include the following steps.

In step S21b, the driving structure drives the pick-up assembly 13 to move toward the target goods location. It may be understood that in this process, the pick-up assembly 13 is in the unloaded state, that is, the pick-up assembly 13 does not carry the target object.

In step S22b, the moving distance of the pick-up assembly 13 toward the target goods location is obtained, and when the moving distance is equal to the first preset distance, such as the working distance, it is determined that the pick-up assembly 13 reaches the target goods location.

During the movement of the pick-and-place mechanism 1 toward the target goods location, the moving distance of the pick-up assembly 13 toward the target goods location may be detected by the first detection structure 160. When the moving distance is equal to the first preset distance (i.e., the working distance), it may be determined that the pick-up assembly 13 has arrived at the target goods location, that is, the pick-up assembly 13 has reached the front end surface of the target object in the target goods location, and then the driving structure stops operating, so that the pick-up assembly 13 stops moving forward.

In step S4b, the pick-up assembly 13 applies a force to the front end surface of the target object and carries the target object to move away from the target goods location.

When the pick-up assembly 13 reaches the target goods location, the controller 114 may control the pick-up assembly 13 to apply the force to the front end surface of the target object, for example, the hooked claw structure is in hooking engagement with the slot of the front end surface of the target object, or the suction cup is attached to the front end surface of the target object, so as to transfer the target object to the pick-up assembly 13, and then the controller 114 may control the extension and retraction structure 12 to retract to drive the pick-up assembly 13 to retract to the base 11. For example, when the first detection structure 160 detects that the moving distance of the pick-up assembly 13 is zero, it may be determined that the pick-up assembly retracts to the initial position on the base 11, and the controller 114 may stop the driving of the driving structure on the pick-up assembly 13.

In step S6b, the moving distance of the pick-up assembly 13 toward the target goods location is obtained, and when the moving distance is equal to the second preset distance, it is determined that the pick-up assembly 13 retracts to the initial position on the base 11.

For example, the controller 114 may obtain the detection information of the first detection structure 160, and when the moving distance of the pick-up assembly 13 toward the target goods location detected by the first detection structure 160 is equal to the second preset distance, such as zero, the controller 114 may control the driving structure to stop operating, so that the pick-up assembly 13 stops retracting, and the pick-up assembly 13 has moved to the initial position on the base 11 while carrying the target object, thus completing the object picking work.

In some examples, when the pick-up assembly 13 carries the target object and moves away from the target goods location, that is, during the retraction process, the pick-up assembly 13 may not apply a sufficient force to the target object, causing the target object to be separated from the pick-up assembly 13. Therefore, the object transferring method according to the embodiments of the present disclosure may further include the following features.

In step S41b, the parameter information of the pick-up assembly 13 relative to the target object is obtained, and when the parameter information indicates that the force applied by the pick-up assembly 13 to the target object is less than the preset force, the force applied by the pick-up assembly 13 to the target object is increased.

In the process that the pick-up assembly 13 carries the target object and moves away from the target goods location, the controller 114 may obtain the parameter information of the pick-up assembly 13 relative to the target object.

Taking an example that the second detection structure 140 is the pressure sensor, the controller 114 may obtain the pressure applied by the pick-up assembly 13 to the target object detected by the pressure sensor, that is, the parameter information of the pick-up assembly 13 relative to the target object includes the pressure.

When the parameter information indicates that the force applied by the pick-up assembly 13 to the target object is less than the preset force, the force applied by the pick-up assembly 13 to the target object is increased so that the pick-up assembly 13 drives the target object to move into the base 11.

For example, in the process that the pick-up assembly 13 carries the target object and retracts into the base 11, when the parameter information detected by the second detection structure 140 indicates that the force applied by the pick-up assembly 13 to the target object is less than the preset force, it means that the force applied by the pick-up assembly 13 to the target object weakens, and the force applied by the pick-up assembly 13 to the target object is increased, that is, the pick-up assembly 13 re-applies the force to the target object, i.e., performing the secondary picking.

Taking the above example as an example, when the parameter information is the pressure value detected by the pressure sensor, and the pressure value is less than the preset pressure value, the pressure value indicates that the force applied by the pick-up assembly 13 to the target object is less than the preset force, and the controller 114 controls the pick-up assembly 13 to re-apply the force to the front end surface of the target object, so that the force applied by the pick-up assembly 13 to the target object is greater than or equal to the preset force.

In some embodiments, the parameter information includes the distance between the pick-up assembly 13 and the target object, and when the distance is greater than the third preset distance, it is determined that the force applied by the pick-up assembly 13 to the target object is less than the preset force; and/or, the parameter information includes the vacuum degree of the inner cavity of the suction cup structure, and when the vacuum degree is less than the preset vacuum degree, it is determined that the force applied by the pick-up assembly 13 to the target object is less than the preset force.

For example, when the second detection structure 140 includes the distance sensor, the distance sensor is configured to detect the distance between the pick-up assembly 13 and the target object. Taking an example that the pick-up assembly 13 includes the second mounting plate 1301 and the suction cup, when the pick-up assembly 13 stably acts on the target object, that is, when the target object is stably attached on the suction cup, the distance between the pick-up assembly 13, such as the second mounting plate 1301, and the target object is the third preset distance. It may be understood that in this example, when the target object is stably attached on the suction cup, the distance between the target object and the suction cup is zero, and the third preset distance between the second mounting plate 1301 and the target object may be a value less than or equal to the thickness of the suction cup.

It may be understood that when the distance between the pick-up assembly 13 and the target object is less than or equal to the third preset distance, it indicates that the force applied by the pick-up assembly 13 to the target object is greater than or equal to the preset force.

On the contrary, when the distance is greater than the third preset distance, it is determined that the force applied by the pick-up assembly 13 to the target object is less than the preset force, i.e., it indicates that the force between the pick-up assembly 13 and the target object is insufficient to enable the pick-up assembly 13 to stably carry the target object and retract to the initial position on the base 11.

When the pick-up assembly 13 includes the suction cup, in some other examples, the second detection structure 140 may also include the vacuum pressure gauge 180, and the vacuum pressure gauge 180 is in communication with the inner cavity of the suction cup to detect the vacuum degree of the inner cavity. It may be understood that in this example, the parameter information may include the vacuum degree. For example, in the process that the pick-up assembly 13 retracts while carrying the target object, the controller 114 obtains the vacuum degree detected by the vacuum pressure gauge 180. When the vacuum degree is less than the preset vacuum degree, the controller 114 determines that the force of the pick-up assembly 13 on the target object is less than the preset force, and then controls the pick-up assembly 13 to increase the force applied to the target object. For example, the air source device 1303 increases the vacuum degree of the inner cavity of the suction cup again to be greater than or equal to the preset vacuum degree, so as to stably attract the target object.

In other examples, the parameter information includes the distance and the vacuum degree, that is, the controller 114 may obtain the distance detected by the distance sensor and the vacuum degree detected by the vacuum pressure gauge 180.

When the distance is greater than the third preset distance and the vacuum degree is less than the preset vacuum degree, it is determined that the force applied by the pick-up assembly 13 to the target object is less than the preset force.

Taking an example where the distance sensor is the trigger sensor, and when it is detected that the distance between the pick-up assembly 13 and the target object is less than or equal to the third preset distance (for example, 50 mm), the first signal is sent, during the process that the pick-up assembly 13 retracts while carrying the target object, when the controller 114 receives the first signal, and the vacuum degree of the inner cavity of the suction cup is greater than or equal to the preset vacuum degree, the controller 114 determines that the force applied by the pick-up assembly 13 to the target object is greater than or equal to the preset force, that is, the target object is stably attached to the pick-up assembly 13, and continues to control the driving structure to operate (that is, reverse driving operation), so that the pick-up assembly 13 moves in the negative direction of direction a (that is, away from the target goods location) under the drive of the extension and retraction structure 12, so as to retract to the initial position on the base 11.

When the controller 114 does not receive the first signal and determines that the vacuum degree of the inner cavity of the suction cup is lower than the preset vacuum degree, it indicates that the force applied by the pick-up assembly 13 to the target object is less than the preset force. For example, when the vacuum degree of the inner cavity is zero and it is determined that the pick-up assembly 13 is separated from the target object, the driving structure may be controlled to stop the reverse driving operation to stop the pick-up assembly 13 from moving toward the base 11, and the driving structure may be controlled to start the forward driving operation to move the pick-up assembly 13 toward the target object. When the pick-up assembly 13 picks up the target object again (the suction cup attracts the target object), the controller 114 receives the first signal and continues to control the driving structure to perform the reverse driving operation, so that the pick-up assembly 13 continues to move to the initial position.

In some embodiments, the force applied by the pick-up assembly 13 to the target object being less than the preset force may include: the force applied by the pick-up assembly 13 to the target object being zero, and the pick-up assembly 13 being separated from the target object.

In some examples, the force applied by the pick-up assembly 13 to the target object weakens. For example, the distance between the pick-up assembly 13 and the target object is greater than the third preset distance, but the distance has not yet reached a situation where the force between the pick-up assembly 13 and the target object is zero. In this case, the distance may indicate that the force applied by the pick-up assembly 13 to the target object has weakened, but the pick-up assembly 13 and the target object have not yet been separated.

When the parameter information such as the pressure value or the magnetic attraction force value detected by the second detection structure 140 is zero, it indicates that the force applied by the pick-up assembly 13 to the target object is zero, and the pick-up assembly 13 is separated from the target object. For example, when the parameter information received by the controller 114 is zero, for example, the pressure value is zero, it is determined that the force applied by the pick-up assembly 13 to the target object is zero, and the pick-up assembly 13 is separated from the target object.

For the convenience of description, the distance between the pick-up assembly 13 and the target object when the force between the pick-up assembly 13 and the target object is zero may be taken as the fifth preset distance, and the fifth preset distance is greater than the third preset distance. When the distance sensor detects that the distance between the pick-up assembly 13 and the target object is greater than the third preset distance and less than the fifth preset distance, it indicates that the force applied by the pick-up assembly 13 to the target object has weakened, but the pick-up assembly 13 and the target object have not yet been separated.

For example, when the pick-up assembly 13 includes the second mounting plate 1301 and the suction cup, and the force between the suction cup and the target object is zero, the suction cup is separated from the target object, and the fifth preset distance may be greater than the thickness of the suction cup, that is, the target object is separated from the suction cup, and has a certain distance from the suction cup. Alternatively, when the pick-up assembly 13 includes the second mounting plate 1301 and the electromagnet, and the force between the electromagnet and the target object is zero, the electromagnet is separated from the target object, and the fifth preset distance is greater than the third preset distance.

In some other examples, when the distance is greater than the third preset distance, the pick-up assembly 13 is separated from the target object, and the force applied by the pick-up assembly 13 to the target object is zero. For example, when the distance between the pick-up assembly 13 and the target object is greater than or equal to the fifth preset distance, it indicates that the pick-up assembly 13 is separated from the target object, and the force applied by the pick-up assembly 13 to the target object is zero.

For another example, when the vacuum degree is zero, it indicates that the pick-up assembly 13 is separated from the target object, and the force applied by the pick-up assembly 13 to the target object is zero.

When the force applied by the pick-up assembly 13 to the target object is zero, increasing the force applied by the pick-up assembly 13 to the target object includes: in a case that the pick-up assembly 13 is separated from the target object, the pick-up assembly 13 moving toward the target object and applying the force to the front end surface of the target object.

Based on the above description, when the pick-up assembly 13 is separated from the target object, increasing the force applied by the pick-up assembly 13 to the target object may specifically include: the pick-up assembly 13 moving toward the target object and applying the force to the target object.

For example, when it is determined that the pick-up assembly 13 is separated from the target object, the controller 114 may control the driving structure to operate, and the driving structure drives the extension and retraction structure 12 to extend, so as to drive the suction cup to move forward, and the air source device 1303 may increase the vacuum degree of the inner cavity of the suction cup, so that the suction cup attracts the target object, ensuring that the pick-up assembly 13 acts on the target object again to realize the secondary picking process. Then, the controller 114 controls the driving structure to operate, so that the driving structure drives the extension and retraction structure 12 to retract, and thus the pick-up assembly 13 carries the target object and retracts into the base 11.

For example, while the suction cup moves toward the target object, the air source device 1303 evacuates air from the inner cavity of the suction cup so that the vacuum degree of the inner cavity of the suction cup reaches the preset vacuum degree to attract the target object until the controller 114 determines that the force applied by the pick-up assembly 13 to the target object is greater than or equal to the preset force, and then the controller 114 continues to control the pick-up assembly 13 to retract.

In step S42b, the pick-up assembly 13 carries the target object and moves into the base 11.

For example, the controller 114 may control the driving structure to operate, so that the driving structure drives the extension and retraction structure 12 to retract, so as to drive the pick-up assembly 13 to carry the target object and move into the base 11 until the pick-up assembly 13 moves to the initial position on the base 11.

For example, in the process that the pick-up assembly 13 carries the target object and moves into the base 11, when the first detection structure 160, such as the draw-wire sensor, detects that the moving distance of the pick-up assembly 13 toward the target goods location is zero, it indicates that the pick-up assembly 13 has reached the initial position, and the controller 114 may control the driving structure to stop operating, thus completing the object picking work.

In some embodiments, before the pick-up assembly 13 carries the target object and moves away from the target goods location, the method may include the following steps.

In step S7, the parameter information of the pick-up assembly 13 relative to the target object is obtained. When the parameter information indicates that the force applied by the pick-up assembly 13 to the target object is greater than or equal to the preset force, the pick-up assembly 13 carries the target object and moves into the base 11.

For example, when the obtained parameter information, such as the obtained pressure value of the pressure sensor, is greater than or equal to the preset pressure value, the controller 114 may determine that the force applied by the pick-up assembly 13 to the target object is greater than or equal to the preset force, that is, it is determined that the pick-up assembly 13 stably acts on the front end surface of the target object, and then the driving structure drives the extension and retraction structure 12 to retract, so as to drive the pick-up assembly 13 to retract into the base 11 until the pick-up assembly 13 reaches the initial position.

Continuing with the example that the parameter information includes the distance between the pick-up assembly 13 and the target object, when the distance is less than or equal to the third preset distance, it is determined that the force applied by the pick-up assembly 13 to the target object is greater than or equal to the preset force. For example, when the controller 114 obtains the distance of the distance sensor and determines that the distance of the distance sensor is less than or equal to the third preset distance, the controller 114 determines that the pick-up assembly 13, such as the suction cup, stably attracts the target object, and then controls the pick-up assembly 13 to retract.

And/or, when the parameter information includes the vacuum degree of the inner cavity of the suction cup structure, in a case that the vacuum degree is greater than or equal to the preset vacuum degree, it is determined that the force applied by the pick-up assembly 13 to the target object is greater than or equal to the preset force. For example, when the controller 114 obtains the vacuum degree detected by the vacuum pressure gauge 180 and determines that the vacuum degree detected by the vacuum pressure gauge 180 is greater than or equal to the preset vacuum degree, the controller 114 determines that the pick-up assembly 13, such as the suction cup, stably attracts the target object, and then controls the pick-up assembly 13 to retract.

Alternatively, when the distance obtained by the controller 114 is less than or equal to the third preset distance, and the vacuum degree detected by the vacuum pressure gauge 180 is greater than or equal to the preset vacuum degree, it is determined that the pick-up assembly 13, such as the suction cup, stably attracts the target object, and the pick-up assembly 13 is controlled to retract.

Taking the object picking of the pick-and-place mechanism 1 as an example, in the process that the pick-up assembly 13 moves toward the target object, when the moving speed of the pick-up assembly 13 is too fast, it is very easy for the pick-up assembly 13 to hit the target object and move it backward a certain distance when the pick-up assembly 13 reaches the target object, so that the pick-up assembly 13 cannot stably act on the target object. It may be understood that the above situation may occur when the target object is still placed in the target goods location and the pick-up assembly 13 moves toward the target goods location, or it may also occur when the target object has been driven by the pick-up assembly 13 to retract to the base 11 and the pick-up assembly 13 moves toward the target object for the secondary picking.

Based on this, in some embodiments, the driving structure driving the pick-up assembly 13 to move toward the target goods location, and/or the pick-up assembly 13 moving toward the target object may include:
obtaining the distance between the pick-up assembly 13 and the target object, and when the distance is less than or equal to the fourth preset distance, reducing the moving speed of the pick-up assembly 13, so that the pick-up assembly 13 moves towards the target object at the first preset speed, where the first preset speed is less than the second preset speed, and the second preset speed is the moving speed of the pick-up assembly 13 when the distance between the pick-up assembly 13 and the target object is greater than the fourth preset distance.

For example, during the process that the pick-up assembly 13 moves towards the target goods location, when the distance between the pick-up assembly 13 and the target object is less than or equal to the fourth preset distance, the controller 114 may control the driving speed of the driving structure, so that the extension and retraction structure 12 drives the pick-up assembly 13 to move toward the target object at the first preset speed. In this way, it may be ensured that when the pick-up assembly 13 moves to the vicinity of the target object, it may slowly approach the target object until it comes into contact with the target object, thus avoiding the target object from moving backward or even falling from the target goods location, ensuring the safety of picking up the object, and also ensuring that the pick-up assembly 13, such as the suction cup, may stably attract the target object.

It may be understood that the third detection structure 150 may also be the trigger detection structure. For example, when the third detection structure 150 detects that the distance between the pick-up assembly 13 and the target object is less than or equal to the fourth preset distance, the third detection structure 150 may send the second signal. After the controller 114 receives the second signal, the controller 114 controls the pick-up assembly 13 to move toward the target object at the first preset speed, so as to ensure that the pick-up assembly 13 applies a steady force to the target object smoothly.

Of course, in other examples, the third detection structure 150 may also send he detection results such as distance information directly to the controller 114. The controller 114 compares the distance information with the fourth preset distance to determine whether the pick-up assembly 13 has been close to the target object. When the controller 114 determines that the distance information is less than or equal to the fourth preset distance, the controller 114 controls the pick-up assembly 13 to slow down and approach the target object at a reduced speed.

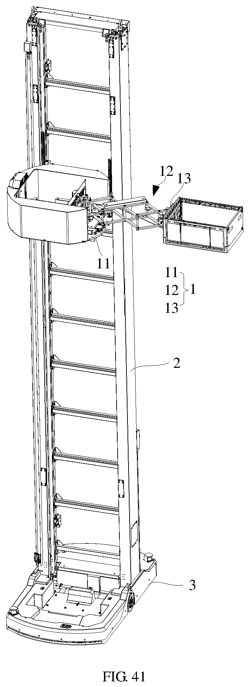

FIG. 41 is a schematic view of a transfer robot according to an embodiment of the present disclosure.

As shown in FIG. 41, the embodiments of the present disclosure further provide a transfer robot, which includes a chassis 3, a mast 2, and the pick-and-place mechanism 1 according to any implementation of the aforementioned embodiments of the present disclosure. The mast 2 is arranged on the chassis 3, and the pick-and-place mechanism 1 is arranged on the mast 2.

Specifically, in the embodiments of the present disclosure, the chassis 3 may be the same as or similar to the chassis 3 in the related art. In addition, the embodiments of the present disclosure has the same or corresponding technical features as the aforementioned embodiments, and therefore has the same or similar technical effects as the aforementioned embodiments of the present disclosure. For details, reference may be made to the detailed description of the aforementioned embodiments of the present disclosure, which will not be repeated in the embodiments of the present disclosure.

In the embodiments of the present disclosure, the mast 2 may be fixedly arranged on the chassis 3 and is configured to move under the drive of the chassis 3. The connection manner between the mast 2 and the chassis 3 may be the same as or similar to that in the related art, which will not be repeated in the embodiments of the present disclosure.

In addition, it may be understood that in the embodiments of the present disclosure, a communication module may be arranged on the chassis 3 or the mast 2, and the communication module may communicate with the host computer and receive control signals sent by the host computer. In addition, the communication module may also upload the position information of the transfer robot to the host computer, and the host computer controls the transfer robot to move in the warehousing system according to the transfer task, for example, moving to the specified position of the target carrier, so as to facilitate docking with the target goods location in the target carrier, thereby realizing the process of picking up or returning objects.

The pick-and-place mechanism 1 is arranged on the mast 2 and may move up and down along the mast 2. For example, after the transfer robot moves to the target carrier, the pick-and-place mechanism 1 moves up and down along the mast 2 to reach the height of the goods location where a corresponding target object is located.

In some examples, the transfer robot further includes: a temporary storage plate (not shown in the drawings) and a rotating mechanism (not shown in the drawings).

The temporary storage plate is arranged on the mast 2, and the rotating mechanism is connected to the pick-and-place mechanism 1. The rotating mechanism is configured to drive the pick-and-place mechanism 1 to rotate, so that the pick-and-place mechanism 1 may place the target object on the temporary storage plate, or take out the target object from the temporary storage plate. The goods location of the temporary storage plate mentioned above is formed on the temporary storage plate. The goods location of the temporary storage plate may be one of the target goods locations, that is, the pick-up assembly 13 may be driven by the driving structure 14 to extend into the goods location of the temporary storage plate.

It may be understood that the direction in which the pick-up assembly 13 moves toward the goods location of the target carrier may be perpendicular to the direction in which the pick-up assembly 13 moves toward the goods location of the temporary storage plate. In other words, the movement direction of the pick-up assembly 13 when the target goods location is the goods location of the temporary storage plate may be perpendicular to the movement direction of the pick-up assembly 13 when the target goods location is the goods location in the target carrier.

It may be understood that the pick-and-place mechanism 1 may be located on one side of the mast 2, and the temporary storage plate may be arranged on the other side of the mast 2. In some examples, multiple temporary storage plates may be arranged along a height direction of the mast 2, or, in some understandings, multiple layers of temporary storage plates may be arranged along a height direction of the mast 2. In this way, the transfer robot may transfer multiple target objects at a time, thereby improving the transfer efficiency of the target objects.

In some examples, the driving structure 14 on the mast 2 may be connected to a lifting and lowering plate, and the lifting and lowering plate may be lifted and lowered under the drive of the driving mechanism. A rotating mechanism is arranged on the lifting and lowering plate, and the rotating mechanism is connected to the base 11 of the pick-and-place mechanism 1. The base 11 may rotate relative to the lifting and lowering plate, thereby driving the pick-and-place mechanism 1 to rotate.

The above specific implementations further illustrate the purpose, technical solutions and beneficial effects of the embodiments of the present disclosure. It should be understood that the above only relates to the specific implementations of the embodiments of the present disclosure and is not used to limit the protection scope of the embodiments of the present disclosure. Any modifications, equivalent substitutions, improvements, etc. made on the basis of the technical solutions of the embodiments of the present disclosure should be included in the protection scope of the embodiments of the present disclosure.

## Claims

1. A pick-and-place mechanism, comprising:
a base (11) having an access opening (1105) for a target object to enter and exit;
an extension and retraction structure (12) arranged on the base (11), wherein a free end of the extension and retraction structure (12) is configured to selectively extend from or retract into the base (11) through the access opening (1105);
a pick-up assembly (13) arranged at the free end, wherein the pick-up assembly (13) is configured to move relative to the base (11) under the drive of the free end, and the pick-up assembly (13) is configured to act on a front end surface of the target object when picking up or returning the target object, so as to transfer the target object, wherein the front end surface of the target object is an end surface of the target object facing the pick-up assembly (13) in a case that the target object is to be picked up or returned;
a driving structure (14) connected to the extension and retraction structure (12), and configured to drive the free end to extend from or retract into the base (11), so as to drive the pick-up assembly (13) to reciprocate between a target goods location and the base (11); and
an air source device (1303), wherein the pick-up assembly (13) comprises a suction cup, and the air source device (1303) is in communication with the suction cup,
wherein the air source device (1303) is configured to reduce a pressure in an inner cavity of the suction cup in such a manner that the target object is attached to the suction cup; and the air source device (1303) is configured to increase the pressure in the inner cavity of the suction cup in such a manner that the target object is detached from the suction cup.

2. The pick-and-place mechanism according to claim 1, wherein
the driving structure (14) is configured to be fitted with a power piece (121) of the extension and retraction structure (12) and provide power to the power piece (121), so that the power piece (121) is configured to drive the extension and retraction structure (12) to extend from or retract into the base (11); and
the pick-and-place mechanism further comprises:
a follower tray (15), wherein in a case that the pick-up assembly (13) picks up or returns the target object, at least part of the follower tray (15) is located in a movement path of the target object, and the follower tray (15) is configured to extend from the base (11) to support the target object in a case that the pick-up assembly (13) carries the target object,
wherein, during a process of the extension and retraction structure (12) retracting into the base (11), the power piece (121) is configured to be fitted with the follower tray (15) to drive the follower tray (15) to retract into the base (11).

3. The pick-and-place mechanism according to claim 2, wherein the follower tray (15) comprises:
a first follower tray (151) arranged on the base (11), wherein at least part of the first follower tray (151) is configured to extend from the base (11) through the access opening (1105) to support the target object in the movement path of the target object;
a second follower tray (152) arranged side by side with the first follower tray (151) on the base (11), wherein at least part of the second follower tray (152) is configured to extend from the base (11) through the access opening (1105) to support the target object in the movement path of the target object; and
a connecting member (153) connected to the first follower tray (151) and the second follower tray (152) in such a manner that the first follower tray (151) and the second follower tray (152) are configured to move synchronously relative to the base (11),
wherein the power piece (121) is configured to be fitted with the connecting member (153) to drive the first follower tray (151) and the second follower tray (152) to retract into the base (11).

4. The pick-and-place mechanism according to claim 3, wherein the first follower tray (151) and the second follower tray (152) are slidably arranged on the base (11); and the connecting member (153) movably connects the first follower tray (151) with the second follower tray (152).

5. The pick-and-place mechanism according to claim 4, wherein the connecting member (153) comprises:
a first sub-connecting member (1531) connected to the first follower tray (151); and
a second sub-connecting member (1532) connected to the second follower tray (152),
wherein the first sub-connecting member (1531) is provided with a first shaft hole (15311), and the second sub-connecting member (1532) is provided with a second shaft hole (15321); and a pin shaft (1533) is inserted through the first shaft hole (15311) and the second shaft hole (15321) in such a manner the first sub-connecting member (1531) is movably connected with the second sub-connecting member (1532).

6. The pick-and-place mechanism according to claim 5, wherein the pin shaft (1533) comprises:
a first shaft segment (15331) inserted through the first shaft hole (15311); and
a second shaft segment (15332) inserted through the second shaft hole (15321);
wherein the first shaft segment (15331) is movably inserted through the first shaft hole (15311), and/or the second shaft segment (15332) is movably inserted through the second shaft hole (15321).

7. The pick-and-place mechanism according to claim 6, wherein a diameter of the first shaft hole (15311) is larger than a diameter of the second shaft hole (15321), the first shaft segment (15331) is movably inserted through the first shaft hole (15311), and the second shaft segment (15332) is threadedly connected to the second shaft hole (15321),
wherein a diameter of the first shaft segment (15331) is larger than a diameter of the second shaft segment (15332), and the diameter of the first shaft hole (15311) is larger than the diameter of the first shaft segment (15331).

8. The pick-and-place mechanism according to claim 7, wherein the pin shaft (1533) further includes: a locking segment (15333) located at an end of the first shaft segment (15331) facing away from the second shaft segment (15332), wherein a diameter of the locking segment (15333) is larger than the diameter of the first shaft hole (15311), and the locking segment (15333) is configured to lock the first sub-connecting member (1531) and the second sub-connecting member (1532) along an axial direction of the pin shaft (1533).

9. The pick-and-place mechanism according to claim 2, wherein the follower tray (15) is slidably arranged on the base (11); and
the extension and retraction structure (12) comprises a first force-applying member (1201), the follower tray (15) comprises a force-bearing portion (1501), and the first force-applying member (1201) is configured to at least apply a force to the force-bearing portion (1501) in a case that the extension and retraction structure (12) retracts, so as to drive the follower tray (15) to retract into the base (11).

10. The pick-and-place mechanism according to claim 9, wherein the extension and retraction structure (12) comprises a scissor structure, and the scissor structure comprises a plurality of first hinge joints (12023) and a plurality of second hinge joints (12024); the plurality of first hinge joints (12023) are arranged along an extension and retraction direction of the scissor structure, and the plurality of second hinge joints (12024) are located on both sides of the arrangement of the plurality of first hinge joints (12023); and
in a case that the scissor structure retracts and drives the follower tray (15) to retract into the base (11), the first force-applying member (1201) is configured to be in contact with the force-bearing portion (1501), and in a case that the follower tray (15) retracted into the base (11), the first force-applying member (1201) is configured to apply a force to the force-bearing portion (1501).

11. The pick-and-place mechanism according to claim 10, wherein the first force-applying member (1201) is arranged at one or more of the plurality of second hinge joints (12024), and in a case that the scissor structure retracts and drives the follower tray (15) to retract into the base (11), the first force-applying member (1201) is configured to be in sliding contact with the force-bearing portion (1501).

12. The pick-and-place mechanism according to claim 11, wherein one of the first force-applying member (1201) and the force-bearing portion (1501) comprises a rolling member (12011), and the rolling member (12011) is configured to be in rolling contact with the other of the first force-applying member (1201) and the force-bearing portion (1501).

13. The pick-and-place mechanism according to any one of claims 2 to 12, wherein a scissor structure of the extension and retraction structure (12) comprises two sets of scissor units (1202) arranged opposite to each other, one or more first connecting rods (1203) and one or more second connecting rods (1204);
the one or more first connecting rods (1203) are connected between the first hinge joints (12023) of the two sets of scissor units (1202), and the one or more second connecting rods (1204) are connected between the second hinge joints (12024) of the two sets of scissor units (1202); and
the power piece (121) comprises one of the one or more first connecting rod (1203) and an extension member (12025), wherein the extension member (12025) is connected to the one of the one or more first connecting rods (1203), and the extension member (12025) is configured to be fitted with the follower tray (15).

14. The pick-and-place mechanism according to claim 13, wherein the base (11) comprises:
a bottom plate (1101); and
a first mounting plate (1102) arranged on the bottom plate (1101), wherein the first mounting plate (1102) is located at an end of the bottom plate (1101) opposite to the access opening (1105); and a third guide rail (1104) is arranged on the first mounting plate (1102),
wherein the scissor structure comprises at least one scissor piece (12021), a first scissor piece of the at least one scissor piece (12021) comprises two transmission rods (12022), the two transmission rods (12022) are rotatably connected at the first hinge joint (12023), and the two transmission rods (12022) are slidably arranged to the third guide rail (1104).

15. The pick-and-place mechanism according to claim 14, wherein the third guide rail (1104) comprises:
a first fixing portion (11041) fixedly connected to the first mounting plate (1102); and
a first guide portion (11042) located on a side of the first fixing portion (11041),
wherein each of the two transmission rods (12022) comprises a third slider (1103), the third slider (1103) is fitted over the first guide portion (11042), and the third slider (1103) is rotatably connected to the transmission rod (12022).

16. The pick-and-place mechanism according to claim 14, wherein the pick-up assembly (13) comprises:
a second mounting plate (1301) movably arranged to a second scissor piece of the at least one scissor piece (12021), wherein a fourth guide rail (1308) is arranged on the second mounting plate (1301); and the second scissor piece comprises two transmission rods (12022), the two transmission rods (12022) are rotatably connected at the first hinge joint (12023), and the two transmission rods (12022) are slidably arranged to the fourth guide rail (1308); and
a second force-applying member (1302) arranged on the second mounting plate (1301), and configured to apply a force to the front end surface of the target object to transfer the target object,
wherein the front end surface of the target object is the end surface of the target object facing the pick-up assembly (13) in a case that the target object is to be picked up or returned.

17. The pick-and-place mechanism according to claim 16, wherein the fourth guide rail (1308) comprises:
a second fixing portion (13081) fixedly connected to the second mounting plate (1301);
a second guide portion (13082) located on a side of the second fixing portion (13081); and
a third guide portion (13083) arranged side by side with the second guide portion (13082) and arranged on another side of the second fixing portion (13081),
wherein each of the two transmission rods (12022) comprises a fourth slider (1309), the fourth slider (1309) is fitted over the second guide portion (13082) and the third guide portion (13083), and the fourth slider (1309) is rotatably connected to the transmission rod (12022).

18. The pick-and-place mechanism according to claim 1, further comprising: a second limiting member (111) arranged on the base (11) and located at a front end of the follower tray (15), wherein the second limiting member (111) has a first state and a second state,
in the first state, at least part of the second limiting member (111) extends from a support surface of the follower tray (15); and in the second state, the second limiting member (111) is lower than the support surface of the follower tray (15), wherein the support surface is configured to support the target object,
wherein in a case that the target object is moved to a preset position to trigger an action signal, the limiting member (111) is configured to switch to the first state according to the action signal, to limit the target object within the base (11), wherein the preset position is located at a side of the second limiting member (111) facing the base (11).

19. The pick-and-place mechanism according to claim 18, wherein the second limiting member (111) is configured to be in the second state in a case that the follower tray (15) at least partially extends out of the base (11), and to be in the first state in a case that the follower tray (15) is located within the base (11), so as to limit a movement direction of the target object on the follower tray (15).

20. The pick-and-place mechanism according to claim 19, wherein the second limiting member (111) comprises a first portion (11101) and a second portion (11102), the first portion (11101) and the second portion (11102) have an included angle therebetween, a connection portion of the first portion (11101) and the second portion (11102) is rotatably connected to the base (11), and the first portion (11101) is located at a bottom of the follower tray (15); and
an abutment member (1502) is arranged at the front end of the follower tray (15), the abutment member (1502) is arranged between the first portion (11101) and the second portion (11102), and the abutment member (1502) is configured to: push the second portion (11102) in a case that the front end of the follower tray (15) extends out of the base (11), so that the second portion (11102) rotates to a bottom of the support surface of the follower tray (15), and the second limiting member (111) is in the second state; and to push the first portion (11101) in a case that the front end of the follower tray (15) retracts into the base (11), so that the second portion (11102) rotates to extend from the support surface of the follower tray (15), and the second limiting member (111) is in the first state.

21. The pick-and-place mechanism according to claim 18, further comprising:
a second driving member (1110) arranged on the base (11), and configured to drive the second limiting member (111) to switch between the first state and the second state,
wherein the second driving member (1110) is configured to drive the second limiting member (111) to switch to the first state in a case that the target object is moved to the preset position.

22. The pick-and-place mechanism according to claim 21, wherein the second limiting member (111) is rotatably arranged on the base (11), and the second driving member (1110) is configured to drive the second limiting member (111) to rotate to switch between the first state and the second state.

23. The pick-and-place mechanism according to claim 21 or 22, further comprising:
a first sensor (116) arranged on the base (11), wherein the first sensor (116) is configured to detect a position of the target object and trigger a first trigger signal in a case that the target object is at the preset position,
wherein the second limiting member (111) is configured to switch from the second state to the first state according to the first trigger signal; and the action signal comprises the first trigger signal.

24. The pick-and-place mechanism according to claim 23, wherein the first sensor (116) is further configured to cooperate with a power piece (121) of the extension and retraction structure (12) to trigger the first trigger signal; and
the driving structure (14) is configured to stop driving the power piece (121) according to the first trigger signal.

25. The pick-and-place mechanism according to claim 24, wherein the first sensor (116) comprises:
a first signal transmitting portion (1161) arranged on the base (11);
a first signal receiving portion (1162) arranged on the base (11), wherein the first signal receiving portion (1162) is configured to receive a signal transmitted by the first signal transmitting portion (1161); and
a trigger member (1163) movably arranged on the base (11), wherein the trigger member (1163) is configured to move synchronously with the target object in a case that the target object enters or exits the base (11), and the first sensor (116) is configured to trigger the first trigger signal in a case that the trigger member (1163) is located between the first signal transmitting portion (1161) and the second signal receiving portion (1172).

26. The pick-and-place mechanism according to claim 25, wherein the trigger member (1163) is fitted with the power piece (121), and the trigger member (1163) and the power piece (121) are configured to move synchronously relative to the base (11) in a case that the extension and retraction structure (12) moves relative to the base (11).

27. The pick-and-place mechanism according to claim 25, wherein the extension and retraction structure (12) is fitted with the trigger member (1163) to drive the trigger member (1163) to move relative to the base (11); and the trigger member (1163) is configured to be located between the first signal transmitting portion (1161) and the second signal transmitting portion (1171) in a case that the pick-up assembly (13) is located at an initial position on the base (11).

28. The pick-and-place mechanism according to claim 27, further comprising:
a second sensor (117) arranged on the base (11), and configured to detect whether the target object is present at the preset position before the second limiting member (111) switches to the first state,
wherein the second limiting member (111) is configured to switch to the first state according to the action signal, in a case that the target object is present at the target position to trigger the action signal.

29. The pick-and-place mechanism according to claim 28, wherein the second sensor (117) is configured to trigger a second trigger signal in a case that the target object is present at the target position; and
the second limiting member (111) is configured to switch to the first state according to the first trigger signal and the second trigger signal, and the action signal comprises the first trigger signal and the second trigger signal.

30. The pick-and-place mechanism according to claim 29, wherein the second sensor (117) comprises:
a second signal transmitting portion (1171) arranged on the base (11); and
a second signal receiving portion (1172) arranged on the base (11), and configured to receive a signal transmitted by the second signal transmitting portion (1171), wherein a signal transmission path between the second signal transmitting portion (1171) and the second signal receiving portion (1172) intersects with a movement path of the target object, to determine whether the target object is located at the preset position.

31. The pick-and-place mechanism according to claim 1, further comprising:
a transmission structure arranged on the base (11) and movable relative to the base (11), and the pick-up assembly (13) being arranged on the transmission structure; and
a first detection structure (160) configured to detect a moving distance of the pick-up assembly (13) toward the target goods location, to determine a position of the pick-up assembly (13).

32. The pick-and-place mechanism according to claim 31, wherein
in a case that the moving distance is equal to a first preset distance, the pick-up assembly (13) is configured to be located at the target goods location, and the pick-up assembly (13) is configured to take out the target object from the target goods location, or the pick-up assembly (13) is configured to place the target object in the target goods location; and
in a case that the moving distance is equal to a second preset distance, the pick-up assembly (13) is configured to be located on the base (11).

33. The pick-and-place mechanism according to claim 31, further comprising:
a second detection structure (140) configured to detect parameter information of the pick-up assembly (13) relative to the target object,
wherein in a case that the parameter information indicates that a force applied by the pick-up assembly (13) to the target object is less than a preset force, the pick-up assembly (13) is configured to increase the force applied to the target object so that the pick-up assembly (13) drives the target object to move into the base (11).

34. The pick-and-place mechanism according to claim 33, wherein the second detection structure (140) comprises a distance sensor;
the distance sensor is configured to detect a distance between the pick-up assembly (13) and the target object; and
in a case that the distance is greater than a third preset distance, it is determined that the force applied by the pick-up assembly (13) to the target object is less than the preset force, wherein the parameter information comprises the distance.

35. The pick-and-place mechanism according to claim 34, wherein in a case that the distance is greater than the third preset distance, the pick-up assembly (13) is configured to be separated from the target object, and the force applied by the pick-up assembly (13) to the target object is configured to be zero; and
increasing the force applied by the pick-up assembly (13) to the target object comprises: the pick-up assembly (13) moving toward the target object and applying the force to the target object.

36. The pick-and-place mechanism according to claim 33, wherein
the second detection structure (140) further comprises a vacuum pressure gauge (180), and the vacuum pressure gauge (180) is in communication with the inner cavity of the suction cup to detect a vacuum degree of the inner cavity; and
in a case that the vacuum degree is less than a preset vacuum degree, it is determined that the force applied by the pick-up assembly (13) to the target object is less than the preset force, wherein the parameter information comprises the vacuum degree.

37. The pick-and-place mechanism according to claim 36, wherein in a case that the vacuum degree is zero, the pick-up assembly (13) is configured to be separated from the target object, and the force applied by the pick-up assembly (13) to the target object is configured to be zero; and
increasing the force applied by the pick-up assembly (13) to the target object comprises: the pick-up assembly (13) moving toward the target object and applying the force to the target object.

38. The pick-and-place mechanism according to claim 36, wherein a plurality of the suction cups are arranged, and the inner cavity of each suction cup is respectively connected to one air source device (1303), and is in communication with one vacuum pressure gauge (180); and
in a case that the vacuum degree detected by at least one of the vacuum pressure gauges (180) is less than the preset vacuum degree, it is determined that the force applied by the pick-up assembly (13) to the target object is less than the preset force; or, in a case that the vacuum degree detected by each of the vacuum pressure gauges (180) is less than the preset vacuum degree, it is determined that the force applied by the pick-up assembly (13) to the target object is less than the preset force.

39. The pick-and-place mechanism according to claim 33, further comprising a third detection structure (150),
wherein the third detection structure (150) is configured to determine a distance between the pick-up assembly (13) and the target object, and in a case that the distance is less than or equal to a fourth preset distance, the pick-up assembly (13) is configured to move toward the target object at a first preset speed, wherein the first preset speed is less than a second preset speed, and the second preset speed is a moving speed of the pick-up assembly (13) in a case that the distance between the pick-up assembly (13) and the target object is greater than the fourth preset distance.

40. The pick-and-place mechanism according to claim 31, further comprising: at least one of a depth camera (115), a two-dimensional code camera (113), a first sensor (116), a second sensor (117), a third sensor (118) and a fourth sensor (1305), and a controller (114), wherein the controller (114) is configured to determine a height of the target goods location according to a recognition state of a two-dimensional code of the target goods location by the two-dimensional code camera (113), and/or, the controller (114) is configured to determine an offset distance according to an image of the target goods location taken by the depth camera (115); and the controller (114) is configured to adjust the position of the pick-up assembly (13) based on the height of the target goods location and/or the offset distance, to allow the pick-up assembly (13) to move to a specified position of a target carrier;
the controller (114) is further configured to determine whether the pick-up assembly (13) is at an initial position according to a first trigger signal of the first sensor (116), or the controller (114) is further configured to determine whether the pick-up assembly (13) is at an initial position according to a zero position signal of a motor encoder of the driving structure (14);
the controller (114) is further configured to determine whether the target object is present on the pick-up assembly (13) at the initial position according to a second trigger signal of the second sensor (117);
the controller (114) is further configured to determine whether the target object is present in the target goods location according to a third trigger signal of the third sensor (118); and
the controller (114) is further configured to determine a position state between the target object and the pick-up assembly (13) according to a fourth trigger signal of the fourth sensor (1305),
wherein the position state refers to that in a case that a distance between the pick-up assembly (13) and the target object in the target goods location is less than or equal to a first preset distance during a process of the pick-up assembly (13) moving toward the target goods location, the controller (114) is configured to control the pick-up assembly (13) to approach the target object at a first preset speed; or, the position state refers to that in a case that a distance between the pick-up assembly (13) and the target object is less than or equal to a second preset distance during a process of the pick-up assembly (13) retracting into the base (11), the controller (114) is configured to determine that the target object is present on the pick-up assembly (13).

41. An object transferring method, comprising:
determining a working distance between a pick-up assembly (13) and a target goods location in a case that a pick-and-place mechanism (1) reaches a specified position;
driving, by a driving structure, the pick-up assembly (13) to move toward the target goods location;
obtaining a moving distance of the pick-up assembly (13) toward the target goods location, and determining that the pick-up assembly (13) reaches the target goods location in a case that the moving distance is equal to the working distance; and
transferring a target object between the pick-up assembly (13) and the target goods location.

42. The object transferring method according to claim 41, further comprising:
driving, by the driving structure, the pick-up assembly (13) to move away from the target goods location; and
obtaining the moving distance of the pick-up assembly (13) toward the target goods location, and determining that the pick-up assembly (13) retracts to an initial position on the base (11) in a case that the moving distance is equal to a second preset distance.

43. The object transferring method according to claim 41, wherein the pick-and-place mechanism (1) has an object picking operating state, and in the object picking operating state, the object transferring method comprises:
driving, by the driving structure, the pick-up assembly (13) to move toward the target goods location;
obtaining the moving distance of the pick-up assembly (13) toward the target goods location, and determining that the pick-up assembly (13) reaches the target goods location in a case that the moving distance is equal to the working distance; and
applying, by the pick-up assembly (13), a force to a front end surface of the target object, and carrying, by the pick-up assembly (13), the target object to move away from the target goods location.

44. The object transferring method according to claim 43, further comprising:
obtaining parameter information of the pick-up assembly (13) relative to the target object, and increasing a force applied by the pick-up assembly (13) to the target object in a case that the parameter information indicates that the force applied by the pick-up assembly (13) to the target object is less than a preset force; and
carrying, by the pick-up assembly (13), the target object to move into the base (11).

45. The object transferring method according to claim 44, wherein the parameter information comprises a distance between the pick-up assembly (13) and the target object, and in a case that the distance is greater than a third preset distance, it is determined that the force applied by the pick-up assembly (13) to the target object is less than the preset force; and/or
the parameter information comprises a vacuum degree of an inner cavity of a suction cup structure, and in a case that the vacuum degree is less than a preset vacuum degree, it is determined that the force applied by the pick-up assembly (13) to the target object is less than the preset force.

46. The object transferring method according to claim 44, wherein the force applied by the pick-up assembly (13) to the target object being less than the preset force comprises:
the force applied by the pick-up assembly (13) to the target object being zero, and the pick-up assembly (13) being separated from the target object; and
increasing the force applied by the pick-up assembly (13) to the target object comprises:
the pick-up assembly (13) moving toward the target object and applying the force to the front end surface of the target object, in a case that the pick-up assembly (13) is separated from the target object.

47. The object transferring method according to claim 46, wherein before the pick-up assembly (13) carries the target object to move into the base (11), the method comprises:
obtaining the parameter information of the pick-up assembly (13) relative to the target object; and
carrying, by the pick-up assembly (13), the target object to move into the base (11) in a case that the parameter information indicates that the force applied by the pick-up assembly (13) to the target object is greater than or equal to the preset force.

48. The object transferring method according to claim 47, wherein the parameter information comprises a distance between the pick-up assembly (13) and the target object, and in a case that the distance is less than or equal to a third preset distance, it is determined that the force applied by the pick-up assembly (13) to the target object is greater than or equal to the preset force; and/or
the parameter information comprises a vacuum degree of an inner cavity of a suction cup structure, and in a case that the vacuum degree is greater than or equal to a preset vacuum degree, it is determined that the force applied by the pick-up assembly (13) to the target object is greater than or equal to the preset force.

49. The object transferring method according to any one of claims 41 to 48, wherein the driving structure driving the pick-up assembly (13) to move toward the target goods location, and/or the pick-up assembly (13) moving toward the target object, comprises:
obtaining a distance between the pick-up assembly (13) and the target object, and in a case that the distance is less than or equal to a fourth preset distance, reducing a moving speed of the pick-up assembly (13) so that the pick-up assembly (13) approaches the target object at a first preset speed, wherein the first preset speed is less than a second preset speed, the second preset speed is a moving speed of the pick-up assembly (13) in a case that the distance between the pick-up assembly (13) and the target object is greater than the fourth preset distance, and the distance between the pick-up assembly (13) and the target object is detected by a third detection structure (150).

50. A transfer robot, comprising:
a chassis (3);
a mast (2) arranged on the chassis (3); and
a pick-and-place mechanism (1) according to any one of claims 1 to 40, arranged on the mast (2), and configured to be lifted and lowered along the mast (2).
